(19) 

Europäisches
Patentamt
European
Patent Office
Office européen
des brevets

(11) **EP 4 576 782 A1**

(12) **EUROPEAN PATENT APPLICATION**
published in accordance with Art. 153(4) EPC

(43) Date of publication:
**25.06.2025 Bulletin 2025/26**

(21) Application number: **23855175.8**

(22) Date of filing: **17.08.2023**

(51) International Patent Classification (IPC):
*H04N 19/593* (2014.01)　　*H04N 19/11* (2014.01)
*H04N 19/157* (2014.01)　　*H04N 19/176* (2014.01)
*H04N 19/70* (2014.01)　　*H04N 19/105* (2014.01)
*H04N 19/159* (2014.01)　　*H04N 19/132* (2014.01)
*H04N 19/119* (2014.01)　　*H04N 19/96* (2014.01)

(52) Cooperative Patent Classification (CPC):
**H04N 19/105; H04N 19/11; H04N 19/119;
H04N 19/132; H04N 19/157; H04N 19/159;
H04N 19/176; H04N 19/593; H04N 19/70;
H04N 19/96**

(86) International application number:
**PCT/KR2023/012220**

(87) International publication number:
**WO 2024/039209 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.08.2022　KR 20220102786
14.09.2022　KR 20220115738
26.09.2022　KR 20220121836
13.10.2022　KR 20220131623
25.10.2022　KR 20220138758
17.11.2022　KR 20220154921
09.01.2023　KR 20230003137**

(71) Applicant: **Wilus Institute of Standards and
Technology Inc.
Gyeonggi-do 13595 (KR)**

(72) Inventors:
• **KIM, Kyungyong
Seongnam-si Gyeonggi-do 13595 (KR)**
• **KIM, Dongcheol
Seongnam-si Gyeonggi-do 13595 (KR)**
• **SON, Juhyung
Seongnam-si Gyeonggi-do 13595 (KR)**
• **KWAK, Jinsam
Seongnam-si Gyeonggi-do 13595 (KR)**

(74) Representative: **Schmitt-Nilson Schraud Waibel
Wohlfrom
Patentanwälte Partnerschaft mbB
Pelkovenstraße 143
80992 München (DE)**

(54) **VIDEO SIGNAL PROCESSING METHOD AND APPARATUS THEREFOR**

(57) This processor of a video signal decoding apparatus may determine a first prediction mode of the current block, generate a prediction block of the current block on the basis of the first prediction mode, generate a residual block of the current block on the basis of a transformation matrix set determined on the basis of a second prediction mode, and reconstruct the current block on the basis of the prediction block and the residual block.

[Fig. 1]
100

## Description

### Technical Field

The present disclosure relates to a video signal processing method and device and, more specifically, to a video signal processing method and device by which a video signal is encoded or decoded.

### Background Art

Compression coding refers to a series of signal processing techniques for transmitting digitized information through a communication line or storing information in a form suitable for a storage medium. An object of compression encoding includes objects such as voice, video, and text, and in particular, a technique for performing compression encoding on an image is referred to as video compression. Compression coding for a video signal is performed by removing excess information in consideration of spatial correlation, temporal correlation, and stochastic correlation. However, with the recent development of various media and data transmission media, a more efficient video signal processing method and apparatus are required.

### Disclosure of Invention

### Technical Problem

The disclosure is to provide a video signal processing method and a device therefor, so as to increase the coding efficiency of a video signal.

### Solution to Problem

The present disclosure provides a video signal processing method and an apparatus therefor.

In the present disclosure, a video signal decoding apparatus may include a processor, wherein the processor is configured to: determine a first prediction mode of a current block; generate a prediction block of the current block on the basis of the first prediction mode; generate a residual block of the current block on the basis of a transform matrix set determined on the basis of a second prediction mode; and reconstruct the current block on the basis of the prediction block and the residual block.

In the present disclosure, a video signal encoding apparatus may include a processor, wherein the processor is configured to: determine a first prediction mode of a current block; generate a prediction block of the current block on the basis of the first prediction mode; generate a residual block of the current block on the basis of a transform matrix set determined on the basis of a second prediction mode; and reconstruct the current block on the basis of the prediction block and the residual block.

In the present disclosure, in a non-transitory computer-readable storage medium storing a bitstream, the bitstream is decoded by a decoding method, and the decoding method may include: determining a first prediction mode of a current block; generating a prediction block of the current block on the basis of the first prediction mode; generating a residual block of the current block on the basis of a transform matrix set determined on the basis of a second prediction mode; and reconstructing the current block on the basis of the prediction block and the residual block.

In addition, in the present disclosure, the residual block may be generated on the basis of at least one of a set of transform matrices of a Multiple Transform Set (MTS) and/or a set of transform matrices of Low Frequency Non-Separable Transform (LFNST).

In addition, in the present disclosure, the first prediction mode and the second prediction mode may be different from each other.

In addition, in the present disclosure, the first prediction mode may be one of a planar mode based on a horizontal direction and a planar mode based on a vertical direction.

In addition, in the present disclosure, the planar mode based on the horizontal direction may be a prediction mode based on a value of a block at position (-1, y) and a value of a block at position (W, -1), the planar mode based on the vertical direction may be a prediction mode based on a value of a block at position (x, -1) and a value of a block at position (-1, H), a position of a top left block of the current block may be (0, 0), and a position of the prediction block may be (x, y).

In addition, in the present disclosure, i) the first prediction mode may be the planar mode based on the horizontal direction, and the second prediction mode may be a vertical direction angular mode, or ii) the first prediction mode may be the planar mode based on the horizontal direction, and the second prediction mode may be a horizontal direction angular mode.

In addition, in the present disclosure, the first prediction mode may be a linear prediction mode.

In addition, in the present disclosure, the first prediction mode may be indicated by a syntax element included in a bitstream.

**Advantageous Effects of Invention**

The present disclosure provides a method for efficiently processing a video signal.

The effects which can be acquired from the present disclosure are not limited to the above-described effects, and other unmentioned effects can be clearly understood by those skilled in the art in the art to which the present disclosure belongs from the description below.

**Brief Description of Drawings**

FIG. 1 is a schematic block diagram of a video signal encoding apparatus according to an embodiment of the present invention.

FIG. 2 is a schematic block diagram of a video signal decoding apparatus according to an embodiment of the present invention.

FIG. 3 shows an embodiment in which a coding tree unit is divided into coding units in a picture.

FIG. 4 shows an embodiment of a method for signaling a division of a quad tree and a multi-type tree.

FIGS. 5 and 6 illustrate an intra-prediction method in more detail according to an embodiment of the present disclosure.

FIG. 7 illustrates the position of neighboring blocks used to construct a motion candidate list in inter prediction.

FIG. 8 illustrates a process of generating a prediction block by using a DIMD according to an embodiment of the present disclosure.

FIG. 9 illustrates the positions of neighboring pixels used to derive directional information according to an embodiment of the present disclosure.

FIG. 10 illustrates a method of mapping a directional mode according to an embodiment of the present disclosure.

FIG. 11 illustrates a histogram for deriving an intra prediction directional mode according to an embodiment of the present disclosure.

FIG. 12 illustrates a method of signaling a DIMD mode according to an embodiment of the present disclosure.

FIG. 13 illustrates a method of signaling a syntax element related to an intra prediction mode according to whether a DIMD mode is used according to an embodiment of the present disclosure.

FIG. 14 illustrates a method of generating a prediction sample for reconstructing a current block according to an embodiment of the present disclosure.

FIG. 15 illustrates a method of determining an intra prediction mode according to an embodiment of the present disclosure.

FIG. 16 illustrates a syntax structure including syntax elements related to DIMD according to an embodiment of the present disclosure.

FIG. 17 illustrates an intra prediction directional mode and weight information for a neighboring block of a current block according to an embodiment of the present disclosure.

FIG. 18 illustrates a method of determining DIMD combination information according to an embodiment of the present disclosure.

FIG. 19 illustrates a method of generating a prediction sample by using intra prediction directional mode information and a weight according to an embodiment of the present disclosure.

FIGS. 20 and 21 illustrate a pixel value of a neighboring block used when deriving an intra prediction directional mode according to an embodiment of the present disclosure.

FIG. 22 illustrates a method of configuring an MPM list including an intra prediction directional mode of a current block according to an embodiment of the present disclosure.

FIGS. 23 and 24 illustrate a template used to derive an intra prediction mode of a current block according to an embodiment of the present disclosure.

FIGS. 25 to 28 illustrate a method of generating a prediction sample (pixel) on the basis of multiple reference pixel lines according to an embodiment of the present disclosure.

FIG. 29 illustrates a method of predicting a sample by using multiple reference pixel lines according to an embodiment of the present disclosure.

FIG. 30 illustrates a method of determining a reference pixel line on the basis of a template according to an embodiment of the present disclosure.

FIG. 31 illustrates a method of configuring a template for testing a reference pixel lien adjacent to a current block according to an embodiment of the present disclosure.

FIG. 32 is a structure diagram illustrating a method of determining an optimal reference pixel line by using multiple reference pixel lines based on a template according to an embodiment of the present disclosure.

FIG. 33 illustrates a method of generating a prediction sample by using a planar mode according to an embodiment of the present disclosure.

FIG. 34 illustrates a method of deriving a Multiple Transform Set and an LFNST set for a vertical planar mode or a horizontal planar mode according to an embodiment of the present disclosure.

FIG. 35 illustrates a mapping table according to an embodiment of the present disclosure.

FIG. 36 illustrates a transform type set table according to an embodiment of the present disclosure.

FIG. 37 illustrates a transform type combination table according to an embodiment of the present disclosure.

FIG. 38 illustrates a threshold value table for an IDT transform type according to an embodiment of the present disclosure.

FIG. 39 illustrates a method of deriving a primary or secondary transform matrix by a video signal processing apparatus according to an embodiment of the present disclosure.

FIG. 40 illustrates a DC prediction method in units of vertical or horizontal lines according to an embodiment of the present disclosure.

FIG. 41 illustrates a planar prediction method in units of vertical or horizontal lines according to an embodiment of the present disclosure.

FIG. 42 illustrates a prediction method in units of subblocks by using a planar mode according to an embodiment of the present disclosure.

FIG. 43 illustrates a bidirectional prediction-based intra prediction method according to an embodiment of the present disclosure.

FIG. 44 illustrates a transform kernel type which can be used for video coding according to an embodiment of the present disclosure.

FIGS. 45 and 46 illustrate a part of sequence parameter set according to an embodiment of the present disclosure.

FIG. 47 illustrates a part of a general_constraint_info() syntax structure according to an embodiment of present disclosure.

FIG. 48 illustrates a method of configuring an MPM list by using a multiple-prediction mode according to an embodiment of the present disclosure.

FIG. 49 illustrates a position of a reference pixel used when a prediction block is generated using a multiple-prediction mode according to an embodiment of the present disclosure.

FIG. 50 illustrates a transform set table for LFNST and NSPT according to an embodiment of the present disclosure.

FIG. 51 illustrates a method of deriving a transform set for a linear mode in prediction using the linear mode according to an embodiment of the present disclosure.

**Best Mode for Carrying out the Invention**

Terms used in this specification may be currently widely used general terms in consideration of functions in the present invention but may vary according to the intents of those skilled in the art, customs, or the advent of new technology. Additionally, in certain cases, there may be terms the applicant selects arbitrarily and in this case, their meanings are described in a corresponding description part of the present invention. Accordingly, terms used in this specification should be interpreted based on the substantial meanings of the terms and contents over the whole specification.

In this specification, 'A and/or B' may be interpreted as meaning 'including at least one of A or B.'

In this specification, some terms may be interpreted as follows. Coding may be interpreted as encoding or decoding in some cases. In the present specification, an apparatus for generating a video signal bitstream by performing encoding (coding) of a video signal is referred to as an encoding apparatus or an encoder, and an apparatus that performs decoding (decoding) of a video signal bitstream to reconstruct a video signal is referred to as a decoding apparatus or decoder. In addition, in this specification, the video signal processing apparatus is used as a term of a concept including both an encoder and a decoder. Information is a term including all values, parameters, coefficients, elements, etc. In some cases, the meaning is interpreted differently, so the present invention is not limited thereto. 'Unit' is used as a meaning to refer to a basic unit of image processing or a specific position of a picture, and refers to an image region including both a luma component and a chroma component. Furthermore, a "block" refers to a region of an image that includes a particular component of a luma component and chroma components (i.e., Cb and Cr). However, depending on the embodiment, the terms "unit", "block", "partition", "signal", and "region" may be used interchangeably. Also, in the present specification, the term "current block" refers to a block that is currently scheduled to be encoded, and the term "reference block" refers to a block that has already been encoded or decoded and is used as a reference in a current block. In addition, the terms "luma", "luminance", "Y", and the like may be used interchangeably in this specification. Additionally, in the present specification, the terms "chroma", "chrominance", "Cb or Cr", and the like may be used interchangeably, and chroma components are classified into two components, Cb and Cr, and thus each chroma component may be distinguished and used. Additionally, in the present specification, the term "unit" may be used as a concept that includes a coding unit, a prediction unit, and a transform unit. A "picture" refers to a field or a frame, and depending on embodiments, the terms may be used interchangeably. Specifically, when a captured video is an interlaced video, a single frame may be separated into an odd (or cardinal or top) field and an even (or even-numbered or bottom) field, and each field may be configured in one picture unit and encoded or decoded. If the captured video is a progressive video, a single frame may be configured as a picture and encoded or decoded. In addition, in the present specification, the terms "error signal", "residual signal", "residue signal", "remaining signal", and "difference signal" may be used interchangeably. Also, in the present specification, the terms "intra-prediction mode", "intra-prediction directional mode", "intra-picture prediction mode", and "intra-picture prediction directional mode" may be used interchangeably. In addition, in the present specification, the terms "motion", "movement", and the like may be used interchangeably. Also, in the present specification, the terms "left", "left above", "above", "right above", "right", "right below", "below", and "left below" may be used interchangeably with "leftmost", "top left", "top", "top right", "right", "bottom right", "bottom", and "bottom left". Also, the terms "element" and "member" may be used interchangeably. Picture order count (POC) represents temporal position information of pictures (or frames), and may be the playback order in which displaying is performed on a screen, and each picture may have unique POC.

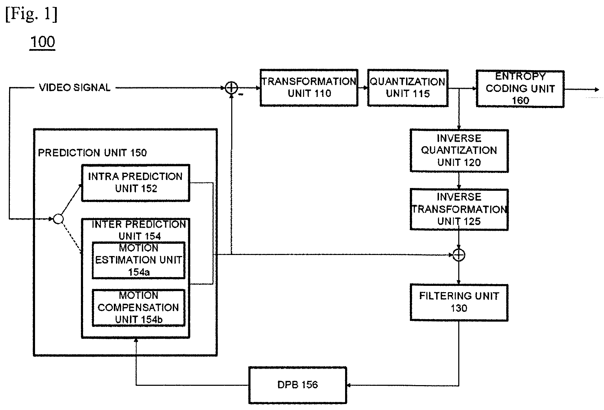

FIG. 1 is a schematic block diagram of a video signal encoding apparatus according to an embodiment of the present invention. Referring to FIG. 1, the encoding apparatus 100 of the present invention includes a transformation unit 110, a quantization unit 115, an inverse quantization unit 120, an inverse transformation unit 125, a filtering unit 130, a prediction unit 150, and an entropy coding unit 160.

The transformation unit 110 obtains a value of a transform coefficient by transforming a residual signal, which is a difference between the inputted video signal and the predicted signal generated by the prediction unit 150. For example, a Discrete Cosine Transform (DCT), a Discrete Sine Transform (DST), or a Wavelet Transform can be used. The DCT and DST perform transformation by splitting the input picture signal into blocks. In the transformation, coding efficiency may vary according to the distribution and characteristics of values in the transformation region. A transform kernel used for the transform of a residual block may has characteristics that allow a vertical transform and a horizontal transform to be separable. In this case, the transform of the residual block may be performed separately as a vertical transform and a horizontal transform. For example, an encoder may perform a vertical transform by applying a transform kernel in the vertical direction of a residual block. In addition, the encoder may perform a horizontal transform by applying the transform kernel in the horizontal direction of the residual block. In the present disclosure, the transform kernel may be used to refer to a set of parameters used for the transform of a residual signal, such as a transform matrix, a transform array, a transform function, or transform. For example, a transform kernel may be any one of multiple available kernels. Also, transform kernels based on different transform types may be used for the vertical transform and the horizontal transform, respectively.

The transform coefficients are distributed with higher coefficients toward the top left of a block and coefficients closer to "0" toward the bottom right of the block. As the size of a current block increases, there are likely to be many coefficients of "0" in the bottom-right region of the block. To reduce the transform complexity of a large-sized block, only a random top-left region may be kept and the remaining region may be reset to "0".

In addition, error signals may be present in only some regions of a coding block. In this case, the transform process may be performed on only some random regions. In an embodiment, in a block having a size of 2Nx2N, an error signal may be present only in the first 2NxN block, and the transform process may be performed on the first 2NxN block. However, the second 2NxN block may not be transformed and may not be encoded or decoded. Here, N may be any positive integer.

The encoder may perform an additional transform before transform coefficients are quantized. The above-described transform method may be referred to as a primary transform, and the additional transform may be referred to as a secondary transform. The secondary transform may be selective for each residual block. According to an embodiment, the encoder may improve coding efficiency by performing a secondary transform for regions where it is difficult to focus energy in a low-frequency region by using a primary transform alone. For example, a secondary transform may be additionally performed for blocks where residual values appear large in directions other than the horizontal or vertical direction of a residual block. Unlike a primary transform, a secondary transform may not be performed separately as a vertical transform and a horizontal transform. Such a secondary transform may be referred to as a low frequency non-separable transform (LFNST).

The quantization unit 115 quantizes the value of the transform coefficient value outputted from the transformation unit 110.

In order to improve coding efficiency, instead of coding the picture signal as it is, a method of predicting a picture using a region already coded through the prediction unit 150 and obtaining a reconstructed picture by adding a residual value between the original picture and the predicted picture to the predicted picture is used. In order to prevent mismatches in the encoder and decoder, information that can be used in the decoder should be used when performing prediction in the encoder. For this, the encoder performs a process of reconstructing the encoded current block again. The inverse quantization unit 120 inverse-quantizes the value of the transform coefficient, and the inverse transformation unit 125 reconstructs the residual value using the inverse quantized transform coefficient value. Meanwhile, the filtering unit 130 performs filtering operations to improve the quality of the reconstructed picture and to improve the coding efficiency. For example, a deblocking filter, a sample adaptive offset (SAO), and an adaptive loop filter may be included. The filtered picture is outputted or stored in a decoded picture buffer (DPB) 156 for use as a reference picture.

The deblocking filter is a filter for removing intra-block distortions generated at the boundaries between blocks in a reconstructed picture. Through the distribution of pixels included in several columns or rows based on random edges in a block, the encoder may determine whether to apply a deblocking filter to the edges. When applying a deblocking filter to the block, the encoder may apply a long filter, a strong filter, or a weak filter depending on the strength of deblocking filtering. Additionally, horizontal filtering and vertical filtering may be processed in parallel. The sample adaptive offset (SAO) may be used to correct offsets from an original video on a pixel-by-pixel basis with respect to a residual block to which a deblocking filter has been applied. To correct offset for a particular picture, the encoder may use a technique that divides pixels included in the picture into a predetermined number of regions, determines a region in which the offset correction is to be performed, and applies the offset to the region (Band Offset). Alternatively, the encoder may use a method for applying an offset in consideration of edge information of each pixel (Edge Offset). The adaptive loop filter (ALF) is a technique of dividing pixels included in a video into predetermined groups and then determining one filter to be applied to each group, thereby performing filtering differently for each group. Information about whether to apply ALF may be signaled on a per-coding unit basis, and the shape and filter coefficients of an ALF to be applied may vary for each block. In addition, an ALF filter having the same shape (a fixed shape) may be applied regardless of the characteristics of a target block to which the ALF filter is to be applied.

The prediction unit 150 includes an intra-prediction unit 152 and an inter-prediction unit 154. The intra-prediction unit 152 performs intra prediction within a current picture, and the inter-prediction unit 154 performs inter prediction to predict the current picture by using a reference picture stored in the decoded picture buffer 156. The intra-prediction unit 152 performs intra prediction from reconstructed regions in the current picture and transmits intra encoding information to the entropy coding unit 160. The intra encoding information may include at least one of an intra-prediction mode, a most probable mode (MPM) flag, an MPM index, and information regarding a reference sample. The inter-prediction unit 154 may again include a motion estimation unit 154a and a motion compensation unit 154b. The motion estimation unit 154a finds a part most similar to a current region with reference to a specific region of a reconstructed reference picture, and obtains a motion vector value which is the distance between the regions. Reference region-related motion information (reference direction indication information (L0 prediction, L1 prediction, or bidirectional prediction), a reference picture index, motion vector information, etc.) and the like, obtained by the motion estimation unit 154a, are transmitted to the entropy coding unit 160 so as to be included in a bitstream. The motion compensation unit 154B performs inter-motion compensation by using the motion information transmitted by the motion estimation unit 154a, to generate a prediction block for the current block. The inter-prediction unit 154 transmits the inter encoding information, which includes motion information related to the reference region, to the entropy coding unit 160.

According to an additional embodiment, the prediction unit 150 may include an intra block copy (IBC) prediction unit (not shown). The IBC prediction unit performs IBC prediction from reconstructed samples in a current picture and transmits IBC encoding information to the entropy coding unit 160. The IBC prediction unit references a specific region within a current picture to obtain a block vector value that indicates a reference region used to predict a current region. The IBC prediction unit may perform IBC prediction by using the obtained block vector value. The IBC prediction unit transmits the IBC encoding information to the entropy coding unit 160. The IBC encoding information may include at least one of reference region size information and block vector information (index information for predicting the block vector of a current block in a motion candidate list, and block vector difference information).

When the above picture prediction is performed, the transform unit 110 transforms a residual value between an original picture and a predictive picture to obtain a transform coefficient value. At this time, the transform may be performed on a specific block basis in the picture, and the size of the specific block may vary within a predetermined range. The quantization unit 115 quantizes the transform coefficient value generated by the transform unit 110 and transmits the quantized transform coefficient to the entropy coding unit 160.

The quantized transform coefficients in the form of a two-dimensional array may be rearranged into a one-dimensional array for entropy coding. In relation to methods for scanning a quantized transform coefficient, the size of a transform block and an intra-picture prediction mode may determine which scanning method is used. In an embodiment, diagonal, vertical, and horizontal scans may be applied. This scan information may be signaled on a block-by-block basis, and may be derived based on predetermined rules.

The entropy coding unit 160 generates a video signal bitstream by entropy coding information indicating a quantized transform coefficient, intra encoding information, and inter encoding information. The entropy coding unit 160 may use variable length coding (VLC) and arithmetic coding. The variable length coding (VLC) is a technique of transforming input symbols into consecutive codewords, wherein the length of the codewords is variable. For example, frequently occurring symbols are represented by shorter codewords, while less frequently occurring symbols are represented by longer codewords. As the variable length coding, context-based adaptive variable length coding (CAVLC) may be used. The arithmetic coding uses the probability distribution of each data symbol to transform consecutive data symbols into a single decimal number. The arithmetic coding allows acquisition of the optimal decimal bits needed to represent each symbol. As the arithmetic coding, context-based adaptive binary arithmetic coding (CABAC) may be used.

CABAC is a binary arithmetic coding technique using multiple context models generated based on probabilities obtained from experiments. First, when symbols are not in binary form, the encoder binarizes each symbol by using exp-Golomb, etc. The binarized value, 0 or 1, may be described as a bin. A CABAC initialization process is divided into context initialization and arithmetic coding initialization. The context initialization is the process of initializing the probability of occurrence of each symbol, and is determined by the type of symbol, a quantization parameter (QP), and slice type (I, P, or B). A context model having the initialization information may use a probability-based value obtained through an experiment. The context model provides information about the probability of occurrence of Least Probable Symbol (LPS) or Most Probable Symbol (MPS) for a symbol to be currently coded and about which of bin values 0 and 1 corresponds to the MPS (valMPS). One of multiple context models is selected via a context index (ctxIdx), and the context index may be derived from information in a current block to be encoded or from information about neighboring blocks. Initialization for binary arithmetic coding is performed based on a probability model selected from the context models. In the binary arithmetic coding, encoding is performed through the process in which division into probability intervals is made through the probability of occurrence of 0 and 1, and then a probability interval corresponding to a bin to be processed becomes the entire probability interval for the next bin to be processed. Information about a position within the last bin in which the last bin has been processed is output. However, the probability interval cannot be divided indefinitely, and thus, when the probability interval is reduced to a certain size, a renormalization process is performed to widen the probability interval and the corresponding position information is output. In addition, after each bin is processed, a probability update process may be performed, wherein information about a processed bin is used to set a new probability for the next to be processed.

The generated bitstream is encapsulated in network abstraction layer (NAL) unit as basic units. The NAL units are classified into video a coding layer (VCL) NAL unit, which includes video data, and a non-VCL NAL unit, which includes parameter information for decoding video data. There are various types of VCL or non-VCL NAL units. A NAL unit includes NAL header information and raw byte sequence payload (RBSP) which is data. The NAL header information includes summary information about the RBSP. The RBSP of a VCL NAL unit includes an integer number of encoded coding tree units. In order to decode a bitstream in a video decoder, it is necessary to separate the bitstream into NAL units and then decode each of the separate NAL units. Information required for decoding a video signal bitstream may be included in a picture parameter set (PPS), a sequence parameter set (SPS), a video parameter set (VPS), etc., and transmitted.

The block diagram of FIG. 1 illustrates the encoding device 100 according to an embodiment of the present disclosure, wherein the separately shown blocks logically distinguish the elements of the encoding device 100. Accordingly, the above-described elements of the encoding device 100 may be mounted as a single chip or multiple chips, depending on the design of the device. According to an embodiment, the above-described operation of each element of the encoding device 100 may be performed by a processor (not shown).

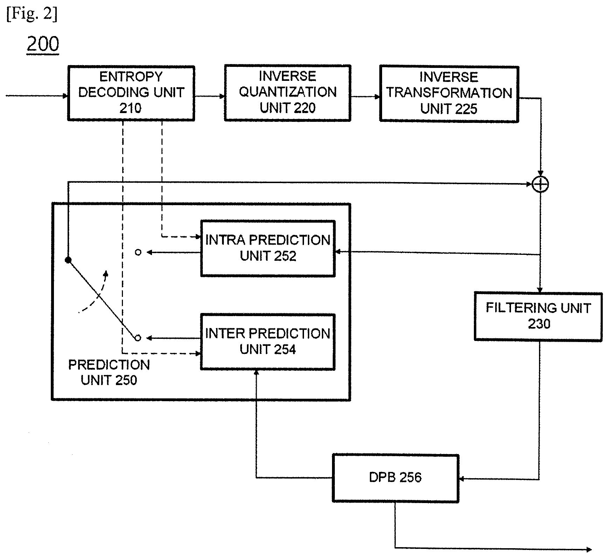

FIG. 2 is a schematic block diagram of a video signal decoding apparatus 200 according to an embodiment of the present invention. Referring to FIG. 2, the decoding apparatus 200 of the present invention includes an entropy decoding unit 210, an inverse quantization unit 220, an inverse transformation unit 225, a filtering unit 230, and a prediction unit 250.

The entropy decoding unit 210 entropy-decodes a video signal bitstream to extract transform coefficient information, intra encoding information, inter encoding information, and the like for each region. For example, the entropy decoding unit 210 may obtain a binarization code for transform coefficient information of a specific region from the video signal bitstream. The entropy decoding unit 210 obtains a quantized transform coefficient by inverse-binarizing a binary code. The inverse quantization unit 220 inverse-quantizes the quantized transform coefficient, and the inverse transformation unit 225 reconstructs a residual value by using the inverse-quantized transform coefficient. The video signal processing device 200 reconstructs an original pixel value by summing the residual value obtained by the inverse transformation unit 225 with a prediction value obtained by the prediction unit 250.

Meanwhile, the filtering unit 230 performs filtering on a picture to improve image quality. This may include a deblocking filter for reducing block distortion and/or an adaptive loop filter for removing distortion of the entire picture. The filtered picture is outputted or stored in the DPB 256 for use as a reference picture for the next picture.

The prediction unit 250 includes an intra prediction unit 252 and an inter prediction unit 254. The prediction unit 250 generates a prediction picture by using the encoding type decoded through the entropy decoding unit 210 described above, transform coefficients for each region, and intra/inter encoding information. In order to reconstruct a current block in which decoding is performed, a decoded region of the current picture or other pictures including the current block may be used. In a reconstruction, only a current picture, that is, a picture (or, tile/slice) that performs intra prediction or intra BC prediction, is called an intra picture or an I picture (or, tile/slice), and a picture (or, tile/slice) that can perform all of intra prediction, inter prediction, and intra BC prediction is called an inter picture (or, tile/slice). In order to predict sample values of each block among inter pictures (or, tiles/slices), a picture (or, tile/slice) using up to one motion vector and a reference picture index is called a predictive picture or P picture (or, tile/slice), and a picture (or tile/slice) using up to two motion vectors and a reference picture index is called a bi-predictive picture or a B picture (or tile / slice). In other words, the P picture (or, tile/slice) uses up to one motion information set to predict each block, and the B picture (or, tile/slice) uses up to two motion information sets to predict each block. Here, the motion information set includes one or more motion vectors and one reference picture index.

The intra prediction unit 252 generates a prediction block using the intra encoding information and reconstructed samples in the current picture. As described above, the intra encoding information may include at least one of an intra prediction mode, a Most Probable Mode (MPM) flag, and an MPM index. The intra prediction unit 252 predicts the sample values of the current block by using the reconstructed samples located on the left and/or upper side of the current block as reference samples. In this disclosure, reconstructed samples, reference samples, and samples of the current block may represent pixels. Also, sample values may represent pixel values.

According to an embodiment, the reference samples may be samples included in a neighboring block of the current block. For example, the reference samples may be samples adjacent to a left boundary of the current block and/or samples may be samples adjacent to an upper boundary. Also, the reference samples may be samples located on a line within a predetermined distance from the left boundary of the current block and/or samples located on a line within a predetermined distance from the upper boundary of the current block among the samples of neighboring blocks of the current block. In this case, the neighboring block of the current block may include the left (L) block, the upper (A) block, the below left (BL) block, the above right (AR) block, or the above left (AL) block.

The inter prediction unit 254 generates a prediction block using reference pictures and inter encoding information stored in the DPB 256. The inter coding information may include motion information set (reference picture index, motion vector information, etc.) of the current block for the reference block. Inter prediction may include L0 prediction, L1 prediction, and bi-prediction. L0 prediction means prediction using one reference picture included in the L0 picture list, and L1 prediction means prediction using one reference picture included in the L1 picture list. For this, one set of motion information (e.g., motion vector and reference picture index) may be required. In the bi-prediction method, up to two reference regions may be used, and the two reference regions may exist in the same reference picture or may exist in different pictures. That is, in the bi-prediction method, up to two sets of motion information (e.g., a motion vector and a reference picture index) may be used and two motion vectors may correspond to the same reference picture index or different reference picture indexes. In this case, the reference pictures are pictures located temporally before or after the current picture, and may be pictures for which reconstruction has already been completed. According to an embodiment, two reference regions used in the bi-prediction scheme may be regions selected from picture list L0 and picture list L1, respectively.

The inter prediction unit 254 may obtain a reference block of the current block using a motion vector and a reference picture index. The reference block is in a reference picture corresponding to a reference picture index. Also, a sample value of a block specified by a motion vector or an interpolated value thereof can be used as a predictor of the current block. For motion prediction with sub-pel unit pixel accuracy, for example, an 8-tap interpolation filter for a luma signal and a 4-tap interpolation filter for a chroma signal can be used. However, the interpolation filter for motion prediction in sub-pel units is not limited thereto. In this way, the inter prediction unit 254 performs motion compensation to predict the texture of the current unit from motion pictures reconstructed previously. In this case, the inter prediction unit may use a motion information set.

According to an additional embodiment, the prediction unit 250 may include an IBC prediction unit (not shown). The IBC prediction unit may reconstruct the current region by referring to a specific region including reconstructed samples in the current picture. The IBC prediction unit obtains IBC encoding information for the current region from the entropy decoding unit 210. The IBC prediction unit obtains a block vector value of the current region indicating the specific region in the current picture. The IBC prediction unit may perform IBC prediction by using the obtained block vector value. The IBC encoding information may include block vector information.

The reconstructed video picture is generated by adding the predict value outputted from the intra prediction unit 252 or the inter prediction unit 254 and the residual value outputted from the inverse transformation unit 225. That is, the video signal decoding apparatus 200 reconstructs the current block using the prediction block generated by the prediction unit 250 and the residual obtained from the inverse transformation unit 225.

Meanwhile, the block diagram of FIG. 2 shows a decoding apparatus 200 according to an embodiment of the present invention, and separately displayed blocks logically distinguish and show the elements of the decoding apparatus 200. Accordingly, the elements of the above-described decoding apparatus 200 may be mounted as one chip or as a plurality of chips depending on the design of the device. According to an embodiment, the operation of each element of the above-described decoding apparatus 200 may be performed by a processor (not shown).

The technology proposed in the present specification may be applied to a method and a device for both an encoder and a decoder, and the wording signaling and parsing may be for convenience of description. In general, signaling may be described as encoding each type of syntax from the perspective of the encoder, and parsing may be described as interpreting each type of syntax from the perspective of the decoder. In other words, each type of syntax may be included in a bitstream and signaled by the encoder, and the decoder may parse the syntax and use the syntax in a reconstruction process. In this case, the sequence of bits for each type of syntax arranged according to a prescribed hierarchical configuration may be called a bitstream.

One picture may be partitioned into sub-pictures, slices, tiles, etc. and encoded. A sub-picture may include one or more slices or tiles. When one picture is partitioned into multiple slices or tiles and encoded, all the slices or tiles within the picture must be decoded before the picture can be output a screen. On the other hand, when one picture is encoded into multiple subpictures, only a random subpicture may be decoded and output on the screen. A slice may include multiple tiles or subpictures. Alternatively, a tile may include multiple subpictures or slices. Subpictures, slices, and tiles may be encoded or decoded independently of each other, and thus are advantageous for parallel processing and processing speed improvement. However, there is the disadvantage in that a bit rate increases because encoded information of other adjacent subpictures, slices, and tiles is not available. A subpicture, a slice, and a tile may be partitioned into multiple coding tree units (CTUs) and encoded.

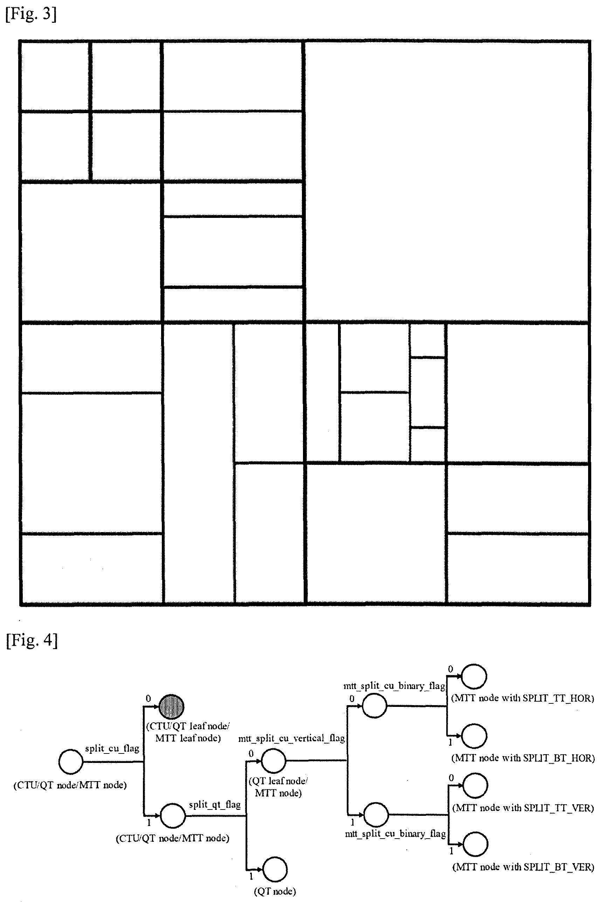

FIG. 3 illustrates an embodiment in which a coding tree unit (CTU) is divided into coding units (CUs) within a picture. In the process of coding a video signal, a picture may be divided into a sequence of coding tree units (CTUs). A coding tree unit may include a luma Coding Tree Block (CTB), two chroma coding tree blocks, and encoded syntax information thereof. One coding tree unit may include one coding unit, or one coding tree unit may be divided into multiple coding units. One coding unit may include a luma coding block (CB), two chroma coding blocks, and encoded syntax information thereof. One coding block may be partitioned into multiple sub-coding blocks. One coding unit may include one transform unit (TU), or one coding unit may be partitioned into multiple transform units. A transform unit may include a luma transform block (TB), two chroma transform blocks, and encoded syntax information thereof. A coding tree unit may be partitioned into multiple coding units. A coding tree unit may become a leaf node without being partitioned. In this case, the coding tree unit itself may be a coding unit.

The coding unit refers to a basic unit for processing a picture in the process of processing the video signal described above, that is, intra/inter prediction, transformation, quantization, and/or entropy coding. The size and shape of the coding unit in one picture may not be constant. The coding unit may have a square or rectangular shape. The rectangular coding unit (or rectangular block) includes a vertical coding unit (or vertical block) and a horizontal coding unit (or horizontal block). In the present specification, the vertical block is a block whose height is greater than the width, and the horizontal block is a block whose width is greater than the height. Further, in this specification, a non-square block may refer to a rectangular block, but the present invention is not limited thereto.

Referring to FIG. 3, the coding tree unit is first split into a quad tree (QT) structure. That is, one node having a 2NX2N size in a quad tree structure may be split into four nodes having an NXN size. In the present specification, the quad tree may also be referred to as a quaternary tree. Quad tree split can be performed recursively, and not all nodes need to be split with the same depth.

Meanwhile, the leaf node of the above-described quad tree may be further split into a multi-type tree (MTT) structure. According to an embodiment of the present invention, in a multi-type tree structure, one node may be split into a binary or ternary tree structure of horizontal or vertical division. That is, in the multi-type tree structure, there are four split structures such as vertical binary split, horizontal binary split, vertical ternary split, and horizontal ternary split. According to an embodiment of the present invention, in each of the tree structures, the width and height of the nodes may all have powers of 2. For example, in a binary tree (BT) structure, a node of a 2NX2N size may be split into two NX2N nodes by vertical binary split, and split into two 2NXN nodes by horizontal binary split. In addition, in a ternary tree (TT) structure, a node of a 2NX2N size is split into (N/2)X2N, NX2N, and (N/2)X2N nodes by vertical ternary split, and split into 2NX(N/2), 2NXN, and 2NX(N/2) nodes by horizontal ternary split. This multi-type tree split can be performed recursively.

A leaf node of the multi-type tree can be a coding unit. When the coding unit is not greater than the maximum transform length, the coding unit can be used as a unit of prediction and/or transform without further splitting. As an embodiment, when the width or height of the current coding unit is greater than the maximum transform length, the current coding unit can be split into a plurality of transform units without explicit signaling regarding splitting. On the other hand, at least one of the following parameters in the above-described quad tree and multi-type tree may be predefined or transmitted through a higher level set of RBSPs such as PPS, SPS, VPS, and the like. 1) CTU size: root node size of quad tree, 2) minimum QT size MinQtSize: minimum allowed QT leaf node size, 3) maximum BT size MaxBtSize: maximum allowed BT root node size, 4) Maximum TT size MaxTtSize: maximum allowed TT root node size, 5) Maximum MTT depth MaxMttDepth: maximum allowed depth of MTT split from QT's leaf node, 6) Minimum BT size MinBtSize: minimum allowed BT leaf node size, 7) Minimum TT size MinTtSize: minimum allowed TT leaf node size.

FIG. 4 illustrates an embodiment of a method of signaling splitting of the quad tree and multi-type tree. Preset flags can be used to signal the splitting of the quad tree and multi-type tree described above. Referring to FIG. 4, at least one of a flag 'split_cu_flag' indicating whether or not to split a node, a flag 'split_qt_flag' indicating whether or not to split a quad tree node, a flag 'mtt_split_cu_vertical_flag' indicating a splitting direction of the multi-type tree node, or a flag 'mtt_split_cu_binary_flag' indicating a splitting shape of the multi-type tree node can be used.

According to an embodiment of the present invention, 'split_cu_flag', which is a flag indicating whether or not to split the current node, can be signaled first. When the value of 'split_cu_flag' is 0, it indicates that the current node is not split, and the current node becomes a coding unit. When the current node is the coating tree unit, the coding tree unit includes one unsplit coding unit. When the current node is a quad tree node 'QT node', the current node is a leaf node 'QT leaf node' of the quad tree and becomes the coding unit. When the current node is a multi-type tree node 'MTT node', the current node is a leaf node 'MTT leaf node' of the multi-type tree and becomes the coding unit.

When the value of 'split_cu_flag' is 1, the current node can be split into nodes of the quad tree or multi-type tree according to the value of 'split_qt_flag'. A coding tree unit is a root node of the quad tree, and can be split into a quad tree structure first. In the quad tree structure, 'split_qt_flag' is signaled for each node 'QT node'. When the value of 'split_qt_flag' is 1, the corresponding node is split into 4 square nodes, and when the value of 'qt_split_flag' is 0, the corresponding node becomes the 'QT leaf node' of the quad tree, and the corresponding node is split into multi-type nodes. According to an embodiment of the present invention, quad tree splitting can be limited according to the type of the current node. Quad tree splitting can be allowed when the current node is the coding tree unit (root node of the quad tree) or the quad tree node, and quad tree splitting may not be allowed when the current node is the multi-type tree node. Each quad tree leaf node 'QT leaf node' can be further split into a multi-type tree structure. As described above, when 'split_qt_flag' is 0, the current node can be split into multi-type nodes. In order to indicate the splitting direction and the splitting shape, 'mtt_split_cu_vertical_flag' and 'mtt_split_cu_binary_flag' can be signaled. When the value of 'mtt_split_cu_vertical_flag' is 1, vertical splitting of the node 'MTT node' is indicated, and when the value of 'mtt_split_cu_vertical_flag' is 0, horizontal splitting of the node 'MTT node' is indicated. In addition, when the value of 'mtt_split_cu_binary_flag' is 1, the node 'MTT node' is split into two rectangular nodes, and when the value of 'mtt_split_cu_binary_flag' is 0, the node 'MTT node' is split into three rectangular nodes.

In the tree partitioning structure, a luma block and a chroma block may be partitioned in the same form. That is, a chroma block may be partitioned by referring to the partitioning form of a luma block. When a current chroma block is less than a predetermined size, a chroma block may not be partitioned even if a luma block is partitioned.

In the tree partitioning structure, a luma block and a chroma block may have different forms. In this case, luma block partitioning information and chroma block partitioning information may be signaled separately. Furthermore, in addition to the partitioning information, luma block encoding information and chroma block encoding information may also be different from each other. In one example, the luma block and the chroma block may be different in at least one among intra encoding mode, encoding information for motion information, etc.

A node to be split into the smallest units may be treated as one coding block. When a current block is a coding block, the coding block may be partitioned into several sub-blocks (sub-coding blocks), and the sub-blocks may have the same prediction information or different pieces of prediction information. In one example, when a coding unit is in an intra mode, intra-prediction modes of sub-blocks may be the same or different from each other. Also, when the coding unit is in an inter mode, sub-blocks may have the same motion information or different pieces of the motion information. Furthermore, the sub-blocks may be encoded or decoded independently of each other. Each sub-block may be distinguished by a sub-block index (sbIdx). Also, when a coding unit is partitioned into sub-blocks, the coding unit may be partitioned horizontally, vertically, or diagonally. In an intra mode, a mode in which a current coding unit is partitioned into two or four sub-blocks horizontally or vertically is called intra sub-partitions (ISP). In an inter mode, a mode in which a current coding block is partitioned diagonally is called a geometric partitioning mode (GPM). In the GPM mode, the position and direction of a diagonal line are derived using a predetermined angle table, and index information of the angle table is signaled.

Picture prediction (motion compensation) for coding is performed on a coding unit that is no longer divided (i.e., a leaf node of a coding unit tree). Hereinafter, the basic unit for performing the prediction will be referred to as a "prediction unit" or a "prediction block".

Hereinafter, the term "unit" used herein may replace the prediction unit, which is a basic unit for performing prediction. However, the present disclosure is not limited thereto, and "unit" may be understood as a concept broadly encompassing the coding unit.

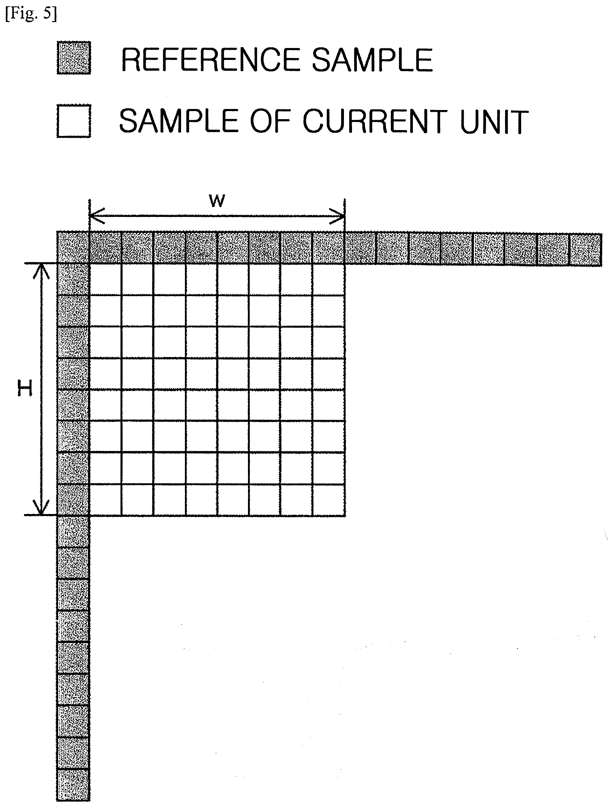

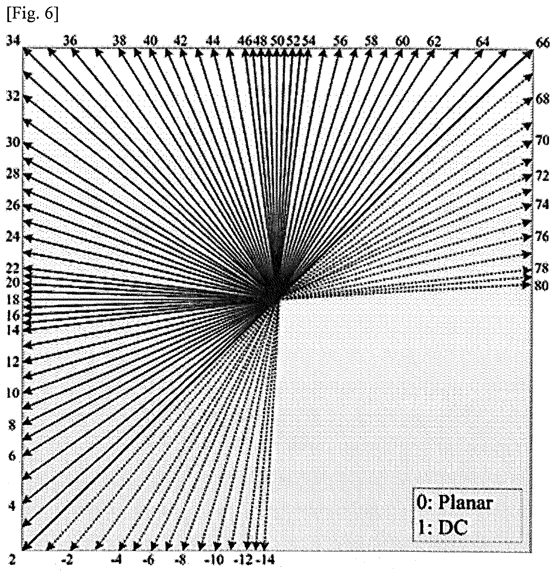

FIGS. 5 and 6 more specifically illustrate an intra prediction method according to an embodiment of the present invention. As described above, the intra prediction unit predicts the sample values of the current block by using the reconstructed samples located on the left and/or upper side of the current block as reference samples.

First, FIG. 5 shows an embodiment of reference samples used for prediction of a current block in an intra prediction mode. According to an embodiment, the reference samples may be samples adjacent to the left boundary of the current block and/or samples adjacent to the upper boundary. As shown in FIG. 5, when the size of the current block is WXH and samples of a single reference line adjacent to the current block are used for intra prediction, reference samples may be configured using a maximum of 2W+2H+1 neighboring samples located on the left and/or upper side of the current block.

Pixels from multiple reference lines may be used for intra prediction of the current block. The multiple reference lines may include n lines located within a predetermined range from the current block. According to an embodiment, when pixels from multiple reference lines are used for intra prediction, separate index information that indicates lines to be set as reference pixels may be signaled, and may be named a reference line index.

When at least some samples to be used as reference samples have not yet been reconstructed, the intra prediction unit may obtain reference samples by performing a reference sample padding procedure. The intra prediction unit may perform a reference sample filtering procedure to reduce an error in intra prediction. That is, filtering may be performed on neighboring samples and/or reference samples obtained by the reference sample padding procedure, so as to obtain the filtered reference samples. The intra prediction unit predicts samples of the current block by using the reference samples obtained as in the above. The intra prediction unit predicts samples of the current block by using unfiltered reference samples or filtered reference samples. In the present disclosure, neighboring samples may include samples on at least one reference line. For example, the neighboring samples may include adjacent samples on a line adjacent to the boundary of the current block.

Next, FIG. 6 shows an embodiment of prediction modes used for intra prediction. For intra prediction, intra prediction mode information indicating an intra prediction direction may be signaled. The intra prediction mode information indicates one of a plurality of intra prediction modes included in the intra prediction mode set. When the current block is an intra prediction block, the decoder receives intra prediction mode information of the current block from the bitstream. The intra prediction unit of the decoder performs intra prediction on the current block based on the extracted intra prediction mode information.

According to an embodiment of the present invention, the intra prediction mode set may include all intra prediction modes used in intra prediction (e.g., a total of 67 intra prediction modes). More specifically, the intra prediction mode set may include a planar mode, a DC mode, and a plurality (e.g., 65) of angle modes (i.e., directional modes). Each intra prediction mode may be indicated through a preset index (i.e., intra prediction mode index). For example, as shown in FIG. 6, the intra prediction mode index 0 indicates a planar mode, and the intra prediction mode index 1 indicates a DC mode. Also, the intra prediction mode indexes 2 to 66 may indicate different angle modes, respectively. The angle modes respectively indicate angles which are different from each other within a preset angle range. For example, the angle mode may indicate an angle within an angle range (i.e., a first angular range) between 45 degrees and -135 degrees clockwise. The angle mode may be defined based on the 12 o'clock direction. In this case, the intra prediction mode index 2 indicates a horizontal diagonal (HDIA) mode, the intra prediction mode index 18 indicates a horizontal (Horizontal, HOR) mode, the intra prediction mode index 34 indicates a diagonal (DIA) mode, the intra prediction mode index 50 indicates a vertical (VER) mode, and the intra prediction mode index 66 indicates a vertical diagonal (VDIA) mode.

Meanwhile, the preset angle range can be set differently depending on a shape of the current block. For example, if the current block is a rectangular block, a wide angle mode indicating an angle exceeding 45 degrees or less than -135 degrees in a clockwise direction can be additionally used. When the current block is a horizontal block, an angle mode can indicate an angle within an angle range (i.e., a second angle range) between (45 + offset1) degrees and (-135 + offset1) degrees in a clockwise direction. In this case, angle modes 67 to 76 outside the first angle range can be additionally used. In addition, if the current block is a vertical block, the angle mode can indicate an angle within an angle range (i.e., a third angle range) between (45 - offset2) degrees and (-135 - offset2) degrees in a clockwise direction. In this case, angle modes -10 to -1 outside the first angle range can be additionally used. According to an embodiment of the present disclosure, values of offset1 and offset2 can be determined differently depending on a ratio between the width and height of the rectangular block. In addition, offset1 and offset2 can be positive numbers.

According to a further embodiment of the present invention, a plurality of angle modes configuring the intra prediction mode set can include a basic angle mode and an extended angle mode. In this case, the extended angle mode can be determined based on the basic angle mode.

According to an embodiment, the basic angle mode is a mode corresponding to an angle used in intra prediction of the existing high efficiency video coding (HEVC) standard, and the extended angle mode can be a mode corresponding to an angle newly added in intra prediction of the next generation video codec standard. More specifically, the basic angle mode can be an angle mode corresponding to any one of the intra prediction modes {2, 4, 6, ..., 66}, and the extended angle mode can be an angle mode corresponding to any one of the intra prediction modes {3, 5, 7, ..., 65}. That is, the extended angle mode can be an angle mode between basic angle modes within the first angle range. Accordingly, the angle indicated by the extended angle mode can be determined on the basis of the angle indicated by the basic angle mode.

According to another embodiment, the basic angle mode can be a mode corresponding to an angle within a preset first angle range, and the extended angle mode can be a wide angle mode outside the first angle range. That is, the basic angle mode can be an angle mode corresponding to any one of the intra prediction modes {2, 3, 4, ..., 66}, and the extended angle mode can be an angle mode corresponding to any one of the intra prediction modes {-14, -13, -12, ..., -1} and {67, 68, ..., 80}. The angle indicated by the extended angle mode can be determined as an angle on a side opposite to the angle indicated by the corresponding basic angle mode. Accordingly, the angle indicated by the extended angle mode can be determined on the basis of the angle indicated by the basic angle mode. Meanwhile, the number of extended angle modes is not limited thereto, and additional extended angles can be defined according to the size and/or shape of the current block. Meanwhile, the total number of intra prediction modes included in the intra prediction mode set can vary depending on the configuration of the basic angle mode and extended angle mode described above

In the embodiments described above, the spacing between the extended angle modes can be set on the basis of the spacing between the corresponding basic angle modes. For example, the spacing between the extended angle modes {3, 5, 7, ..., 65} can be determined on the basis of the spacing between the corresponding basic angle modes {2, 4, 6,... , 66}. In addition, the spacing between the extended angle modes {-14, -13, ... , -1} can be determined on the basis of the spacing between corresponding basic angle modes {53, 54,... , 66} on the opposite side, and the spacing between the extended angle modes {67, 68, ..., 80} can be determined on the basis of the spacing between the corresponding basic angle modes {2, 3, 4, ... , 15} on the opposite side. The angular spacing between the extended angle modes can be set to be the same as the angular spacing between the corresponding basic angle modes. In addition, the number of extended angle modes in the intra prediction mode set can be set to be less than or equal to the number of basic angle modes.

According to an embodiment of the present invention, the extended angle mode can be signaled based on the basic angle mode. For example, the wide angle mode (i.e., the extended angle mode) can replace at least one angle mode (i.e., the basic angle mode) within the first angle range. The basic angle mode to be replaced can be a corresponding angle mode on a side opposite to the wide angle mode. That is, the basic angle mode to be replaced is an angle mode that corresponds to an angle in an opposite direction to the angle indicated by the wide angle mode or that corresponds to an angle that differs by a preset offset index from the angle in the opposite direction. According to an embodiment of the present invention, the preset offset index is 1. The intra prediction mode index corresponding to the basic angle mode to be replaced can be remapped to the wide angle mode to signal the corresponding wide angle mode. For example, the wide angle modes {-14, -13, ..., - 1} can be signaled by the intra prediction mode indices {52, 53, ..., 66}, respectively, and the wide angle modes {67, 68, ..., 80} can be signaled by the intra prediction mode indices {2, 3, ..., 15}, respectively. In this way, the intra prediction mode index for the basic angle mode signals the extended angle mode, and thus the same set of intra prediction mode indices can be used for signaling the intra prediction mode even if the configuration of the angle modes used for intra prediction of each block are different from each other. Accordingly, signaling overhead due to a change in the intra prediction mode configuration can be minimized.

Meanwhile, whether or not to use the extended angle mode can be determined on the basis of at least one of the shape and size of the current block. According to an embodiment, when the size of the current block is greater than a preset size, the extended angle mode can be used for intra prediction of the current block, otherwise, only the basic angle mode can be used for intra prediction of the current block. According to another embodiment, when the current block is a block other than a square, the extended angle mode can be used for intra prediction of the current block, and when the current block is a square block, only the basic angle mode can be used for intra prediction of the current block.

The intra-prediction unit determines reference samples and/or interpolated reference samples to be used for intra prediction of the current block, based on the intra-prediction mode information of the current block. When the intra-prediction mode index indicates a specific angular mode, a reference sample corresponding to the specific angle or an interpolated reference sample from current samples in the current block is used for prediction of a current pixel. Thus, different sets of reference samples and/or interpolated reference samples may be used for intra prediction depending on the intra-prediction mode. After the intra prediction of the current block is performed using the reference samples and the intra-prediction mode information, the decoder reconstructs sample values of the current block by adding the residual signal of the current block, which has been obtained from the inverse transform unit, to the intra-prediction value of the current block.

Motion information used for inter prediction may include reference direction indication information (inter_pred_idc), reference picture index (ref_idx_10, ref_idx_11), and motion vector (mvL0, mvL1). Reference picture list utilization information (predFlagL0, predFlagL1) may be set based on the reference direction indication information. In one example, for a unidirectional prediction using an L0 reference picture, predFlagL0=1 and predFlagL1=0 may be set. For a unidirectional prediction using an L1 reference picture, predFlagL0=0 and predFlagL1=1 may be set. For bidirectional prediction using both the L0 and L1 reference pictures, predFlagLO=1 and predFlagL1=1 may be set.

When the current block is a coding unit, the coding unit may be partitioned into multiple sub-blocks, and the sub-blocks have the same prediction information or different pieces of prediction information. In one example, when the coding unit is in an intra mode, intra-prediction modes of the sub-blocks may be the same or different from each other. Also, when the coding unit is in an inter mode, the sub-blocks may have the same motion information or different pieces of motion information. Furthermore, the sub-blocks may be encoded or decoded independently of each other. Each sub-block may be distinguished by a sub-block index (sbIdx).

The motion vector of the current block is likely to be similar to the motion vector of a neighboring block. Therefore, the motion vector of the neighboring block may be used as a motion vector predictor (MVP), and the motion vector of the current block may be derived using the motion vector of the neighboring block. Furthermore, to improve the accuracy of the motion vector, the motion vector difference (MVD) between the optimal motion vector of the current block and the motion vector predictor found by the encoder from an original video may be signaled.

The motion vector may have various resolutions, and the resolution of the motion vector may vary on a block-by-block basis. The motion vector resolution may be expressed in integer units, half-pixel units, 1/4 pixel units, 1/16 pixel units, 4-integer pixel units, etc. A video, such as screen content, has a simple graphical form such as text, and does not require an interpolation filter to be applied. Thus, integer units and 4-integer pixel units may be selectively applied on a block-by-block basis. A block encoded using an affine mode, which represent rotation and scale, exhibit significant changes in form, so integer units, 1/4 pixel units, and 1/16 pixel units may be applied selectively on a block-by-block basis. Information about whether to selectively apply motion vector resolution on a block-by-block basis is signaled by amvr_flag. If applied, information about a motion vector resolution to be applied to the current block is signaled by amvr_precision_idx.

In the case of blocks to which bidirectional prediction is applied, weights applied between two prediction blocks may be equal or different, and information about the weights is signaled via BCW_IDX.

In order to improve the accuracy of the motion vector predictor, a merge or AMVP(advanced motion vector prediction) method may be selectively used on a block-by-block basis. The merge method is a method that configures motion information of a current block to be the same as motion information of a neighboring block adjacent to the current block, and is advantageous in that the motion information is spatially propagated without change in a motion region with homogeneity, and thus the encoding efficiency of the motion information is increased. On the other hand, the AMVP method is a method for predicting motion information in L0 and L1 prediction directions respectively and signaling the most optimal motion information in order to represent accurate motion information. The decoder derives motion information for a current block by using the AMVP or merge method, and then uses a reference block, located in the motion information in a reference picture, as a prediction block for the current block.

A method of deriving motion information in Merge or AMVP involves a method for constructing a motion candidate list using motion vector predictors derived from neighboring blocks of the current block, and then signaling index information for the optimal motion candidate. In the case of AMVP, motion candidate lists are derived for L0 and L1, respectively, so the most optimal motion candidate indexes (mvp_10_flag, mvp_11_flag) for L0 and L1 are signaled, respectively. In the case of Merge, a single move candidate list is derived, so a single merge index (merge_idx) is signaled. There may be various motion candidate lists derived from a single coding unit, and a motion candidate index or a merge index may be signaled for each motion candidate list. In this case, a mode in which there is no information about residual blocks in blocks encoded using the merge mode may be called a MergeSkip mode.

The motion candidate and the motion information candidate in this specification may have the same meaning. In addition, the motion candidate list and the motion information candidate list in this specification may have the same meaning.

Symmetric MVD (SMVD) is a method which makes motion vector difference (MVD) values in the L0 and L1 directions symmetrical in the case of bi-directional prediction, thereby reducing the bit rate of motion information transmitted. The MVD information in the L1 direction that is symmetrical to the L0 direction is not transmitted, and reference picture information in the L0 and L1 directions is also not transmitted, but is derived during decoding.

Overlapped block motion compensation (OBMC) is a method in which, when blocks have different pieces of motion information, prediction blocks for a current block are generated by using motion information of neighboring blocks, and the prediction blocks are then weighted averaged to generate a final prediction block for the current block. This has the effect of reducing the blocking phenomenon that occurs at the block edges in a motion-compensated video.

Generally, a merged motion candidate has low motion accuracy. To improve the accuracy of the merge motion candidate, a merge mode with MVD (MMVD) method may be used. The MMVD method is a method for correcting motion information by using one candidate selected from several motion difference value candidates. Information about a correction value of the motion information obtained by the MMVD method (e.g., an index indicating one candidate selected from among the motion difference value candidates, etc.) may be included in a bitstream and transmitted to the decoder. By including the information about the correction value of the motion information in the bitstream, a bit rate may be saved compared to including an existing motion information difference value in a bitstream.

A template matching (TM) method is a method of configuring a template through a neighboring pixel of a current block, searching for a matching area most similar to the template, and correcting motion information. Template matching (TM) is a method of performing motion prediction by a decoder without including motion information in a bitstream so as to reduce the size of an encoded bitstream. The decoder does not have an original image, and thus may schematically derive motion information of a current block by using a pre-reconstructed neighboring block.

A Decoder-side Motion Vector Refinement (DMVR) method is a method for correcting motion information through the correlation of already reconstructed reference videos in order to find more accurate motion information. The DMVR method is a method which uses the bidirectional motion information of a current block to use, within predetermined regions of two reference pictures, a point with the best matching between reference blocks in the reference pictures as a new bidirectional motion. When the DMVR method is performed, the encoder may perform DMVR on one block to correct motion information, and then partition the block into sub-blocks and perform DMVR on each sub-block to correct motion information of the sub-block again, and this may be referred to as multi-pass DMVR (MP-DMVR).

A local illumination compensation (LIC) method is a method for compensating for changes in luma between blocks, and is a method which derives a linear model by using neighboring pixels adjacent to a current block, and then compensate for luma information of the current block by using the linear model.

Existing video encoding methods perform motion compensation by considering only parallel movements in upward, downward, leftward, and rightward directions, thus reducing the encoding efficiency when encoding videos that include movements such as zooming, scaling, and rotation that are commonly encountered in real life. To express the movements such as zooming, scaling, and rotation, affine model-based motion prediction techniques using four (rotation) or six (zooming, scaling, rotation) parameter models may be applied.

Bi-directional optical flow (BDOF) is used to correct a prediction block by estimating the amount of change in pixels on an optical-flow basis from a reference block of blocks with bi-directional motion. Motion information derived by the BDOF of VVC may be used to correct the motion of a current block.

Prediction refinement with optical flow (PROF) is a technique for improving the accuracy of affine motion prediction for each sub-block so as to be similar to the accuracy of motion prediction for each pixel. Similar to BDOF, PROF is a technique that obtains a final prediction signal by calculating a correction value for each pixel with respect to pixel values in which affine motion is compensated for each sub-block based on optical-flow.

The combined inter-/intra-picture prediction (CIIP) method is a method for generating a final prediction block by performing weighted averaging of a prediction block generated by an intra-picture prediction method and a prediction block generated by an inter-picture prediction method when generating a prediction block for the current block.

The intra block copy (IBC) method is a method for finding a part, which is most similar to a current block, in an already reconstructed region within a current picture and using the reference block as a prediction block for the current block. In this case, information related to a block vector, which is the distance between the current block and the reference block, may be included in a bitstream. The decoder can parse the information related to the block vector contained in the bitstream to calculate or set the block vector for the current block.

The bi-prediction with CU-level weights (BCW) method is a method in which with respect to two motion-compensated prediction blocks from different reference pictures, weighted averaging of the two prediction blocks is performed by adaptively applying weights on a block-by-block basis without generating the prediction blocks using an average.

An intra template matching prediction (TMP) method is a method in which a video signal processing apparatus configures a reference template by using pixel values of neighboring blocks adjacent to a current block, searches an already reconstructed area in a current picture for a part most similar to the configured reference template, and then uses a corresponding reference block (the part found in the already reconstructed area) as a prediction block of the current block.

The multi-hypothesis prediction (MHP) method is a method for performing weighted prediction through various prediction signals by transmitting additional motion information in addition to unidirectional and bidirectional motion information during inter-picture prediction.

A cross-component linear model (CCLM) is a method for configuring a linear model by using a high correlation between a luma signal and a chroma signal at the same location as the corresponding luma signal, and then predicting a chroma signal through the corresponding linear model. After a template is configured using a block completed to be reconstructed from among neighboring blocks adjacent to a current block, and then a parameter for the linear model is derived through the template. Next, a current luma block selectively reconstructed according to the size of the chroma block according to a video format is down-sampled. Lastly, a chroma component block of the current block is predicted using the down-sampled luma component block and the corresponding linear model. In this case, the method using two or more linear models is called a multi-model linear mode (MMLM).

In independent scalar quantization, reconstructed coefficient $t'k$ for input coefficient $tk$ is only dependent on quantization index $qk$. That is, a quantization index for any reconstructed coefficient has a value different from those of quantization indices for other reconstructed coefficients. In this case, $t'k$ may be a value obtained by adding a quantization error to $tk$, and may vary or remain the same according to a quantization parameter. Here, $t'k$ may be also referred to as a reconstructed transform coefficient or a de-quantized transform coefficient, and the quantization index may be also referred to as a quantized transform coefficient.

In uniform reconstruction quantization (URQ), reconstructed coefficients have the characteristic of being arrangement at equal intervals. The distance between two adjacent reconstructed values may be called a quantization step size. The reconstructed values may include 0, and the entire set of available reconstructed values may be uniquely defined based on the quantization step size. The quantization step size may vary depending on quantization parameters.

In the existing methods, quantization reduces the set of acceptable reconstructed transform coefficients, and elements of the set may be finite. Thus, there are limitation in minimizing the average error between an original video and a reconstructed video. Vector quantization may be used as a method for minimizing the average error.

A simple form of vector quantization used in video encoding is sign data hiding. This is a method in which the encoder does not encode a sign for one non-zero coefficient and the decoder determines the sign for the coefficient based on whether the sum of absolute values of all the coefficients is even or odd. To this end, in the encoder, at least one coefficient may be incremented or decremented by "1", and the at least one coefficient may be selected and have a value adjusted so as to be optimal from the perspective of rate-distortion cost. In one example, a coefficient with a value close to the boundary between the quantization intervals may be selected.

Another vector quantization method is trellis-coded quantization, and, in video encoding, is used as an optimal path-searching technique to obtain optimized quantization values in dependent quantization. On a block-by-block basis, quantization candidates for all coefficients in a block are placed in a trellis graph, and the optimal trellis path between optimized quantization candidates is found by considering rate-distortion cost. Specifically, the dependent quantization applied to video encoding may be designed such that a set of acceptable reconstructed transform coefficients with respect to transform coefficients depends on the value of a transform coefficient that precedes a current transform coefficient in the reconstruction order. At this time, by selectively using multiple quantizers according to the transform coefficients, the average error between the original video and the reconstructed video is minimized, thereby increasing the encoding efficiency.

Among intra prediction encoding techniques, the matrix intra prediction (MIP) method is a matrix-based intra prediction method, and obtains a prediction signal by using a predefined matrix and offset values through pixels on the left and top of a neighboring block, unlike a prediction method having directionality from pixels of neighboring blocks adjacent to a current bloc.

To derive an intra-prediction mode for a current block, on the basis of a template which is a random reconstructed region adjacent to the current block, an intra-prediction mode for a template derived through neighboring pixels of the template may be used to reconstruct the current block. First, the decoder may generate a prediction template for the template by using neighboring pixels (references) adjacent to the template, and may use an intra-prediction mode, which has generated the most similar prediction template to an already reconstructed template, to reconstruct the current block. This method may be referred to as template intra mode derivation (TIMD).

In general, the encoder may determine a prediction mode for generating a prediction block and generate a bitstream including information about the determined prediction mode. The decoder may parse a received bitstream to set an intra-prediction mode. In this case, the bit rate of information about the prediction mode may be approximately 10% of the total bitstream size. To reduce the bit rate of information about the prediction mode, the encoder may not include information about an intra-prediction mode in the bitstream. Accordingly, the decoder may use the characteristics of neighboring blocks to derive (determine) an intra-prediction mode for reconstruction of a current block, and may use the derived intra-prediction mode to reconstruct the current block. In this case, to derive the intra-prediction mode, the decoder may apply a Sobel filter horizontally and vertically to each neighboring pixel adjacent to the current block to infer directional information, and then map the directional information to the intra-prediction mode. The method by which the decoder derives the intra-prediction mode using neighboring blocks may be described as decoder side intra mode derivation (DIMD).

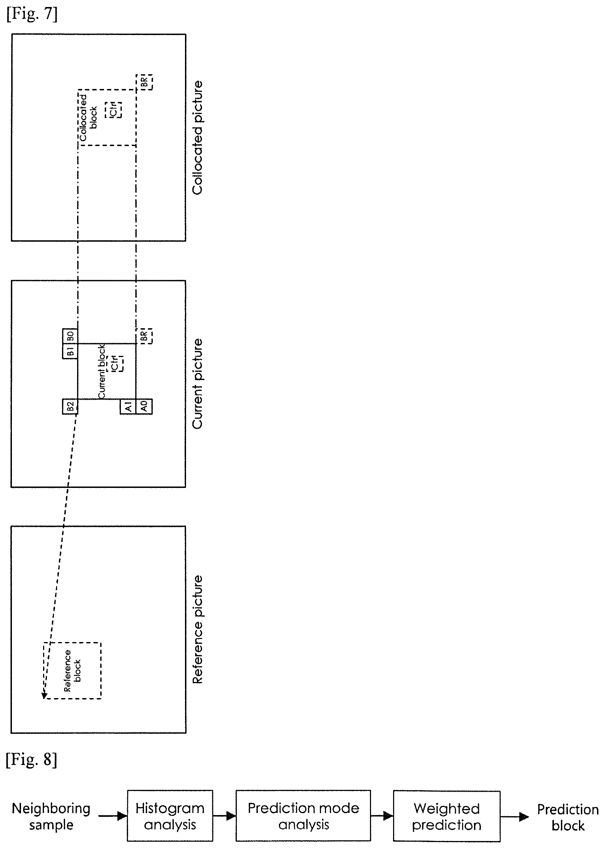

FIG. 7 illustrates the position of neighboring blocks used to construct a motion candidate list in inter prediction.

The neighboring blocks may be spatially located blocks or temporally located blocks. A neighboring block that is spatially adjacent to a current block may be at least one among a left (A1) block, a left below (A0) block, an above (B1) block, an above right (B0) block, or an above left (B2) block. A neighboring block that is temporally adjacent to the current block may be a block in a collocated picture, which includes the position of a top left pixel of a bottom right (BR) block of the current block. When a neighboring block temporally adjacent to the current block is encoded using an intra mode, or when the neighboring block temporally adjacent to the current block is positioned not to be used, a block, which includes a horizontal and vertical center (Ctr) pixel position in the current block, in the collocated picture corresponding to the current picture may be used as a temporal neighboring block. Motion candidate information derived from the collocated picture may be referred to as a temporal motion vector predictor (TMVP). Only one TMVP may be derived from one block. One block may be partitioned into multiple sub-blocks, and a TMVP candidate may be derived for each sub-block. A method for deriving TMVPs on a sub-block basis may be referred to as sub-block temporal motion vector predictor (sbTMVP).

Whether methods described in the present specification are to be applied may be determined on the basis of at least one of pieces of information relating to slice type information (e.g., whether a slice is an I slice, a P slice, or a B slice), whether the current block is a tile, whether the current block is a subpicture, the size of a current block, the depth of a coding unit, whether a current block is a luma block or a chroma block, whether a frame is a reference frame or a non-reference frame, and a temporal layer corresponding a reference sequence and a layer. Pieces of information used to determine whether methods described in the present specification are to be applied may be pieces of information promised between a decoder and an encoder in advance. In addition, such pieces of information may be determined according to a profile and a level. Such pieces of information may be expressed by a variable value, and a bitstream may include information on a variable value. That is, a decoder may parse information on a variable value included in a bitstream to determine whether the above methods are applied. For example, whether the above methods are to be applied may be determined on the basis of the width length or the height length of a coding unit. If the width length or the height length is equal to or greater than 32 (e.g., 32, 64, or 128), the above methods may be applied. If the width length or the height length is smaller than 32 (e.g., 2, 4, 8, or 16), the above methods may be applied. If the width length or the height length is equal to 4 or 8, the above methods may be applied.

FIG. 8 illustrates a process of generating a prediction block by using a DIMD according to an embodiment of the present disclosure.

Referring to FIG. 8, a decoder may derive a prediction block by using neighboring samples (blocks or pixels). In this case, the neighboring sample may be neighboring blocks (pixels) of the current block. Specifically, the decoder may determine, through a histogram of directional information (angular information), intra prediction modes for reconstruction of the current block and weight information by using the neighboring samples as an input.

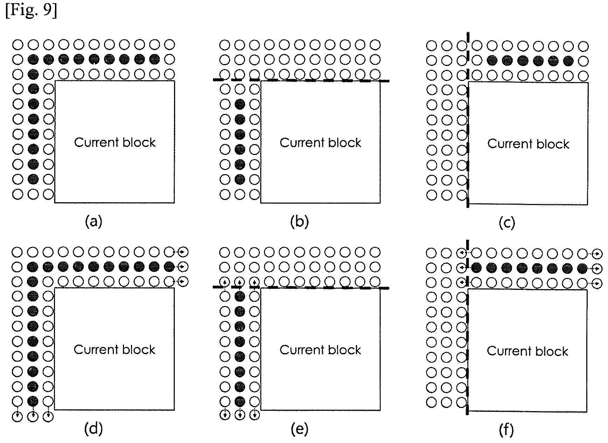

FIG. 9 illustrates the positions of neighboring pixels used to derive directional information according to an embodiment of the present disclosure.

FIG. 9(a) illustrates a case where all neighboring blocks of a current block can be used to derive directional information, FIG. 9(b) illustrates a case where an upper boundary of the current block corresponds to the boundaries of a sub-picture, a slice, a tile, and a CTU, and FIG. 9(c) illustrates a case where a left boundary of the current block corresponds to the boundaries of the sub-picture, the slice, the tile, and the CTU. When the neighboring blocks and the current block do not belong to the same sub-picture, slice, tile, and CTU, the neighboring blocks may not be used to derive the directional information. The grey dots in FIG. 9 indicate the positions of pixels actually used to derive the directional information, and the dotted line indicates the boundaries of the sub-picture, slice, tile, and CTU. In addition, referring to FIGS. 9(d) to 9(f), in order to derive the directional information, pixels positioned at the boundary may be padded by one pixel beyond the boundary. Through this padding, the directional information can be more accurately derived.

In order to derive directional information of a pixel in a specific position, a 3x3 Sobel filter in Equation 1 may be applied to each of the horizontal and vertical directions. A in Equation 1 may mean pixel information (values) of reconstructed neighboring blocks of the 3x3 current block. The directional information ($\theta$) may be determined using Equation 2. To reduce the complexity in calculation for deriving directional information, the decoder may derive the directional information ($\theta$) only performing calculation for Gy/Gx in Equation 1 without calculating an atan function in Equation 2.

[Equation 1]

$$\mathbf{G_x} = \begin{bmatrix} -1 & 0 & 1 \\ -2 & 0 & 2 \\ -1 & 0 & 1 \end{bmatrix} * \mathbf{A} \quad et \quad \mathbf{G_y} = \begin{bmatrix} -1 & -2 & -1 \\ 0 & 0 & 0 \\ 1 & 2 & 1 \end{bmatrix} * \mathbf{A}$$

[Equation 2]

$$\theta = \mathrm{atan}\left(\frac{G_y}{G_x}\right)$$

Referring to FIG. 9, the directional information may be calculated for each of the grey dots shown in FIG. 9, and the directional information may be mapped to the angle of an intra prediction mode. An intra prediction mode set may include a planar mode, a DC mode, and multiple (e.g., 65) angular modes (i.e., directional modes). The intra prediction mode may include 67 modes, and the directional information (angle ($\theta$)) calculated through Equation 2 may be a value in units of real numbers. Accordingly, a process of mapping the directional information and a specific intra prediction directional mode is required. The directional mode described in the present disclosure may be identical to the angular mode.

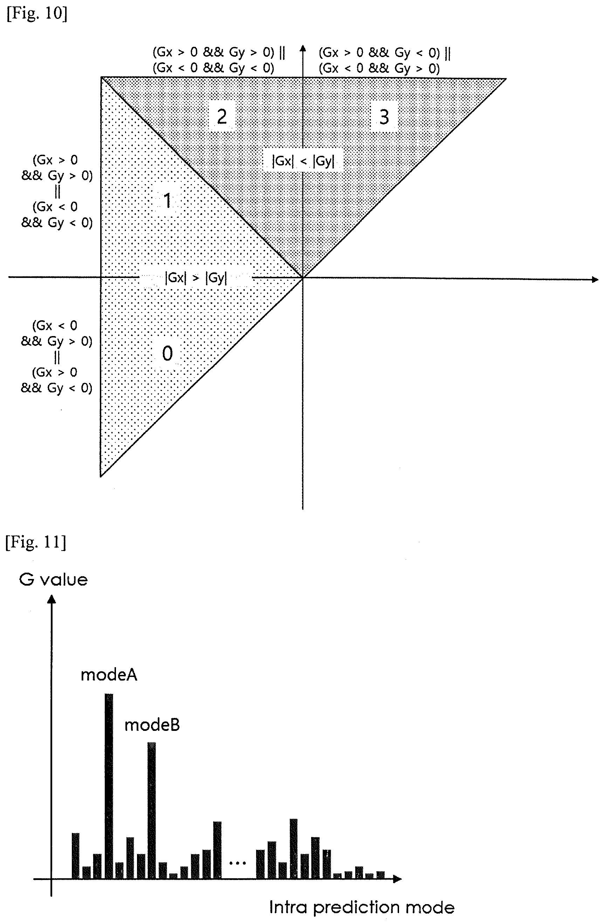

FIG. 10 illustrates a method of mapping a directional mode according to an embodiment of the present disclosure.

Referring to FIG. 10, an intra prediction directional mode may be divided into four sections such as 0 degrees (index 18), 45 degrees (index 34), 90 degrees (index 50), and 135 degrees (index 66) (see FIG. 6). Referring to FIG. 10, an interval for determining an intra prediction directional mode may be divided into four sections from section 0 to section 3. Section 0 may correspond to a section from -45 degrees to 0 degrees, section 1 may correspond to a section from 0 degrees to 45 degrees, section 2 may correspond to a section from 45 degrees to 90 degrees, and section 3 may correspond to a section from 90 degrees to 135 degrees. In this case, each section may include 16 intra prediction directional modes. The directional mode may be determined as one of four sections by comparing the signs and magnitudes of Gx and Gy calculated through Equation 1. For example, when Gx and Gy are positive numbers and an absolute value of Gx is greater than an absolute value of Gy, section 1 may be selected. An intra prediction directional mode mapped to each section may be determined through directional information ($\theta$) calculated from Equation 2. Specifically, the decoder scales the value by multiplying the directional information ($\theta$) by 2^16. In addition, the decoder may find a value closest to the scaled value by comparing the scaled value with numerical values in a pre-defined table, and determine an intra prediction direction mode on the basis of the closest value. In this case, the number of values in the pre-defined table may be 17. Specifically, the values in the pre-defined table may be {0, 2048, 4096, 6144, 8192, 12288, 16384, 20480, 24576, 28672, 32768, 36864, 40960, 47104, 53248, 59392, 65536}. In this case, a difference between the values in the pre-defined table may be configured differently according to a difference between angles of the intra prediction directional mode.

To reduce the complexity in calculation, when the directional angle is obtained by using only Gy/Gx without performing the atan calculation, a difference between the values in the pre-defined table may not match the distance between the angles of the intra prediction directional mode. The atan function has a characteristic where its slope gradually decreases as the input value increases. Accordingly, the numerical values of the defined table also need to be configured in consideration of both the difference between the angles of the intra prediction direction mode and nonlinear characteristics of the atan function. For example, the difference between the values in the defined table may be configured to be gradually decreased. Conversely, the difference between the values in the defined table may be configured to be gradually increased.

When the width and the height of the current block are different from each other, an intra prediction directional mode which can be used may vary. That is, when the width and the height of the current block are different from each other, a section for deriving the intra prediction direction mode may vary. In other words, the section for deriving the intra prediction directional mode may be changed on the basis of the width and the height of the current block (e.g., a ratio between the width and the height, etc.) For example, when the width of the current block is greater than the height thereof, the intra prediction mode may be re-mapped from 67 to 80, and the intra prediction mode in the opposite direction may be excluded from 2 to 15. For example, when the width of the current block is n (an integer) times greater than the height (e.g., twice as long), the intra prediction modes {3, 4, 5, 6, 7, 8} may be reconfigured for (mapped to) {67, 68, 69, 70, 71, 72}, respectively. In addition, when the width of the current block is greater than the height, the intra prediction mode may be reconfigured with a value obtained by adding "65" to the intra prediction mode. When the width of the current block is shorter than the height, the intra prediction mode may be reconfigured with a value obtained by subtracting "67" from the intra prediction mode.

A histogram may be used to derived the intra prediction direction mode for reconstruction of the current block. When there are more non-directional blocks than directional blocks as a result of obtaining the direction information of the neighboring blocks, the prediction mode for the non-directional blocks may have the highest cumulative value in the histogram. However, the directional mode needs to be derived for the reconstruction of the current block, a prediction mode of the non-directional mode may be excluded even though the cumulative value in the histogram is the highest value. That is, a flat area having no variation between neighboring pixels or having no directionality may not be used to derive the intra prediction directional mode. For example, the prediction mode of the non-directional block may be a planar mode and a DC mode. When the left neighboring block is in the planar mode or the DC mode, the left neighboring block may not be used to derive the directional information, and the directional information may be derived using the upper neighboring block only. When both the flat area and the directional area are mixed in the neighboring blocks of the current block, the decoder may generate a histogram by using a G value calculated as in Equation 3 to emphasize the directionality. In this case, the histogram may not be based on the frequency count where "1" is added for each occurrence of an intra prediction directional mode, but rather based on the cumulative value where the calculated G value is added for each occurrence of the intra prediction directional mode.

[Equation 3]

$$G = |G_x| + |G_y|$$

FIG. 11 illustrates a histogram for deriving an intra prediction directional mode according to an embodiment of the present disclosure.

The X-axis in FIG. 11 indicates an intra prediction directional mode, and the Y-axis indicates the cumulative G value. The decoder may select an intra prediction directional mode having the largest cumulative G value among the intra prediction directional modes. In other words, the decoder may select an intra prediction directional mode for the current block on the basis of the cumulative value. Referring to FIG. 11, modeA having the largest cumulative value and modeB having the second largest cumulative value may be selected as the intra prediction directional mode. To generate a prediction block of the current block, the decoder may generate a final prediction block by weighted averaging a prediction block generated using modeA, a prediction block generated using modeB, and prediction blocks finally generated using a planar mode. In this case, the weight of each prediction block may be determined using the cumulative values of modeA and modeB. For example, the weight of the prediction block generated using the planar mode may be configured to be 1/3 of the total weight. The weight of the prediction block generated using modeA may be configured as a weight corresponding to a value obtained by dividing the cumulative value of modeA by the sum of the cumulative values of modeA and modeB. The weight of the prediction block generated using modeB may be determined as a value obtained by subtracting the weight of modeA and 1/3 of the total weight from the total weight. To more accurately calculate the weight, the decoder may multiply the weight of the prediction block generated using modeA by an arbitrary value to expand the range of the weights. The weight of the prediction block generated using modeB and the weight of the prediction block generated using the planar mode may be also expanded in the same manner.

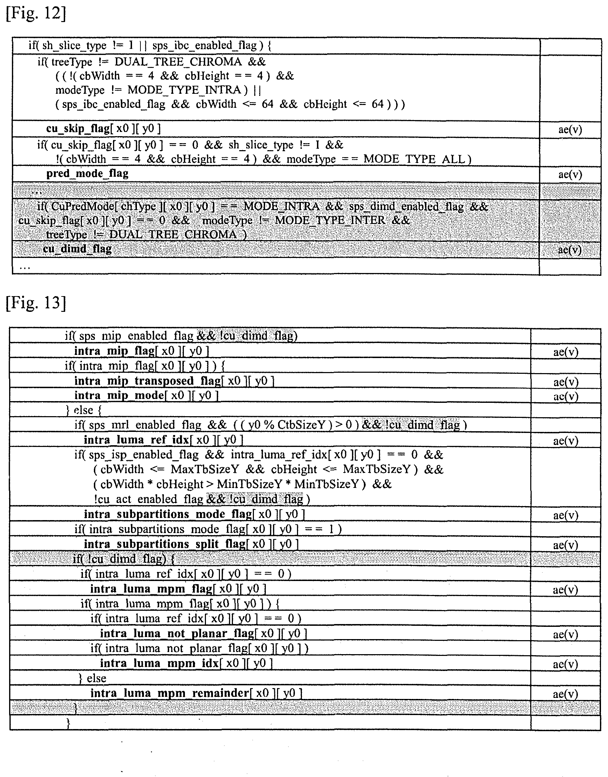

FIG. 12 illustrates a method of signaling a DIMD mode according to an embodiment of the present disclosure.

Specifically, FIG. 12 illustrates a signaling method used to store, in a bitstream, a syntax element for whether a DIMD mode is applied and transmit the same to the decoder. Referring to FIG. 12, a syntax element (cu_dimd_flag) for whether a DIMD mode is used to generate a prediction block of the current block may be parsed when an encoding mode of the current block is an intra mode, a syntax element (sps_dimd_enabled_flag) for whether a DIMD mode configured in SPS is activated indicates that the DIMD mode is activated (e.g., when a value of sps_dimd_enabled_flag is 1), the encoding mode of the current block is not a SKIP mode, the current block is a luma block, and the current block is not in an inter encoding mode. In this case, when the value of cu_dimd_flag is "1", it may indicate that the current block is decoded using the DIMD mode, and when the value of cu_dimd_flag is "0", it may indicate that the current block is not decoded using the DIMD mode. When cu_dimd_flag is not parsed, the value of cu_dimd_flag may be configured as "0". sps_dimd_enabled_flag may be controlled by a syntax element included in a profile, tier, and level syntax. For example, sps_dimd_enabled_flag may be configured by gci_no_dimd_constraint_flag corresponding to a syntax element included in a general_conatraints_info() syntax. gci_no_dimd_constraint_flag may be defined to perform the operations below. When the value of gci_no_dimd_constraint_flag is 1, an sps_dimd_enabled_flag value for all pictures in OlsinScope may be 0. When the value of gci_no_dimd_constraint_flag is 0, there may may be no separate constraint (gci_no_dimd_constraint_flag equal to 1 specifies that sps_dimd_enabled_flag for all pictures in OlsInScope shall be equal to 0. gci_no_dimd_constraint_flag equal to 0 does not impose such a constraint.).

FIG. 13 illustrates a method of signaling a syntax element related to an intra prediction mode according to whether a DIMD mode is used according to an embodiment of the present disclosure.

When a current block is decoded using a DIMD mode, additional information (syntax elements) related to an encoding mode may not be parsed. Referring to FIG. 13, when a value of cu_dimd_flag is 1, additional information (e.g., intra_mip_flag, intra_subpartitions_mode_flag, intra_luma_mpm_flag, intra_luma_not_planar_flag, intra_luma_mpm_idx, intra_luma_mpm_ remainder, etc.) related to the encoding mode of the current block may not be parsed. Thereafter, when there is a residual signal, syntax elements related to whether transform coefficients for the residual signal exist and the residual signal may be parsed.

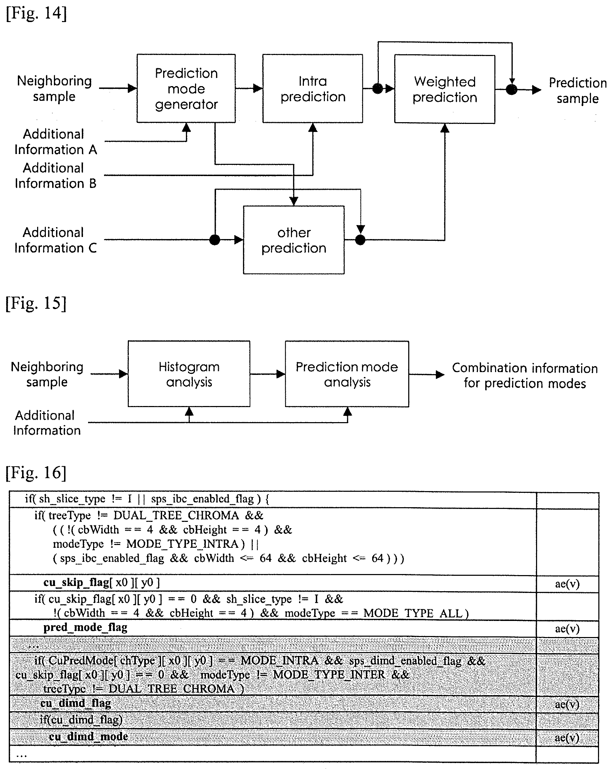

FIG. 14 illustrates a method of generating a prediction sample for reconstructing a current block according to an embodiment of the present disclosure.

Specifically, FIG. 14 is a structure diagram illustrating a process of more effectively deriving an intra prediction mode and generating a prediction sample by using the derived intra prediction mode in order to improve an encoding performance.

Referring to FIG. 14, in a "prediction mode generator" process, a decoder may derive an intra prediction directional mode of the current block by using samples (neighboring samples) of neighboring blocks adjacent to the current block. In this case, the decoder may derive at least one intra prediction directional mode, and derive the weight of each mode. For example, in order to derive the intra prediction directional mode, the decoder may use a histogram-based method of deriving directional information of neighboring block samples through an arbitrary filer and determining frequently occurring directional information by using an intra prediction directional mode. In addition, as a method of deriving the intra prediction directional mode, a method of generating an intra prediction pixel of a left pixel adjacent to the current block by using only the above pixel adjacent to the current block so as to determine an intra prediction mode having the least distortion as an intra prediction directional mode for the current block.

Referring to FIG. 14, in an "intra prediction" process, prediction blocks for the current block may be generated using the weight and intra prediction directional modes derived in the process of the "prediction mode generator" process. The number of the prediction blocks may be determined according to the number of intra prediction directional modes derived in the prediction mode generator process. For example, when the number of the derived intra prediction directional modes is 2, the number of prediction blocks for the current block may be 2. Position dependent intra prediction combination (PDPC) filtering using a method described below may be applied to the prediction blocks generated in the "intra prediction" process.

The position dependent intra prediction combination (PDPC) filter may be applied to each of the prediction blocks generated in the "intra prediction" process. When the PDPC filtering is applied to each prediction block, the complexity can be increased in the perspective of the decoder, and thus when the prediction block is predicted using a DIMD mode, the PDPC filtering may not be applied to the corresponding prediction block. In addition, the PDPC filtering may be applied only to one of modeA having the largest cumulative value and modeB having the second largest cumulative value. For example, the PDPC filtering may be applied only to mode A. In addition, whether to apply the PDPC filtering may be determined according to the weight of each directional mode. For example, whether to apply the PDPC to all or a part of modeA and mode B may be determined on the basis of a difference between the weight for modeA and the weight for modeB. For example, when the difference between the weight for modeA and the weight for modeB is smaller than a specific value, the PDPC filtering may be applied to both modeA and modeB. In addition, each of the weight for modeA and the weight for modeB is compared to a specific value so that whether the PDPC filtering is applied to modeA and modeB can be determined. When the weight is greater than the specific value, the PDPC filtering may be applied to the directional mode of the corresponding weight. For example, when the weight for modeA is equal to or greater than the specific value and the weight for modeB is smaller than the specific value, the PDCP filtering may be applied to modeA, and the PDPC filtering may not be applied to modeB. In addition, regardless of the directional mode, the PDPC filtering in a preconfigured form may be applied only to a final prediction block to which the weighted average is applied through a weighted prediction process (see FIG. 14). In addition, the PDPC filtering may be applied to a final prediction block to which the weighted average is applied in the "weighted prediction" process, by using modeA. The PDPC filtering may be applied to a final prediction block to which the weighted average is applied in the "weighted prediction" process, by using modeB.

Referring to FIG. 14, in an "other prediction" process, the decoder may additionally generate a prediction block for the current block. For example, the decoder may generate an intra prediction block by using at least one of a planar mode, a DC mode, and a matrix intra prediction (MIP). Whether to perform the "other prediction" process may be determined using at least one of the intra prediction directional modes derived in the "prediction mode generator" process and weight information of the prediction directionality, quantization parameter information of the current block, the width or the height of the current block, information on whether the current block is a luma block or a chroma block, an intra prediction mode around the current block, and information on whether transform coefficients around the current block exist (which may correspond to additional information A, B, and C of FIG. 14). Hereinafter, a method of determining whether to perform the "other prediction" process is described.

Information on a mode (e.g., a planar, DC, or MIP mode, etc.) to be used by the decoder in the "other prediction" process may be agreed in advance or may be signaled via the SPS. For example, the decoder may determine a mode on the basis of a syntax element (sps_dimd_default_mode) indicating a mode to be used. The decoder may determine, according to a value of sps_dimd_default_mode, a mode to be used among the planar mode, DC mode, and MIP mode. For example, when the value of sps_dimd_default_mode is "0", it may indicate to use the planar mode, when the value of sps_dimd_default_mode is "1", it may indicate to use the DC mode, and the value of sps_dimd_default_mode is a value other than 0 or 1, it may indicate to use the MIP mode. In addition, when the current block is a luma block and there are transform coefficients of the neighboring blocks, the decoder may generate a prediction block by using at least one of the planar mode, the DC mode, and the MIP mode. When the current block is a chroma block and there are no transform coefficients of the neighboring blocks, the decoder may generate a prediction block by using at least one of the planar mode, the DC mode, and the MIP mode. In addition, when the weights of the intra prediction directional modes derived in the "prediction mode generator" process are similar to each other (e.g., when a difference between the weights of the respective directional modes is smaller than a specific threshold value, etc.), the "other prediction" process may not be performed. When the weights of the intra prediction directional modes derived in the "prediction mode generator" process are similar to each other, the decoder may generate a prediction block by using at least one of the planar mode, the DC mode, and the MIP mode (that is, the "other prediction" process is performed). When a difference between the weights of the intra prediction directional modes derived in the "prediction mode generator" process is large (e.g., when a difference between the weights of the respective directional modes is greater than a specific threshold value, etc.), it may mean that there are many changes between the pixels of the neighboring blocks, and thus the decoder may generate a prediction block by using at least one of the planar mode, the DC mode, and the MIP mode. In addition, when the width and the height of the current block are different from each other, the decoder may generate a prediction block by using at least one of the planar mode, the DC mode, and the MIP mode. Conversely, when the width and the height of the current block are identical to each other, the decoder may generate a prediction block by using at least one of the planar mode, the DC mode, and the MIP mode.

In the "weighted prediction" process, the decoder may generate one prediction sample by weighted-averaging several intra prediction blocks generated in the process of the "intra prediction" and "other prediction" processes. The weight of each of the intra prediction blocks may be determined on the basis of at least one of the intra prediction directional mode and weight information derived in the "prediction mode generator" process, quantization parameter information of the current block, the width or the height of the current block, information on whether the current block is a luma block or a chroma block, an intra prediction mode around the current block, and information on whether transform coefficients around the current block exist.

FIG. 15 illustrates a method of determining an intra prediction mode according to an embodiment of the present disclosure.

FIG. 15 illustrates the "prediction mode generator" process of FIG. 14 in detail. Referring to FIG. 15, the "prediction mode generator" process of FIG. 14 may derive intra prediction directionality through histogram analysis. Specifically, in the "histogram analysis" process of FIG. 15, the decoder may derive the intra prediction directionality by analyzing a histogram obtained using neighboring samples adjacent to the current block. In this case, the decoder may derive the intra prediction directional mode and the weight of the current block by using at least one of the width or the height of the current block, quantization parameter information, available intra prediction directional mode information among the neighboring blocks of the current block, information on whether there is a residual signal of the neighboring block of the current block, and information on whether the current block is a luma block or a chroma block. Hereinafter, a method of deriving the intra prediction directional mode and weight for the current block is described.

The intra prediction directional mode may be configured on the basis of a frequency count. The decoder may obtain a histogram for an intra prediction directional mode of a neighboring block, and may analyze the histogram to select, as a prediction directional mode, the most frequently occurring intra prediction directional mode and the second frequently occurring mode. In addition, the intra prediction directional mode may be configured on the basis of a cumulative value (e.g., the G value of FIG. 11). The decoder may analyze the histogram obtained by the cumulative value obtained by adding the G value to each of the intra prediction directional modes, so as to select, as a prediction directional mode, the most frequently occurring intra prediction directional mode and the second frequently occurring mode. In addition, the decoder may select an intra prediction directional mode on the basis of the distance between the intra prediction directional modes of the neighboring blocks and the cumulative value obtained by adding the G values. The distance between the directional modes may mean an index difference of the directional mode. For example, the distance difference between the directional mode of index 66 and the directional mode of index 2 may be 64. Alternatively, with respect to the index of the directional mode, 66 is the last index, and thus the distance difference between the directional mode of index 66 and the directional mode of index 2 may be 2. The decoder may obtain a histogram by using a cumulative value obtained by adding the G value to each of the intra prediction directional modes for the neighboring blocks, analyze the histogram, and first select the intra prediction directional mode having the largest cumulative value. Next, the decoder may use, among modes corresponding to cumulative values remaining after excluding the largest cumulative value (e.g., a mode having the second largest cumulative value, a mode having the third largest cumulative value, a mode having the fourth largest cumulative value, etc.), a mode having the largest cumulative value and a mode in which the distance between the directional modes is the shortest (is the closest). The decoder may first select an intra prediction directional mode having the largest cumulative value, and the decoder may use, among modes corresponding to cumulative values remaining after excluding the largest cumulative value (e.g., a mode having the second largest cumulative value, a mode having the third largest cumulative value, a mode having the fourth largest cumulative value, etc.), a mode having the largest cumulative value and a mode in which the distance between the directional modes is the largest (is the farthest). The cumulative value for each of the intra prediction directionals modes may be used when determining the weights for the intra prediction directional modes finally determined in the "histogram analysis" process.

The number of intra prediction directional modes for the current block derived in the "histogram analysis" process by the decoder in FIG. 15 may be 2 or more. When the number of the intra prediction directional modes derived in the "histogram analysis" is two or more, the distances among the respective intra prediction directional modes may be similar to or different from each other. In addition, the cumulative values among the intra prediction directional modes may be similar to or different from each other. Accordingly, to derive the optimal prediction sample for the current block, the optimal combination among various mode combinations needs to be selected. In addition, in order to derive the optimal prediction sample for the current block, the decoder may combine the intra prediction directional mode derived in the "prediction mode generator" process in FIG. 14 but also an encoding mode derived in the "other prediction" process. Information on the combination may be included in a bitstream. A mode combination described in the present disclosure may mean using one of mode A, mode B, the planar mode, the DC mode, and the MIP mode, or combining some or all of the modes.

Next, referring to FIG. 15, in the "prediction mode analysis" process, the decoder may select the optimal combination for deriving the optimal prediction sample for the current block by using weight information corresponding to the determined intra prediction modes and the derived intra prediction modes in the "histogram analysis" process. Specifically, in order to generate a prediction sample for the current block by using the derived intra prediction modes and weight information corresponding thereto, the decoder may determine information on whether to use the weighted average, an intra prediction mode to be used, and information on how to configure the weight for the intra prediction mode. In addition, in the "prediction mode analysis" process, the decoder may select the optimal combination for deriving a prediction sample for the current block by using at least one of the intra prediction modes determined in the "histogram analysis" process, weight information corresponding to the determined intra prediction modes, and intra prediction modes of the neighboring blocks. Specifically, in order to generate a prediction sample for the current block, the decoder may determine information on whether to use a weighted average, an intra prediction mode to be used, and information on how to configure the weight for the intra prediction mode. In this case, the optimal combination information (combination information for prediction modes) for generating a prediction sample for the current block may be derived by using at least one of the width or the height of the current block, quantization parameter information, an available intra prediction mode information among the neighboring blocks of the current block, information on whether there is a residual signal of the neighboring block of the current block, and information on whether the current block is a luma block or a chroma block. The combination information may include information on intra prediction directional modes and the weights of the intra prediction directional modes. For example, the weight of a mode having the second largest weight among those of the two derived intra prediction directional modes is "0" or within an arbitrary value, the decoder may not apply the weighted average when generating a prediction block for the current block and generate the prediction block by using only the intra prediction directional mode having the largest weight. In this case, the arbitrary value is an integer equal to or greater than 1, and may be 10. In addition, when at least one of the two derived intra prediction modes is a DC mode, a planar mode, or an MIP mode (i.e., when the intra prediction mode is not a directional mode), the decoder may not apply the weighted average when generating a prediction block for the current block, and may generate the prediction block by using only one intra prediction directional mode having the largest weight. In addition, when at least one of the two derived intra prediction modes is a DC mode, a planar mode, or an MIP mode (i.e., when the intra prediction mode is not a directional mode), the decoder may apply the weighted average when generating a prediction block for the current block.

FIG. 16 illustrates a syntax structure including syntax elements related to DIMD according to an embodiment of the present disclosure.

Referring to FIG. 16, when a current block is encoded using DIMD (i.e., when a value of cu_dimd_flag is 1), the decoder may additionally parse a syntax element (cu_dimd_mode) for DIMD combination information (information on modes combined to obtain a prediction sample, i.e., mode combination information). In this case, a method for parsing cu_dimd_mode may vary according to the number of combined prediction modes. For example, when the number of combined modes is "2", the decoder may parse only one bin. In this case, when the value of cu_dimd_mode is 0, the decoder may generate a prediction sample by using modeA and modeB. When the value of cu_dimd_mode is "1", the decoder may generate a prediction sample by using modeA, modeB, and the planar mode, generate a prediction sample by using modeA and the planar mode, or generate a prediction sample by using modeB and the planar mode. When the number of the combined modes is "4", the decoder may parse two bins. In this case, when the value of cu_dimd_mode is "0", the decoder may generate a prediction sample by using modeA and modeB. When the value of cu_dimd_mode is "1", the decoder may generate a prediction sample by using modeA, modeB, and the planar mode. When the value of cu_dimd_mode is "2", the decoder may generate a prediction sample by using modeA and the planar mode. When the value of cu_dimd_mode is "3", the decoder may generate a prediction sample by using modeB and the planar mode.

When the syntax element for the DIMD combination information is included in a bitstream, there may be a problem of an increased bit amount. To solve this problem, the syntax element for the DIMD combination information may not be included in the bitstream, and the decoder may derive combination information through information on the current block and the neighboring blocks. As described above, the decoder may derive the optimal combination information for generating a prediction sample for the current block.

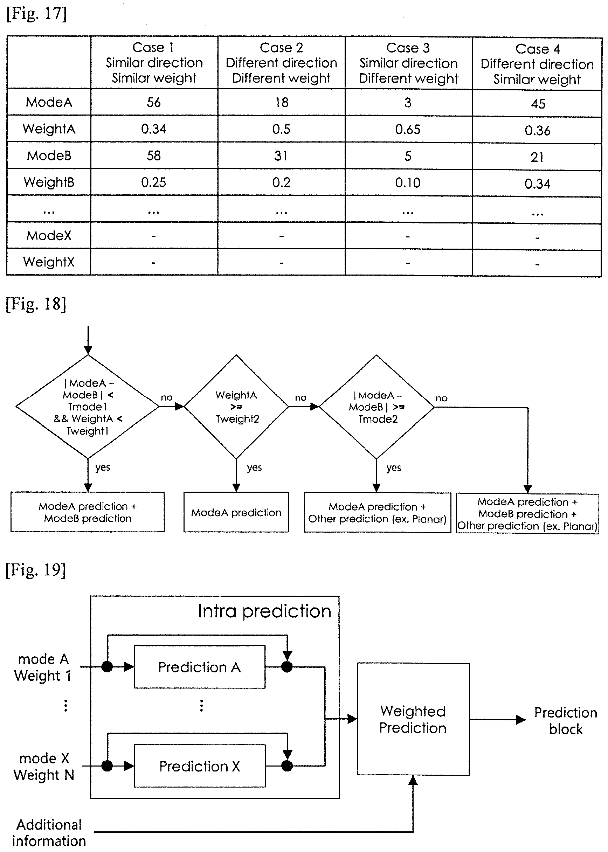

FIG. 17 illustrates an intra prediction directional mode and weight information for a neighboring block of a current block according to an embodiment of the present disclosure.

Specifically, FIG. 17 illustrates weight information corresponding to an intra prediction directional mode for each block derived in the "histogram analysis" process described through FIG. 15. Referring to FIG. 17, the size (WeightX) of the weight may be represented in an alphabetical order. For example, the largest weight may be represented as "WeightA" and the second largest weight may be represented as "WeightB". There may be as many pieces of weight information as the number (X) of the derived intra prediction directional modes. In addition, the intra prediction mode corresponding to the weight WeightA may be modeA. A characteristic of the weight information corresponding to an intra prediction directional mode may vary according to characteristics of neighboring blocks adjacent to the current block. Referring to FIG. 17, Case 1 shows a case where intra prediction directional modes of modeA and modeB and pieces of weight information corresponding thereto are similar. Case 2 shows a case where intra prediction directional modes of modeA and modeB and a difference between pieces of weight information corresponding thereto is large. Case 3 shows a case where intra prediction directional modes of modeA and modeB are similar but a difference between pieces of weight information corresponding thereto is large. Case 4 is a case where intra prediction directional modes of modeA and modeB are largest different but pieces of weight information corresponding thereto are similar.

FIG. 18 illustrates a method of determining DIMD combination information according to an embodiment of the present disclosure.

Specifically, FIG. 18 illustrates a method of determining optimal DIMD combination information through a difference between weights (WeightA and WeightB) corresponding to intra prediction directional modes (modeA and modeB) derived in the "prediction mode generator" process.

Referring to FIG. 18, i) when a difference between absolute values of modeA and modeB is less than an arbitrary value (Tmode1, e.g., 10) and WeightA is less than an arbitrary threshold value (Tweight1, e.g., 0.7), the optimal DIMD combination for the current block may be a combination of modeA and modeB, and the decoder may generate a prediction sample by combining modeA and modeB. ii) when i) is not satisfied and WeightA is equal to or greater than an arbitrary threshold value (Tweight2, e.g., 0.85), the optimal DIMD combination for the current block may be using only modeA, and the decoder may generate a prediction sample by using only modeA. iii) when ii) is not satisfied and a difference between absolute values of modeA and modeB is equal to or greater than an arbitrary threshold value (Tmode2, e.g., 15), the optimal DIMD combination for the current block may be a combination of modeA and all or a part of encoding modes (e.g., the planar mode, the DC mode, and the MIP mode) derived in the "other prediction" process, and the decoder may generate a prediction sample by combining modeA and a part or all of the encoding modes (e.g., the planar mode, the DC mode, and the MIP mode) derived in the "other prediction" process. iv) when iii) is not satisfied, the optimal DIMD combination for the current block may be a combination of modeA, modeB, and all or a part of encoding modes (e.g., the planar mode, the DC mode, and the MIP mode) derived in the "other prediction" process, and the decoder may generate a prediction sample by combining modeA, modeB, and a part or all of the encoding modes (e.g., the planar mode, the DC mode, and the MIP mode) derived in the "other prediction" process.

Hereinafter, a method of determining optimal DIMD combination information through a difference between intra prediction directional modes (modeA and modeB) derived by the decoder and weights (WeightA and WeightB) corresponding thereto is described.

The decoder may obtain DIMD combination information by comparing the weights of modeA and modeB with the sum of all weights of the histogram (see FIG. 11). Specifically, the DIMD combination information may be obtained by comparing all (e.g., the sum of weights) of the weights (including weights of modeA and modeB) of directional information of neighboring blocks of the current block with the weights of modeA and modeB.

For example, when the number of the derived intra prediction directional modes is 1 (modeA or modeB) and a ratio of the weight of a corresponding prediction directional mode among all the weights is greater than a specific ratio, the corresponding prediction directional mode may be selected. When the ratio of the weight of the derived intra prediction directional mode among all the weights is equal to or less than a specific ratio, the DIMD combination information may be a combination of one or more of the derived intra prediction directional mode, the planar mode, the DC mode, and the MIP mode. In this case, the specific ratio may be 1/2, 2/3, 3/4, 3/8, etc.

As another example, when the number of the derived intra prediction directional modes is two (modeA and modeB) and a ratio of a sum of weights of the respective intra prediction directional modes among all the weights is greater than a specific ratio, the corresponding two intra prediction directional modes may be selected. When the ratio of the sum of weights of the two derived intra prediction directional modes among all the weights is equal to or less than a specific ratio, as the DIMD combination information, one or more of the derived intra prediction directional mode, the planar mode, the DC mode, and the MIP mode may be selected. For example, modeA, modeB, and the planar mode may be selected. Alternatively, modeA and modeB may be selected. In this case, the specific ratio may be 1/2, 2/3, 3/4, 3/8, etc.

FIG. 19 illustrates a method of generating a prediction sample by using intra prediction directional mode information and a weight according to an embodiment of the present disclosure.

Specifically, FIG. 19 illustrates the "intra prediction" and "weighted prediction" processes of FIG. 14. Referring to FIG. 19, when there are multiple intra prediction directional modes derived by the decoder, the decoder may obtain, using weight information of each of the multiple intra prediction directional modes, a prediction sample by performing weighted prediction using the weight information. The weight information may be reconfigured (additional information) on the basis of at least one of the weight and the height of the current block, quantization parameter information, and whether the current block is a luma block or a chroma block.

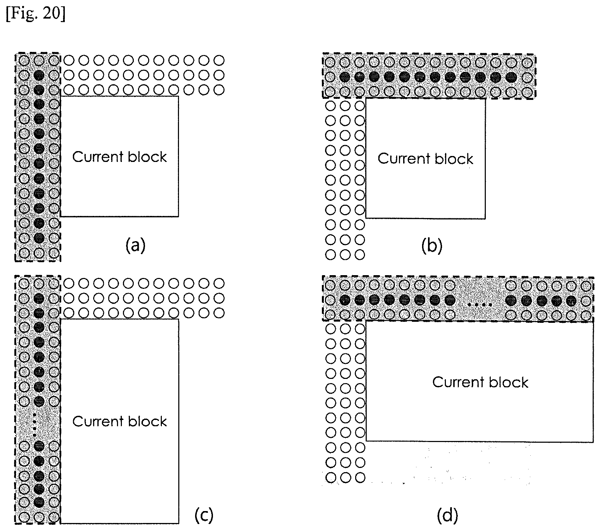

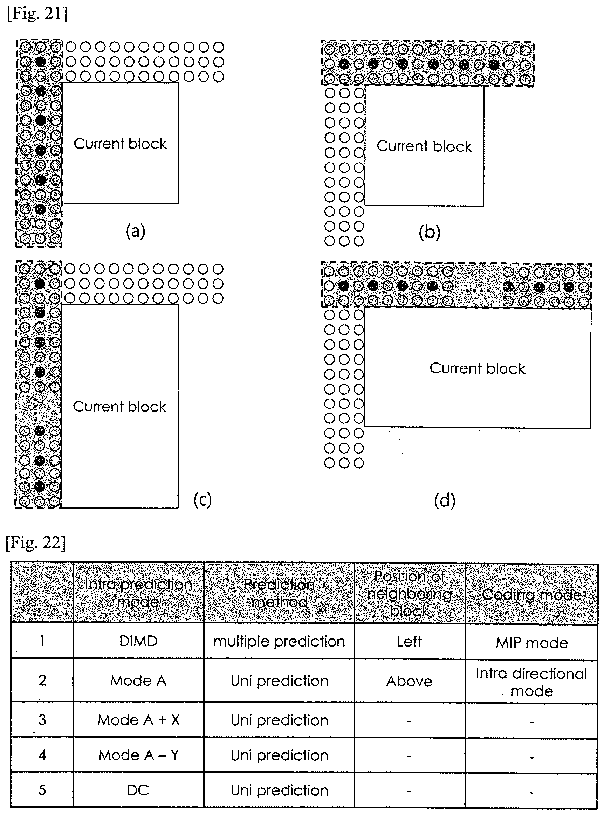

FIGS. 20 and 21 illustrate a pixel value of a neighboring block used when deriving an intra prediction directional mode according to an embodiment of the present disclosure.

FIGS. 20 and 21 illustrate a pixel value of a neighboring block used when deriving an intra prediction directional mode in the "histogram analysis" process of FIG. 14. A filtering calculation is required for all neighboring pixels located on the left and upper sides of the current block when deriving the intra prediction directional mode. In this case, the neighboring pixels may be pixels one a line adjacent to or spaced apart from the boundary of the current block. That is, the filtering calculation needs to be performed for all neighboring pixels on a line adjacent to or spaced apart from the left and upper boundary of the current block to derive the intra prediction directional mode, and thus there is a problem of delays which may be caused by the complexity in calculation. To solve the problem, the decoder may derive an intra prediction directional mode for neighboring pixels located on the left and upper sides in parallel by separating the filtering calculations for neighboring pixels located on the left and upper sides of the current block. In addition, the decoder may derive directional information by performing a filtering calculation only for the neighboring pixels corresponding to a predetermined location.

FIGS. 20(a) and 20(c) illustrate neighboring pixels located on the left side of a current block used for filtering calculation for deriving an intra prediction directional mode. FIGS. 20(b) and 20(d) illustrate neighboring pixels located on the upper side of a current block used for filtering calculation for deriving an intra prediction directional mode.

Intra directional information which can be mapped may vary according to the location of a reference pixel used to obtain the histogram described in FIG. 11 by the decoder.

For example, the width and the height of the current block may be identical. In this case, in FIG. 20(a), the intra prediction directional mode mapped when deriving directional information of the neighboring pixel located on the left side of the current block may only use indices -14 to 34. In FIG. 20(b), the intra prediction directional mode mapped when deriving directional information of the neighboring pixel located on the upper side of the current block may only use indices 34 to 80.

There may be a case where the width and the height of the current block are different, and the location of the neighboring pixel used when deriving the directional information may vary according to the width and the height of the current block. For example, when the height of current block is greater than the width, the decoder may derive directional information by using only the neighboring pixel located on the left side, without using the neighboring pixel located on the upper side of the current block. By only using the neighboring pixel located on the left side without using the neighboring pixel located on the upper side, the complexity in calculation can be reduced. When the width of the current block is greater than the height, the decoder may derive directional information by applying a larger weight to the neighboring pixel located on the upper side than the neighboring pixel located on the left side of the current block. A predetermined specific value may be used for the weight. For example, when the height of the current block is greater than the width, the weight of 1 may be used for the neighboring pixel located on the left side of the current block and the weight of 2 may be used for the neighboring pixel located on the upper side. In other words, the width of the current block is greater than the height, and thus it is more effective to derive the intra prediction directional mode by using directional information of the neighboring pixel located on the upper side rather than the neighboring pixel located on the left side of the current block.

The decoder may perform filtering calculation only for pixels corresponding to a specific number among the neighboring pixels located around the current block. In this case, the specific number may be a multiple of N, and N may be 2, 3, 4, etc. Information on N may include picture header information. Referring to FIG. 21, based on the position shifted by (-2, -2) along the x and y axes at the upper left end of the current block, the decoder may perform filtering calculation and derive directional information only at the position corresponding to a multiple of "2". In addition, the decoder may derive directional information when the current block is a luma block, and may not derive directional information when the current block is a chroma block. The decoder may apply directional information found in the luma block to the chroma block. The directional information of the luma block and the directional information of the chroma block may be obtained. The chroma block may not use the directional information found in the luma block, and may use information obtained by using at least one of the planar mode, the DC mode, the horizontal mode, the vertical mode, and the MIP mode.

There is a high possibility that the intra prediction directional mode of the current block is similar to the intra prediction directional mode of the neighboring block. Accordingly, in order to encode the intra prediction directional mode of the current block, a most probable mode (MPM) list is configured using the intra prediction directional mode of the neighboring block, and information on whether the intra prediction directional mode of the current block exists in the MPM list and information on the position at which the MPM list exists may be included in a bitstream. That is, the information on the intra prediction directional mode of the current block may not be separately included in the bitstream. Accordingly, the intra prediction directional mode of the current block is determined on the basis of the information on whether the intra prediction directional mode of the current block exists in the MPM list and the information on the position at which the MPM list exists, and thus information (i.e., a bit amount) for deriving the intra prediction directional mode of the current block may vary according to whether the MPM list is effectively configured.

A method of deriving the intra prediction directional mode by using the directional characteristics of the neighboring pixels of the current block may be also used in the process of configuring the MPM list. The decoder may add, to the MPM list, the intra prediction directional mode of the current block derived using the directional characteristics of the neighboring pixels of the current block, and use the same to encode the intra prediction directional mode of the current block. This may be used when the neighboring block of the current block is not encoded in the intra prediction mode or when there is no intra prediction direction mode such as a matrix intra prediction (MIP) mode.

In the neighboring blocks adjacent to the current block, a block in which there is no intra prediction directional mode and a block in which the intra prediction directional mode exists may be mixed. When the neighboring block located on the left side of the current block is a block having no intra prediction directional mode, the decoder may calculate directional characteristics by using only the neighboring pixels located on the upper side of the current block, and derive the intra prediction directional mode of the current block. Alternatively, when the intra prediction directional mode exists in the neighboring block located on the upper side of the current block and the intra prediction directional mode does not exist in the neighboring block located on the left side of the current block, the decoder may include, in the MPM list, the intra prediction directional mode of the neighboring block located on the upper side, and may include, in the MPM list, the intra prediction directional mode derived through the directional characteristics of the neighboring pixels located on the left side.

FIG. 22 illustrates a method of configuring an MPM list including an intra prediction directional mode of a current block according to an embodiment of the present disclosure.

Referring to FIG. 22, a DIMD mode may be first included in the MPM list. There may be multiple intra prediction directional modes of the current block derived through the DIMD mode. Accordingly, the decoder may obtain a prediction sample through multiple prediction. An intra prediction directional mode of a block in which an intra prediction directional mode exists among the neighboring blocks of the current block may be added to the MPM list. When there is an empty space in the MPM list, a mode obtained by modifying modeA by +1 or -1 may be added to the list, and a DC mode, a horizontal mode, a vertical mode, and an MIP mode may be added. Instead of the DIMD mode, a template-based intra mode derivation (TIMD) mode may be first included in the MPM list. In addition, both the DIMD mode and the TIMD mode may be included in the MPM list. In addition, at least one of two intra prediction directional modes derived using the DIMD mode and two intra prediction directional modes derived using the TIMD mode may be included in the MPM list. In addition, when an intra prediction directional mode is used for a first area among GPM blocks divided into two areas, the MPM list may be used to derive an intra prediction directional mode for the first area. At least one of the two intra prediction directional modes derived using the DIMD mode and the two intra prediction directional modes derived using the TIMD mode may be included in the MPM list.

When the DIMD mode is included in the MPM list, information on whether the current block is encoded in the DIMD mode may be derived through a syntax element (mpm_idx). Accordingly, additional information related to the DIMD may not need to be signaled. In this case, when the current block is encoded in the DIMD mode, a reference line index may be 0 (mrl_ref_idx is 0). In addition, when the DIMD mode is used, mrl_ref_idxm may not be parsed and a value of mrl_ref_idx may be inferred to be 0. In addition, an intra prediction directional mode derived using the DIMD mode may be included in the MPM list. When the intra prediction directional mode derived from the DIMD is selected, mrl_ref_idx may be reconfigured. For example, the value of mrl_ref_idx may be reconfigured as one of 0, 1, 2, .... The decoder may determine, based on the value of mrl_ref_idx obtained by parsing mrl_ref_idx, whether to add the intra prediction directional mode derived using the DIMD mode in the MPM list and a priority of the intra prediction directional mode derived using the DIMD mode in the MPM list. For example, when the value of mrl_ref_idx is not 0, the decoder may not include the intra prediction directional mode derived using the DIMD mode in the MPM list. Alternatively, only when the value of mrl_ref_idx is 0, the decoder may include the intra prediction directional mode derived using the DIMD mode in the MPM list. Alternatively, only when a reference pixel line determined from the value of mrl_ref_idx is 0, 1, 2, or 3, the decoder may include the intra prediction directional mode derived using the DIMD mode in the MPM list. Alternatively, when a reference pixel line determined from the value of mrl_ref_idx is greater than 3, the decoder may not include the intra prediction directional mode derived using the DIMD mode in the MPM list. Alternatively, when the value of mrl_ref_idx is not 0, the decoder may include the intra prediction directional mode derived using the DIMD mode in the MPM list.

The intra prediction directional mode derived using the DIMD mode may be used to rearrange intra prediction mode candidates in the MPM list. After configuring the MPM list from neighboring blocks of the current block, the decoder may derive the intra prediction directional mode by using the DIMD mode. The decoder may rearrange intra prediction mode candidates in the MPM list by using the derived intra prediction directional mode. In this case, the decoder may rearrange the MPM list by using at least one of the derived intra prediction directional mode, the width or the length of the current block, quantization parameter information, information on available intra prediction modes among neighboring blocks of the current block, information on whether a residual signal exists among neighboring blocks of the current block, and information on whether the current block is a luma block or a chroma block.

The decoder may rearrange the MPM list by using a difference between intra prediction mode candidates in the MPM list and derived intra prediction directional modes. For example, the decoder may calculate a different between the derived intra prediction directional mode an each of the intra prediction mode candidates in the MPM list so as to rearrange the MPM list in an ascending order of the difference (including 0). An intra prediction mode candidate having the smallest difference in the MPM list may be configured to have the smallest index value in the MPM list. In addition, the derived intra prediction directional mode may be configured to have the highest priority in the MPM list and may be configured to have the smallest index value. The decoder may calculate a difference between the derived intra prediction directional mode and each of the intra prediction mode candidates so as to arrange the MPM list after the derived intra prediction directional mode in an ascending order of the difference (including 0). In addition, when two MPM lists are used, the first MPM list may be configured in the order of intra prediction mode candidates similar to the derived intra prediction directional mode. The first MPM list may be configured in an ascending order of a difference between the derived intra prediction directional mode and each of the intra prediction mode candidates in the list. The second MPM may be configured using candidates that are not highly similar to the derived intra prediction directional mode. For example, the second MPM list may be configured in a descending order of the difference between the derived intra prediction directional mode and the intra prediction mode candidates in the MPM list. When the size of the MPM list is fixed, there may be an empty space in the MPM list. In this case, a new prediction candidate derived using one or more of the frequently occurring candidates or candidates already included in the MPM list may be added to the empty space. For example, the new prediction candidate may be a candidate corresponding to a number added to or subtracted by an arbitrary value in the "+" or "-" direction from a mode number (index) of the already included candidate. In this case, the arbitrary value may be a natural number such as "1", "2", "3", ..., and information on the arbitrary value may be included in picture header information. In addition, when two MPM lists are used, the first MPM list may be configured with prediction modes obtained by referring to a prediction mode of a neighboring block of the current block, and the second MPM list may be configured with prediction modes derived using the DIMD. In this case, when the number of prediction modes included in the MPM list is less than the number of prediction modes which can be included in the pre-defined MPM list, prediction modes derived by applying an offset to the prediction modes included in the MPM list may be added.

The intra prediction directional mode derived using the DIMD mode may be used to recombine intra prediction mode candidates in the MPM list. The decoder may configure the MPM list on the basis of a prediction mode of the neighboring blocks of the current block and then derive the intra prediction directional mode through the DIMD mode. The decoder may recombine intra prediction mode candidates in the MPM list by using the derived intra prediction directional mode and reconfigure multiple predictions. In this case, the decoder may recombine the MPM list by using at least one of the derived intra prediction directional mode, the width or the length of the current block, quantization parameter information, information on available intra prediction modes among the neighboring blocks of the current block, information on whether a residual signal of the neighboring block of the current block exists, and information on whether the current block is a luma block or a chroma block. Hereinafter, an MPM list recombination method is described.

The decoder may recombine the MPM list by using a difference between the derived intra prediction directional mode and the intra prediction mode candidates in the MPM list. For example, the decoder may select candidates having the difference equal to or smaller than an arbitrary value and may include, in the MPM list, multiple-prediction candidates configured by combining the derived intra prediction directional mode and the candidates (the existing intra prediction mode in the MPM list). In this case, the decoder may include the corresponding candidates in the MPM list in an ascending order of the difference. Next, the decoder may subsequently insert, into the MPM list, candidates having the difference greater than the arbitrary value. In this case, the arbitrary value may be a natural number such as 1, 2, 3, .... For example, it may be assumed that the index of the derived intra prediction mode is "18", the indices of the candidates in the MPM list are "16", "21", "34", "1", and "66", and the arbitrary value is 5. In this case, indices "16" and "21" having the difference within 5 from the derived intra prediction mode may be changed to multiple-prediction candidates, and the candidates in the MPM list may be changed to prediction modes having the indices "16, 18,", "21, 18", "34", "1", and "66". That is, indices "16, 18" and "21, 18" may be multiple-prediction candidates. For example, when the decoder selects "16, 18" corresponding to the multiple-prediction candidates in the MPM list, the decoder may generate a final prediction block by weighted-averaging prediction samples generated using the prediction mode of index 16 and prediction samples generated in the prediction using index 18. In this case, when the number of MPM lists is limited to 5, the MPM list may be "16, 18,", "21, 18,", "16", "21", and "34". In addition, when two MPM lists are used, the first MPM list may be configured with candidates recombined using candidates similar to the derived intra prediction directional mode. The second MPM list may be configured with candidates of the first MPM list and candidates that are not highly similar to the derived intra prediction directional mode. Accordingly, the first MPM list may be configured with multiple-prediction candidates, and the second MPM list may be configured with single-prediction candidates. Alternatively, the first MPM list may be configured to include both the single-prediction candidates and the multiple-prediction candidates, and the second MPM list may be configured with the single-prediction candidates only. For example, the derived intra prediction mode may be index "18", the prediction mode candidates in the first MPM list may be indices "16", "21", "34", "1", and "66", the prediction mode candidates in the second MPM list are indices "50", "2", "8", "30", and "40", and the arbitrary value may be 5. In this case, indices "16" and "21" having the difference within 5 from the derived intra prediction mode index 18 may be changed to the multiple-prediction candidates. In this case, the first MPM list may be configured with indices "16, 18", "21, 18", "16", "18", and "34", and the second MPM list may be configured with indices "1", "66", "50", "2", "8", "30", and "40".

The intra prediction directional mode may be encoded on the basis of whether the intra prediction directional mode exists in the MPM list and a position in the MPM list if the intra prediction directional mode exists in the MPM list. When the intra prediction directional mode does not exist in the MPM list, the intra prediction directional mode may be encoded on the basis of a value obtained by subtracting a total number of prediction modes in the MPM list from a total number of intra prediction directional modes. Specifically, a total of 67 intra prediction directional modes exist, and encoding may be performed for 61 modes remaining after excluding a total of 5 prediction modes in the MPM list and the planar mode. In this case, the 61 intra prediction directional modes may be encoded using fixed length coding, and a total of 6 bins need to be encoded.

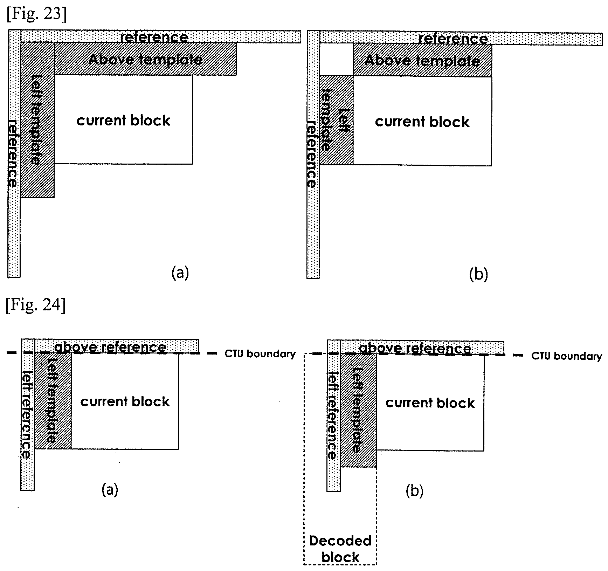

FIGS. 23 and 24 illustrate a template used to derive an intra prediction mode of a current block according to an embodiment of the present disclosure.

Referring to FIG. 23, a decoder may use a template corresponding to a reconstructed arbitrary area (pixels) adjacent to a current block to derive an intra prediction mode of the current block. First, the decoder may generate a prediction template for the template by using a neighboring pixel (reference) adjacent to the template. In addition, the decoder may use, for reconstruction of the current block, an intra prediction mode for a prediction template that is the most similar to the already reconstructed template. A method of deriving an intra prediction mode of the current block by using the template may be referred to as template intra mode derivation (TIMD). In this case, the intra prediction mode may correspond to a mode of indices 0 to 67, and may correspond to only an intra prediction mode in an MPM list derived from neighboring blocks of the current block. In this case, the intra prediction mode may correspond to an intra prediction mode in the MPM list derived from the neighboring blocks of the current block and modes having a difference from the intra prediction mode by an arbitrary number. The arbitrary number may be 1, 2, 3, .... Alternatively, the intra prediction mode for the template may correspond to a directional mode only, and may not correspond to a non-directional mode (planar mode or DC mode).

Hereinafter, a method of deriving an intra prediction directional mode by using a TIMD mode is described.

i) The decoder may configure the size of a template. The width or the height of the template may be 4, and when the width or the height of the current block is equal to or less than 8, the width or the height of the template may be configured to be 2. ii) The decoder may configure the type of a template. The type of the template may be divided into a type of using only a left sample, a type of using an upper sample, and a type of using both the left, upper, and upper-left samples. The decoder may determine the type of the template according to whether the neighboring block is valid of the neighboring block can be used to derive the intra prediction directional mode. When the neighboring block cannot be used to derive the intra prediction directional mode, the TIMD mode may be configured as the planar mode, and the weighted-averaging may not be performed. iii) The decoder may configure a template for the current block. iv) The decoder may derive an intra prediction directional mode for neighboring blocks positioned on the left, top, top-left, top-right, and bottom-left sides of the current block to determine whether the current block has the directionality. v) When none of the neighboring blocks of the current block have the directionality (e.g., in the case of the non-directional mode (DC mode, planar mode, MIP mode, etc.)), the decoder may select one intra prediction directional mode having the minimum cost and may not perform the TIMD mode. In this case, the weighted-averaging using several prediction blocks may not be performed. vi) When there are one or more blocks having the directionality among the neighboring blocks of the current block, a process below may be performed. The process below may be performed on the basis of intra prediction directional modes existing in the MPM list. This is because when all the 67 intra prediction directional modes are identified, the complexity may increase. a. The decoder may configure an MPM list. b. Next, when the DC mode, the horizontal mode, and the vertical mode do not exist in the MPM list, the decoder may modify the MPM list by adding the DC mode, the horizontal mode, and the vertical mode in the MPM list. c. The decoder may compare costs by performing evaluation of all intra prediction directional modes in the modified MPM list. The decoder may select a first mode having the smallest cost and a second mode having the second smallest cost. d. To increase the accuracy, the decoder may additionally perform evaluation of an intra prediction directional mode corresponding to an index 1 less or greater than the intra prediction directional mode index of the first mode and the intra prediction directional mode index of the second mode. The decoder may perform additional evaluation and select again a third mode having the smallest cost and a fourth mode having the second smallest cost. The first mode and the third mode may be identical to each other, and the second mode and the fourth mode. e. The decoder may determine whether to perform weighted-averaging on the basis of the costs of the third mode and the fourth mode. When a difference between the cost of the third mode and the cost of the fourth mode is smaller than a specific value, the decoder may perform weighted-averaging, and the weights of the third mode and the third mode may be determined on the basis of the costs of the third mode and the fourth mode. When a difference between the cost of the third mode and the cost of the fourth mode is greater than a specific value, the decoder may generate a prediction block by only using the third mode without performing the weighted-averaging. In this case, the specific value may be a predetermined value.

The size of the template may vary according to the width or the height of the current block. For example, as shown in FIG. 23(a), an above template greater than the width of the current block. In this case, the height of the above template may be a predetermined length. Similarly, a left template longer than the height of the current block may be configured. In this case, the width of the left template may be a predetermined length. The predetermined length may be 1, 2, 3, ....

When the current block is positioned at a CTU boundary (when any boundary of the top, bottom, left, and right of the current block is included in the CTU boundary), a reference pixel for deriving/predicting a template used for the TIMD mode may be changed. Referring to FIG. 24, when the top boundary of the current block is included in the CTU boundary, the number of refence lines positioned on the top of the current block used for template configuration may be one. This is to minimize line buffer memory usage. Accordingly, the decoder may perform a TIMD mode by configuring only the left template of the current block without configuring the above template of the current block. In this case, as the reference pixel for predicting the left template, an above reference and a left reference of the current block may be used. In this case, the height of the left template may be identical to the height of the current block as shown in FIG. 24(a). In addition, as shown in FIG. 24(b), the decoder may identify whether a block neighboring on the left side of the current block is an already reconstructed block, and in the case of the already reconstructed block, the height of the left template may be configured to be greater than the height of the current block.

In general, the accuracy of a prediction sample for the current block may be increased as more neighboring pixels adjacent to the current block are referred to. In the other hand, when more neighboring pixels are referred to, the required memory is increased. In addition, when there are blocks that have not been reconstructed yet among the neighboring blocks adjacent to the current block, the corresponding area cannot be used as a template. To increase the memory and effectively process the unreconstructed area, as shown in FIG. 23(b), the length of the above template may be configured to be identical to the width of the current block, and the length of the left template may be configured to be identical to the height of the current block.

The decoder may use an intra prediction mode derived using a template to obtain a prediction sample of the current block. The decoder may generate a prediction sample by using neighboring pixels adjacent to the current block, and may adaptively select a neighboring pixel to be used to generate the prediction sample. In addition, the decoder may use a multiple-reference line to generate the prediction sample, and in this case, index information of the multiple-reference line may be included in a bitstream.

For entropy-coding, a context for an index of the multiple-reference line for the TIMD mode may be newly defined. The increase of the context type may be related to the memory and the context switching complexity. Accordingly, the context used to coding and decoding the index of the multiple-reference line used in the TIMD mode may be reuse of the context for the index of the existing multiple-reference line.

The transform of the residual signal of the current block may be performed in two stages. First primary transform may be adaptively applying transform such as DCT-II, DST-VII, DCT-VIII, DCT5, DST4, DST1, and identity transformation (IDT) to the horizontal and vertical directions. Secondary transform may be additionally applied to transform coefficients obtained after completion of the primary transform, and the secondary transform may be calculated by the matrix multiplication between the primarily transformed transform coefficients and a pre-defined matrix. The secondary transform may be described as Low Frequency Non-Separable Transform (LFNST). A matrix transform set for the secondary transform may vary according to the intra prediction mode of the current block. The coefficient information of the transform matrix used for the secondary transform may be included in a bitstream.

When the secondary transform is applied to the current block to which the DIMD mode or the TIMD mode is applied, a transform set for the secondary transform may be determined on the basis of an intra prediction mode derived using the DIMD mode or the TIMD mode. The coefficient information of the transform matrix used for the secondary transform may be included in a bitstream. The decoder may parse coefficient information included in the bitstream and configure matrix coefficient information of the secondary transform for the DIMD mode or the TIMD mode. In this case, one of the two intra prediction modes derived from the TIMD mode may be used to select the primary transform or secondary transform set. The cost of the two intra prediction directional modes are compared, and an intra prediction directional mode having the smallest cost may be used to select the primary transform or secondary transform set. In addition, one of the two intra prediction directional modes derived from the DIMD may be used to select the primary transform or secondary transform set. The weights of the two intra prediction modes are compared, and an intra prediction directional mode having the highest weight may be used to select the primary transform or secondary transform set.

The TIMD mode is a mode in which a template of the current block is predicted and an intra prediction mode derived from the template is used to generate a prediction block of the current block, and thus the complexity is high. Accordingly, when generating a predication template for a template area, the decoder may not perform the existing reference sample filtering process. In addition, when an ISP mode is applied to the current block or when a CIIP mode is applied to the current block, the TIMD mode may not be applied. The ISP mode or the CIIP mode may not be applied to the current block to which the TIMD mode is applied, or a syntax related to the ISP or CIIP may not be parsed. In this case, a value of the unparsed ISP or CIIP-related syntax may be inferred as a pre-designated value.

The template prediction may be performed in divided areas of the left template area and the above template area adjacent to the current block, and an intra prediction mode may be derived for each template. In addition, two or more intra prediction modes may be derived for each template, and the number of intra prediction modes for the current block may be four or more. When there are two or more intra prediction modes, a prediction sample for the current block may be generated using all the derived intra prediction modes, and the decoder may generate a final prediction block for the current block by weighted-averaging the generated prediction samples. In this case, three or more of two or more intra prediction modes derived from the template prediction, the planar mode, the DC mode, and the MIP mode may be used to generate a prediction sample. For example, when generating (obtaining) a prediction sample for the current block, the decoder may generate a final prediction sample by weighted-averaging prediction samples generates using the planar mode and the intra prediction modes derived through the template prediction.

The prediction sample may be generated using the above-described methods also in the case where the CIIP mode is applied. The CIIP mode is a method of using both intra prediction and inter prediction when generating a prediction sample (block) for the current block. The prediction sample for the current block may be generated through weighted-averaging between the intra prediction sample and the inter prediction sample.

When the intra prediction sample is generated by applying the CIIP mode, the DIMD mode or the TIMD mode may be used. In this case, when the DIMD mode is used, the intra prediction sample may be generated on the basis of DIMD combination information. For example, the decoder may generate a first prediction sample by using an intra prediction mode having the largest weight and generate a second prediction sample by using an intra prediction mode having the second largest weight. In addition, the decoder may generate a final intra prediction block by weighted-averaging the first prediction sample and the second prediction sample. In this case, the decoder may generate a final intra prediction block by weighted-averaging a total of three prediction samples including a sample predicted using the planar mode among the neighboring blocks of the current block, the first prediction sample, and the second prediction sample. When the TIMD mode is used, the intra prediction sample may be generated on the basis of the TIMD combination information. For example, the decoder may generate two prediction samples by using two intra prediction modes. In addition, the decoder may generate a final intra prediction sample by weighted-averaging two prediction samples. In this case, the decoder may generate a final intra prediction sample by weighted-averaging two prediction samples and a sample predicted using the planar mode.

The accuracy of the intra prediction sample may vary according to the position. That is, a pixel farther from the neighboring pixel used for prediction in the prediction sample may include more residual signals than a pixel closer from the neighboring pixel. Accordingly, the decoder may segment the prediction sample in the vertical, horizontal, and diagonal directions according to the direction of the intra prediction mode, and may configure different weights according to the distance from the neighboring pixel used for prediction. This may be applied to an intra predict block generated using the CIIP mode or an intra prediction block generated using two or more intra prediction modes, and different weights may be configured to each pixel in the prediction block according to the distance between the position of a reference pixel and the position of the pixel in the prediction block. In an embodiment, when the intra prediction mode of the current block is a mode having the vertical direction or the direction similar to vertical, the closer the pixel position of the prediction block is to the top pixel, the higher weight may be configured, and the farther the pixel position is from the top pixel, the lower weight may be configured to each pixel position.

When the current block is encoded in the CIIP mode, the decoder may generate a final prediction block by weighted-averaging the intra prediction sample and the inter prediction sample. A pixel-unit weight in the inter prediction sample may be configured in consideration of a pixel-unit weight of the intra prediction sample. For example, the pixel-unit weight in the inter prediction sample may be a value obtained by subtracting the pixel-unit weight of the intra prediction sample from the sum of all weights. In this case, the sum of all weights may be a value obtained by summating the weight of the intra prediction sample and the weight of the inter prediction sample in units of pixels.

When two or more intra prediction modes are used to generate the prediction sample, the decoder may generate a prediction sample on the basis of each intra prediction mode, and may generate a final prediction sample by weighted-averaging the generated prediction samples. When generating the prediction sample for each intra prediction mode, the pixel-unit weight may be applied according to the intra prediction mode.

The pixel-unit weight may be configured on the basis of at least one of the intra prediction mode, the width or the height of the current block, a quantization parameter, information on whether the current block is a luma block or a chroma block, information on whether intra coding of the neighboring block is performed, and information on whether there are residual transform coefficients of the neighboring block.

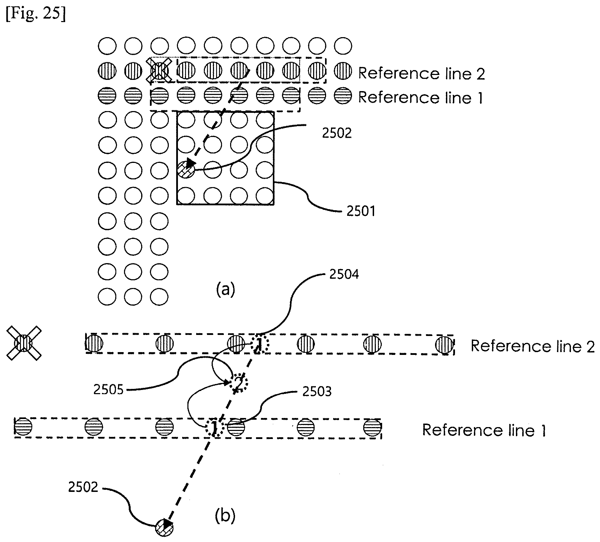

FIGS. 25 to 28 illustrate a method of generating a prediction sample (pixel) on the basis of multiple reference pixel lines according to an embodiment of the present disclosure.

Referring to FIG. 25(a), a video signal processing apparatus may generate a prediction 2502 in a current block on the basis of a first reference pixel line (reference line 1) adjacent to a current block 2501 and a second reference pixel line (reference line 2) adjacent to the top of the first reference pixel line. The prediction sample 2502 of FIG. 25(a) is just a sample corresponding to the position according to an embodiment of the present disclosure, and the position of the pixel is not limited thereto. In the present disclosure, the meaning that generation is performed by the video signal processing apparatus may be equivalent to the meaning that acquisition is performed by the video signal processing apparatus. FIG. 25(b) illustrates FIG. 25(a) in detail. For example, the video signal processing apparatus may generate a first prediction pixel 2053 by using a smoothing filter and a cubic or gaussian filter according to an intra prediction mode through six reference pixels of the first reference pixel line. In addition, the video signal processing apparatus may generate a second prediction pixel 2504 by using a smoothing filter and a cubic or gaussian filter according to an intra prediction mode through six reference pixels of the second reference pixel line. The video signal processing apparatus may generate a third prediction pixel 2505 by performing weighted-averaging through a predetermined weight for the generated first prediction pixel 2503 and second prediction pixel 2504. In this case, the six reference pixels of the second reference pixel line may be reference pixels at the positions moved by one pixel on the right from each pixel of the first reference pixel line in consideration of the intra prediction mode of the current block, the position of the pixel to be generated, the position of the reference pixel line, etc. The video signal processing apparatus may generate the prediction sample 2502 in the current block on the basis of the third prediction pixel 2505. Alternatively, the video signal processing apparatus may generate the third prediction pixel 2505 and the prediction sample 2502 in the current block on the basis of the distance between the third prediction pixel 2505 and the prediction sample 2502 in the current block. The weight used to generate the third prediction pixel 2505 by the video signal processing apparatus may be an integer equal to or greater than 0. For example, the weight of the first prediction pixel 2503 may be 3, and the weight of the second prediction pixel 2504 may be 1. In this case, the position (the positions of six reference pixels of the first reference pixel line and the positions of six reference pixels of the second reference pixel line of FIG. 25) of a reference pixel line used to generate a prediction sample may vary on the basis of at least one of the intra prediction mode of the current block, the position of a pixel to be generated (e.g., the position of the first prediction pixel 2503, the position of the second prediction pixel 2504, and the position of the third prediction pixel 2505 of FIG. 25), the position of the reference pixel line (e.g., the positions of the first reference pixel line and the second reference pixel line of FIG. 25), and the like.

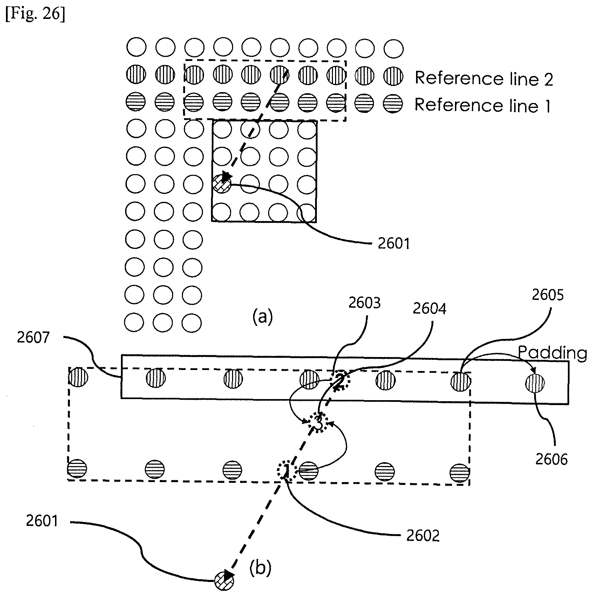

Referring to FIG. 26(a), the video signal processing apparatus may generate a prediction sample 2601 in a current block by using reference pixels at the same position in the same vertical direction of two reference pixel lines. That is, the positions of the respective six pixels of the first reference pixel line (reference line 1) and the respective six pixels of the second reference pixel line (reference line 2) used to generate the prediction sample in the current block may be identical in the vertical direction. The positions of the respective pixels may be determined regardless of the position of the reference pixel line. Referring to FIG. 26(b), the video signal processing apparatus may generate a first prediction pixel 2602 by using six pixels of a first reference line. The video signal processing apparatus may acquire a second prediction sample 2603 by using six pixels 2607 of a second reference line. In this case, when a sample of the second reference line identical to the first reference line in the vertical direction is used, a right pixel 2606 of the second reference line may not be used. Accordingly, the video signal processing apparatus may configure the right pixel 2606 of the second reference line by copying (padding) the pixel 2605, and then may use the right pixel 2606 of the second reference line to generate the second prediction pixel 2603. The video signal processing apparatus may acquire a third prediction pixel 2604 by using the first prediction pixel 2602 and the second prediction pixel 2603. The video signal processing apparatus may generate a prediction sample 2601 in the current block by using the third prediction pixel 2604. FIG. 26 differs from FIG. 25 only in the pixels of the first and second reference pixel lines used to generate the prediction sample in the current block, but the method for generating the prediction sample in the current block can be the same as in FIG. 25.

When configuring an MPM list, the video signal processing apparatus may include, in the MPM list, DIMD modes of deriving an intra prediction directional mode from reconstructed neighboring blocks adjacent to the current block. In this case, when there are two intra prediction directional modes derived using the DIMD mode, the video signal processing apparatus may include both intra prediction directional modes in the MPM list.

When the video signal processing apparatus generates (the method of FIGS. 25 and 26) a prediction sample for the current block by using multiple reference pixel lines, the DIMD mode included the MPM list does not use adjacent pixels of the current block, and the video signal processing apparatus may derive an intra prediction directional mode by performing the DIMD method at the pixel position indicated by the reference pixel line. The derived intra prediction directional mode may be included in the MPM list.

In addition, the video signal processing apparatus may derive the intra prediction directional mode by using the DIMD for each reference pixel line, and then may add the derived intra prediction directional mode in the MPM list. The reference pixel line may be a line positioned spaced apart from the left-top position of the current block by 1, 3, 5, 7, and 12 pixels. Alternatively, the reference pixel line may be a reference pixel line at the position adjacent to the top of the current block. In this case, the video signal processing apparatus may add, to the MPM list, an intra prediction directional mode derived using the DIMD for each reference pixel line. When the derived intra prediction directional modes are duplicated, the duplicated intra prediction directional modes may be excluded from the MPM list. The reference pixel lines in the present disclosure may be indexed. For example, the reference pixel line adjacent to the current block may be indexed and referred to as reference pixel line 0, and the reference pixel lines spaced apart from the current block by one pixel, two pixels, ..., and n pixels may be indexed and referred to as reference pixel line 1, reference pixel line 2, ..., and reference pixel line n, respectively.

For example, when the reference pixel lines of the current block are 1 and 3, the video signal processing apparatus may perform the DIMD by using reference pixel lines 0, 1, and 2 and derive the intra prediction directional mode. In addition, when the reference pixel lines of the current block are 5 and 7, the video signal processing apparatus may perform the DIMD by using reference pixel lines 5, 6, and 7 and derive the intra prediction directional mode. In addition, when the reference pixel line of the current block is 12, the video signal processing apparatus may perform the DIMD by using reference pixel lines 11, 12, and 13 and derive the intra prediction directional mode.

When the current block is encoded in the DIMD mode, the encoder may generate a bitstream by including information related to a reference pixel line to be used to derive the intra prediction directional mode, and perform signaling. The encoder may generate an intra prediction block by using the intra prediction directional mode derived from the DIMD and the reference pixel line for which the DIMD is performed. When the current block is decoded using the DIMD mode, the decoder may parse information related to the reference pixel line and then derive the intra prediction directional mode by using the reference pixel line corresponding to information related to the reference pixel line. The decoder may generate the intra prediction block by using the intra prediction directional mode derived from the DIMD and the reference pixel line information.

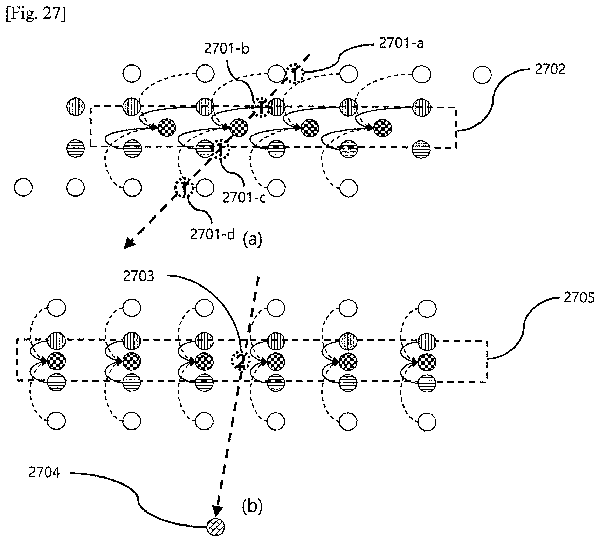

Referring to FIG. 27, the video signal processing apparatus may generate a new virtual reference pixel line by using multiple reference pixel lines, and generate a prediction sample in a current block on the basis of the new reference pixel line.

The circles in the same horizontal row in FIG. 27 may mean pixels positioned on the same reference pixel line. FIG. 27(a) illustrates that the position of a reference pixel used when generating a prediction sample by using at least one of an intra prediction mode of a current block, the position of a pixel to be generated, the position of a reference pixel line, etc. varies for each reference pixel line. The video signal processing apparatus may generate samples 2701-a to 2701-d at the "1" position for each reference pixel line by using a smoothing filter, a cubic filter, or a gaussian filter according to an intra prediction mode, and generate a new virtual reference pixel line 2702 by using samples at several "1" positions. To reduce the complexity, the samples at the "1" position may not be generated, and the new virtual reference pixel line 2702 may be generated using reference pixels in units of integers adjacent to the closest position to the "1" position. The video signal processing apparatus may generate a prediction sample in the current block by using the new virtual reference pixel line. Referring to FIG. 27(b), the video signal processing apparatus may use four reference pixels at the same position in the vertical direction to generate a new virtual reference pixel line 2705. That is, pixels for generating the new virtual reference pixel line 2705 may be pixels at the same position in the vertical direction as each of the six reference pixels of the first reference pixel line and each of the six reference pixels of the second reference pixel line. The video signal processing apparatus may acquire a first prediction pixel 2703 by using at least one of the new virtual reference pixel line and position, the intra prediction mode of the current block, the position of a pixel to be generated, and the like. The video signal processing apparatus may generate a prediction sample 2704 of the current block by using the first prediction pixel 2703.

The number of reference pixel lines used to generate a new virtual reference pixel line may be two or more. For example, two to five reference pixel lines may be used.

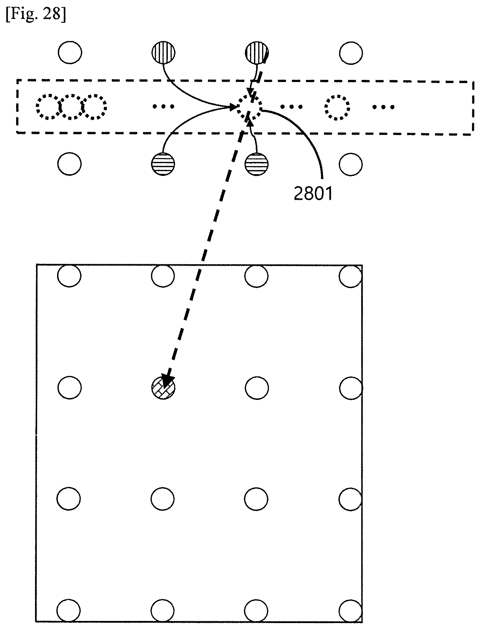

Referring to FIG. 28, the video signal processing apparatus may use four reference pixels close to the position of a new reference pixel 2801 to be generated to generate a new virtual reference pixel line. In this case, the new reference pixel position may be identical to the reference pixel line in the vertical direction. In addition, the position of the new reference pixel may be adjacent to the direction of the intra prediction mode of the current block.

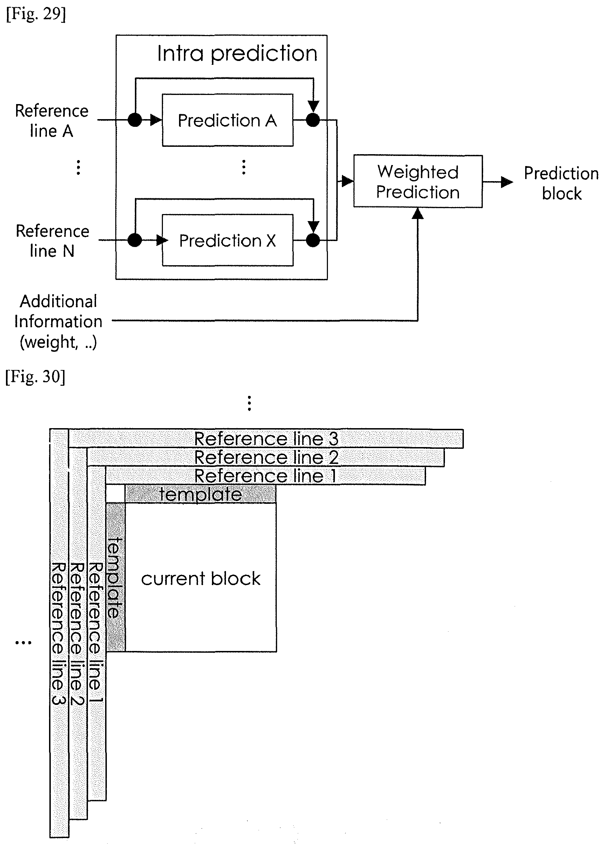

FIG. 29 illustrates a method of predicting a sample by using multiple reference pixel lines according to an embodiment of the present disclosure.

Referring to FIG. 29, the video signal processing apparatus may receive multiple reference pixel lines and generate a prediction block in a current block by performing intra prediction. According to a reference pixel line to be used, other prediction blocks may be generated, and the video signal processing apparatus may generate a final prediction block by performing weighted-averaging according to the weight input for each prediction block. In this case, the weight may be a pre-configured value. For example, the weight of a sample predicted as a main reference pixel line may be 3, and the weight of a sample predicted as a sub reference pixel line may be 1. In this case, the weight may be determined on the basis of at least one of the size of the current block, the width or the height of the current block, an intra prediction mode of the current block, quantization parameter information, the distance (or difference) between the main reference pixel line and the sub reference pixel line, and the like. In addition, the reference pixel line may be determined on the basis of at least one of the size of the current block, the width or the height of the current block, an intra prediction mode of the current block, quantization parameter information, MRL information, and the like. For example, the main reference pixel line may be a reference pixel line adjacent to the current block, and the sub reference pixel line may be a reference pixel line indicated by the MRL. As another example, the main reference pixel line may be a reference pixel line indicated by the MRL, the sub reference pixel line may be a reference pixel line spaced apart from the reference pixel line indicated by the MRL by a predetermined position, the predetermined position may be an integer in the range of -N and +N, and N may be an integer greater than 0.

The intra prediction mode used in the above-described method of generating the prediction sample in the current block may be identical for each reference pixel line. Alternatively, intra prediction mode used in the above-described method of generating the prediction sample in the current block may different for each reference pixel line. That is, the signaled intra prediction mode may be used in the main reference pixel line, and a prediction mode (corresponding to an index) obtained by adding to or subtracting from (the index of) the intra prediction mode used in the main reference pixel line by a predetermined value may be used in the sub reference pixel line. In this case, the predetermined value may be an integer equal to or greater than 1. In addition, the video signal processing apparatus may determine whether to increase or decrease the predetermined value according to a value of the intra prediction mode used in the main reference pixel line. For example, the video signal processing apparatus may increase the index by the predetermined value when the angle of the intra prediction mode is a negative value, and may decrease the index by the predetermined value when the angle of the intra prediction mode is a possible value.

FIG. 30 illustrates a method of determining a reference pixel line on the basis of a template according to an embodiment of the present disclosure.

Hereinafter, a method of determining an optimal reference pixel line for a current block (for reconstruction of a current block) on the basis of a template is described.

In the present disclosure, for convenience of description, a method of determining an optimal reference pixel line for a current block (for reconstruction of a current block) may be referred to as template-based multiple reference line intra prediction (TMRL).

Referring to FIG. 30, the video signal processing apparatus may configure a reference template by using a reference pixel line adjacent to the current block. The video signal processing apparatus may generate a prediction sample for the position of the reference template by using reference pixel lines 1, 2, 3, ... (reference lines 1, 2, 3, ...). The video signal processing apparatus may calculate a cost between the generated prediction sample and samples of the reference template. In this case, the cast may be calculated through a method of sum of absolute differences (SAD), mean-removed SAD (MRSAD), etc. A reference pixel corresponding to the minimum cost may be the optimal reference pixel. In addition, the encoder may rearrange the calculated costs in an ascending order, configure a list for the reference pixel line, then generate a bitstream including information on an index for the optimal reference pixel line, and perform signaling. The decoder may configure a list of reference pixel lines through the above-described method, and may parse the index for the optimal reference pixel line included in the bitstream, and may generate a prediction sample by using the reference pixel line indicated by the index.

In determining the optimal reference pixel line, the optimal reference pixel line is not used for all intra prediction modes but the optimal reference pixel line may be used only for an intra prediction mode included in the MPM list to reduce the complexity. That is, the encoder may configure a list of reference pixel lines in a combination of intra prediction modes included in the MPM list and the multiple reference pixel lines, and calculate a cost between a reference template and a prediction sample generated using each candidate in the list of reference pixel lines. In addition, the encoder may rearrange the list in an ascending order with reference to the costs, and may reconfigure the list by using a combination of only some low costs. The encoder may generate a bitstream including information on an index for the optimal combination information of combination information (arbitrary intra prediction modes and arbitrary reference pixel lines) in the reconfigured list, and perform signaling. The decoder may configure the same of reference pixel lines through the above-described method, and then may parse the index for the optimal combination information included in the bitstream and generate a prediction sample by using the optimal combination information indicated by the index.

When generating a prediction sample by using several reference pixel lines, difference weights may be applied to a prediction sample generated through each reference pixel line. In this case, to derive the optimal weight, a template-based method may be used. That is, the encoder may configure a list of reference pixel lines in a combination of intra prediction modes included in the MPM list, multiple reference pixel lines, and a weight (e.g., one of 3:1 and 2:2) for predicted samples as each reference pixel line, and may calculate a cost between the reference template and the prediction sample generated using each candidate in the list of reference pixel lines. The video signal processing apparatus may rearrange the MPM list in an ascending order with reference to the cost, and then may reconfigure the MPM list by using only a combination of some low costs. The encoder may generate a bitstream including information on the index for the optimal combination information among combination information (arbitrary intra prediction modes and arbitrary reference pixel lines) in the reconfigured list and a weight (e.g., one of 3:1 and 2:2) for predicted samples as each reference pixel line, and perform signaling. The decoder may configure the same list of reference pixel lines through the above-described method, and then may parse the index for the optimal combination information included in the bitstream and generate a prediction sample by using the optimal combination information indicated by the index.

With respect to the method of determining a reference pixel line on the basis of a template as described through FIG. 30, the reference pixel line adjacent to the current block may be used to configure the template. Accordingly, the reference pixel line determined on the basis of the template may be determined using a reference pixel line not adjacent to the current block. Hereinafter, a method of also using a reference pixel line adjacent to the current block to determine the reference pixel line on the basis of the template is described.

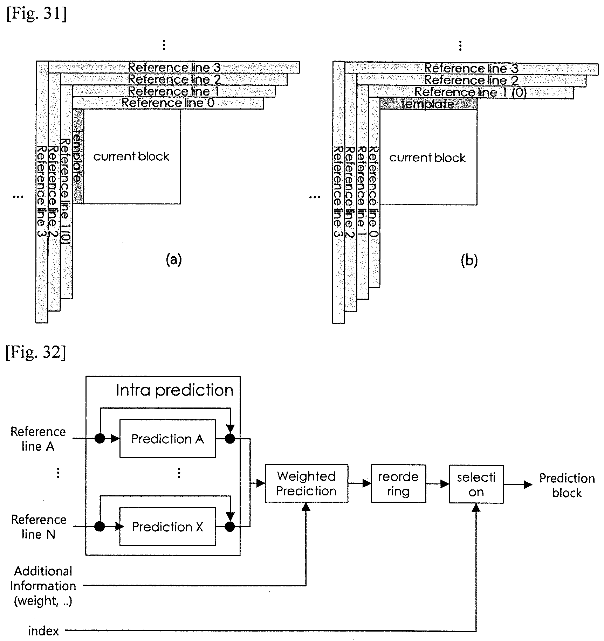

FIG. 31 illustrates a method of configuring a template for testing a reference pixel lien adjacent to a current block according to an embodiment of the present disclosure.

As illustrated in FIG. 31, when a reference template is configured, a reference pixel line adjacent to a current block may be also used to determine a reference pixel line on the basis of the template. Referring to FIG. 31(a), a reference template including only reference pixels adjacent to on the left side of the current block may be configured. The encoder may generate a prediction sample for the reference template by using at least one of reference pixel line 0 (reference line 0) above the current block and/or reference pixel line 1 (reference line 1) on the left of the current block, and calculate a cost between the reference template and a prediction sample. The encoder may generate a prediction sample for the reference template by using reference pixel lines 1, 2, 3, ... (reference lines 1, 2, 3, ...) and calculate the cost between the reference template and the prediction sample. FIG. 31(b) illustrates a case where a reference template includes only reference pixels adjacent to the top of the current block. Similarly, the encoder may generate a prediction sample for the reference template by using at least one of reference pixel line 0 (reference line 0) on the left of the current block and/or reference pixel line 1 (reference line 0) above the current block, and calculate a cost between the reference template and the prediction sample. The encoder may generate a prediction sample for the reference template by using reference pixel lines 1, 2, 3, ... (reference lines 1, 2, 3, ...) and calculate a cost between the reference template and the prediction sample.

The encoder may configure a list of reference pixel lines by rearranging the calculated costs in an ascending order, and then may generate a bitstream including information on the index of the optimal reference pixel line and perform signaling. The decoder may configure a list of reference pixel lines through the above-described method, and then may generate a prediction sample by using the optimal reference pixel determined by parsing information on the index of the optimal reference pixel line included in the bitstream.

FIG. 32 is a structure diagram illustrating a method of determining an optimal reference pixel line by using multiple reference pixel lines based on a template according to an embodiment of the present disclosure.

Referring to FIG. 32, the encoder may receive multiple reference pixel lines and perform intra prediction to generate prediction blocks for the template. According to a reference pixel line that is used, other prediction blocks may be generated. The encoder may perform weighted-averaging according to various pieces of weight information input to each of the prediction blocks, so as to finally generate a prediction block for the template. Multiple prediction blocks may be generated according to reference pixel lines that are used and a weight that is used. The encoder may calculate a cost between each prediction block and the reference template, rearrange the list in an ascending order on the basis of the costs corresponding to the respective prediction blocks, and configure a separate list by using only a predetermined number of top candidates. In this case, the predetermined number may be an integer equal to or greater than 2, and may be 10. The encoder may generate a prediction block for the current block through combination information used to generate a prediction block in the separate list. The encoder may select the optimal candidate from the list in terms of the image quality and bit amount, and then may generate a bitstream including information on the index for the optimal candidate, and perform signaling. The decoder may configure the same separate list through the above-described method, and may generate a prediction sample by using the optimal combination information indicated by the index of the optimal candidate determined by parsing information on the index of the optimal candidate included in the bitstream.

When the current block is encoded in the intra prediction mode, the encoded intra prediction mode may be one of an angular mode, a planar mode, a DC mode, and an MIP mode. The prediction according to the angular mode may be prediction performed according to 65 angles, and the prediction according to the MIP mode may be prediction performed on the basis of a pre-defined matrix. The angular mode may be effective in the block in which a characteristic such as an edge in the current block exists. However, when the current block has a flat characteristic, in a block predicted using the angular mode, discontinuous edges may be generated at the block boundaries or visible contours may be generated within the block. This may be a factor that reduces encoding efficiency. In addition, the DC mode may have a disadvantage of generating a visible edge at the block boundaries at a low bit rate. The planar mode may generate discontinuous prediction blocks by improving an edge problem which may be caused in the angular mode and the DC mode.

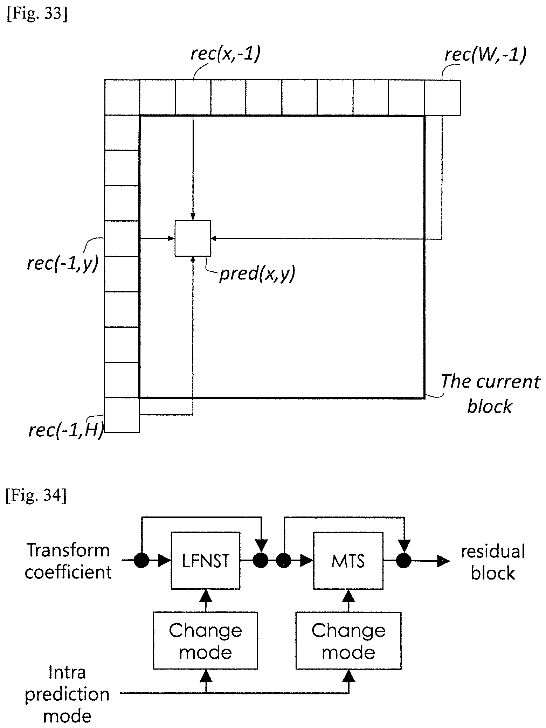

FIG. 33 illustrates a method of generating a prediction sample by using a planar mode according to an embodiment of the present disclosure.

Referring to FIG. 33, a video signal processing apparatus according to a planar mode may generate a linearly predicted value in the vertical direction and a linearly predicted value in the horizontal direction to generate a prediction sample in a current block. The video signal processing apparatus may generate a prediction sample (value) of the current block by weighted-averaging the linearly predicted value in the vertical direction and the linearly prediction value in the horizontal direction.

The linearly predicted value in the vertical direction (predV(x, y)) may be generated on the basis of Equation 4, and the linear prediction value in the horizontal direction (predH(x, y)) may be generated on the basis of Equation 5. A new predicted value (pred(x, y)) may be generated on the basis of Equation 6. W in Equations 4 to 6 may indicate the width of the current block, and H may indicate the height of the current block. rec(x, y) may mean a pixel value in (x, y,) coordinates. The predicted values (predV(x, y), predH(x, y), and pred(x, y)) may mean pixel values predicted in (x, y,) coordinates.

[Equation 4]
$$predV(x,y) = \big((H - 1 - y) * rec(x, -1) + (y + 1) * rec(-1, H)\big) \ll log_2 W$$

[Equation 5]
$$predH(x,y) = \big((W - 1 - x) * rec(-1, y) + (x + 1) * rec(W, -1)\big) \ll log_2 H$$

[Equation 6]
$$pred(x,y) = (predV(x,y) + predH(x,y) + W * H) \gg (log_2 W + log_2 H + 1)$$

The video signal processing apparatus may use only linear prediction in the vertical direction when performing prediction related to the current block according to the planar mode. Alternatively, the video signal processing apparatus may use only linear prediction in the horizontal direction when performing prediction related to the current block according to the planar mode. Accordingly, the planar mode may be divided into three modes. That is, in addition to the method of weighted-averaging a prediction block generated using the existing linear prediction in the vertical and horizontal directions, division may be made into a vertical planar mode using only the linear prediction in the vertical direction and a horizontal planar mode using only the linear prediction in the horizontal direction. The encoder may generate a bitstream including information on a prediction mode used for the current block among the three planar modes, and perform signaling. The decoder may generate a prediction block for the current block on the basis of the planar mode determined by parsing information on a used prediction mode included in the bitstream.

An explicit method of performing signaling by including information on a planar mode that is used in the bitstream may have a problem of increasing a bit amount. To save the bit amount, the decoder may implicitly derive a planar that is used, by using at least one of the size of the current block, the width or the height of the current block, a ratio between the width and the height of the current block, the number of pixels of the current block, information on whether the current block corresponds to a luma signal or a chroma signal, information on intra prediction directional modes of neighboring blocks adjacent to the current block, information on an MPM list for the current block, and information on intra prediction directional modes derived from the DIMD or the TIMD.

The vertical planar mode and the horizontal planar mode may be more effective when the shape of the current block is rectangular rather than square. Accordingly, the vertical planar mode and the horizontal planar mode may be applied (may be activated) only when the width and the height of the current block are different from each other. In other words, after comparing the width and the height of the current block, the encoder may generate a bitstream including planar mode selection information indicating whether the vertical planar mode is applied, whether the horizontal planar mode is applied, or the existing planar mode is applied only when the width and the height of the current block are different from each other, and may perform signaling. After comparing the width and the height of the current block, the decoder may parse planar mode selection information only when the width and the height of the current block are different. The conventional planar mode may be applied when the width and the height of the current block are identical to each other.

In the present disclosure, for convenience of description, information on a prediction mode used for the current block among three planar modes may be described as planar mode selection information.

The planar mode selection information may be signaled for each coding unit. However, when the planar mode selection information is signaled to corresponds to all coding units, the bit amount may be increased, and thus the encoder may generate a bitstream including the planar mode selection information and perform signaling only when a specific condition is satisfied. The decoder may determine an intra prediction directional mode for the current block by parsing the planar mode selection information when the specific condition is satisfied, and may generate a prediction block for the current block by using the determined intra prediction directional mode. In this case, the specific condition may be a condition related to the width and height of the current block, a ratio between the width and the height of the current block, information on whether an encoding mode of the current block is a DIMD, TIMD, IntraTMP, IBC, ISP, or MIP encoding mode when the intra prediction directional mode of the current block is a specific mode (e.g., a planar mode, a DC mode, a vertical mode, or a horizontal mode), and index information of a reference pixel line used when a prediction block for the current block is generated. Whether to perform encoding and decoding for the planar selection information may be determined according to at least one of specific conditions is satisfied. Specifically, the specific conditions may include 1) a case where the intra prediction directional mode of the current block is a planar mode (i.e., a case where an index of the intra prediction directional mode is 0), 2) a case where the width and the height of the current block are equal to or less than the maximum transform block size and a product of the width and the height of the current block is greater than a product of the minimum transform block size and the minimum transform block size, and 3) a case where the width and the height of the current block are different from each other. In this case, the minimum transmission block size may be an integer, and may be 4, 8, etc., and the maximum transform block size may be an integer, and may be 64, 128, 256, etc. When at least one of the above-described specific conditions 1) to 3), the encoder may generate a bitstream including the planar mode selection information and perform signaling, and the decoder may determine the intra prediction directional mode for the current block by parsing the planar mode selection information.

When the current block is a chroma component block, the vertical planar mode and the horizontal planar mode are not applied and the existing planar mode may be applied. That is, when the current block is a chroma component block, the video signal processing apparatus may generate a prediction block by using the existing planar mode. Accordingly, when the current block is a chroma component block, the video signal processing apparatus may neither signal nor parse the planar mode selection information. Even though the current block is a chroma component block, the vertical planar mode or the horizontal planar mode may be applied like the case of the luma component block. For example, when the vertical planar mode is applied to the current block, the decoder may generate a prediction block for the luma component block and the chroma component block of the current block by using the vertical planar mode for the luma component block and the chroma component block of the current block.

When the width of the current block is greater than the height, the number of pixels adjacent to the left of the current block is greater than the number of pixels adjacent to the top of the current block, the decoder may generate a prediction block for the current block by using the vertical planar mode. When the height of the current block is greater than the width, the number of pixels adjacent to the top of the current block is greater than the number of pixels adjacent to the left of the current block, the decoder may generate a prediction block for the current block by using the horizontal planar mode. When the width and the height of the current block are identical, the decoder may generate a prediction block for the current block by using the existing planar mode. The planar mode is implicitly determined according to the width and the height of the current block, and thus the encoder does not need to generate a bitstream including the planar mode selection information. The decoder may generate a prediction block of the current block according to the planar mode determined according to the width and the height of the current block.

The vertical planar mode and the horizontal planar mode may not be applied in the ISP mode. When the current block is encoded in the ISP mode and the current block is encoded in the planar mode, the encoder may not signal the planar mode selection information (i.e., the planar mode selection information may not be included in the bitstream). When the current block is encoded in the ISP mode and the current block is encoded in the planar mode, the decoder may not parse the planar mode selection information. On the other hand, the vertical planar mode and the horizontal planar mode may be applied in the ISP mode. When the current block is encoded in the ISP mode and the current block is encoded in the planar mode, the encoder may generate a bitstream including the planar mode selection information and perform signaling. When the current block is encoded in the ISP mode and the current block is encoded in the planar mode, the decoder may generate a prediction block for the current block by using the planar mode determined by parsing the planar mode selection information.

The video signal processing apparatus may substitute the horizontal mode (angular mode 18 of FIG. 6) among the conventional intra prediction directional modes with the horizontal planar mode. In addition, the video signal processing apparatus may substitute the vertical mode (angular mode 50 of FIG. 6) among the conventional intra prediction directional modes with the vertical planar mode. In other words, the video signal processing apparatus may use the horizontal planar mode and the vertical planar mode instead of the horizontal mode (angular mode 18 of FIG. 6) and the vertical mode (angular mode 50 of FIG. 6) among the conventional intra prediction directional modes. In this case, only when the width and the height of the current block are different each other, the video signal processing apparatus may substitute the horizontal mode (angular mode 18 of FIG. 6) and the vertical mode (angular mode 50 of FIG. 6) among the conventional intra prediction directional modes with the horizontal planar mode and the vertical planar mode and use the same.

The vertical planar mode and the horizontal planar mode may be more effective for a smaller block. Accordingly, the video signal processing apparatus may apply the vertical planar mode and the horizontal planar mode only when the current block is smaller than a predetermined size. In this case, the predetermined size corresponding to the width or the height may be 16 or 32. That is, the video signal processing apparatus may apply the vertical planar mode and the horizontal planar mode to the current block when the width or the height of the current block is equal to or smaller than 32. Alternatively, the video signal processing apparatus may not apply the vertical planar mode and the horizontal planar mode to the current block when any one of the width and the height of the current block is greater than 32. For example, when any one of the width and the height of the current block is greater than 32, the encoder may not include planar mode selection information in the bitstream. When the encoding mode of the current block is a planar mode and any one of the width and the height of the current block is greater than 32, the decoder may not parse the planar mode selection information and may perform prediction of the current block by using the conventional planar mode.

The DIMD and TIMD modes are modes of generating a prediction block by weighted-averaging blocks predicted from various intra prediction modes. In this case, a block predicted using the planar mode may be used for the DIMD and TIMD modes. When the video signal processing apparatus generates a block predicted using the planar mode used in the DIMD and TIMD modes, any one of the vertical planar mode, the horizontal planar mode, and the conventional planar mode may be used. The planar mode selection information may be included in the bitstream and signaled. The decoder may parse the planar mode selection information and determine a mode to be used among three planar modes. For example, when the planar mode selection information indicates the vertical planar mode, the prediction block used for the DIMD and TIMD modes may be a block predicted using the vertical planar mode.

The MIP mode may be a mode effective for a complex area. In order to improve the encoding performance of the MIP mode, a multiple prediction-based MIP mode may be used. That is, the multiple prediction-based MIP mode is a method of generating a final prediction block for the current block by weighted-averaging a prediction block generated using the MIP mode and a prediction block generated on the basis of the intra prediction directional mode. The encoder may generate a bitstream including both encoding information for the MIP mode and encoding information for the intra prediction directional mode and perform signaling. The decoder may parse both the encoding information for the MIP mode and the encoding information for the intra prediction directional mode, generate a prediction block to which the MIP mode is applied and a prediction block to which the intra prediction directional mode is applied, and then generate a final prediction block for the current block by weighted-averaging the two prediction blocks.

The MIP mode may be adaptively performed in units of blocks. The encoder may generate a bitstream including information on whether the multiple prediction-based MIP mode is used and perform signaling. When generating the prediction block for the current block by parsing the information on whether the multiple prediction-based MIP mode is used, the decoder may determine whether the multiple prediction-based MIP mode is used or a single prediction-based MIP mode is used. The single prediction-based MIP mode is a method for generating a prediction block by using the MIP mode only.

To reduce the complexity and the signaled encoding information, when the intra prediction mode of the current block is the MIP mode, the encoder may additionally include, in the bitstream, information on whether the multiple prediction-based MIP mode is used, and perform signaling. When the multiple prediction-based MIP mode is used, the encoder may additionally include, in the bitstream, information on the intra prediction directional mode, and perform signaling. When the intra prediction mode of the current block is the MIP mode, the decoder may additionally parse information on whether the multiple prediction-based MIP mode is used, and may additionally parse information on the intra prediction directional mode when the multiple prediction-based MIP mode is used.

When the intra prediction directional mode is additionally signaled, the bit amount is increased and thus the compression efficiency can be reduced. When the multiple prediction-based MIP mode is used for the current block, only a predetermined intra prediction directional mode may be used. In this case, the predetermined intra prediction directional mode may be one of MPM lists, and the encoder may include, the bitstream, index information of the intra prediction directional mode to be used in the multiple prediction-based MIP mode among the MPM list, and perform signaling. When the multiple prediction-based MIP mode is used for the current block, the decoder may parse index information to determine an intra prediction directional mode to be used in the multiple prediction-based MIP mode among the MPM list.

When the multiple prediction-based MIP mode is used for the current block, the vertical planar mode, the horizontal planar mode, and the conventional planar mode may be used to generate a prediction block based on the intra prediction directional mode. That is, the encoder may generate a bitstream including the planar mode selection information and perform signaling. When the multiple prediction-based MIP mode is used, the decoder may parse the planar mode selection information to determine the intra prediction directional mode to be used in the multiple prediction-based MIP mode.

When the multiple prediction-based MIP mode is used for the current block, the video signal processing apparatus may determine a planar mode to be used among three planar modes by using the intra prediction directional mode of the DIMD derived from neighboring pixels of the current block. For example, when the multiple prediction-based MIP mode is used for the current block, the video signal processing apparatus may apply the horizontal planar mode to the current block in order to generate the intra prediction directional mode-based prediction block when the DIMD (or TIMD) mode of the current block is smaller than 34. Alternatively, when the DIMD (or TIMD) mode of the current block is equal to or greater than 34, the vertical planar mode may be applied to the current block to generate the intra prediction directional mode-based prediction block.

When the planar mode is used for the current block, the video signal processing apparatus may use the vertical planar mode and the horizontal planar mode to generate a prediction block for each mode, and generate a final prediction block by applying the weight to each prediction block. In this case, the weights of the respective prediction blocks may be identical to or different from each other according to the intra prediction directional mode of the DIMD derived from neighboring pixels of the current block. When the intra prediction directional mode of the DIMD derived from the neighboring pixels of the current block is equal to or greater than a predetermined value, the largest weight may be applied to a block predicted using the vertical planar mode. For example, the weight for the block predicted using the vertical planar mode may be 3, and the weight for the block predicted using the horizontal planar mode may be 1. When the intra prediction directional mode of the DIMD derived from the neighboring pixels of the current block is less than a predetermined value, the largest weight may be applied to the block predicted using the horizontal planar mode. For example, the weight for the block predicted using the horizontal planar mode may be 3, and the weight for the block predicted using the vertical planar mode may be 1. The predetermined value is an integer, and may be 34 (angular mode 34 of FIG. 6). The DIMD information derived from the neighboring pixels of the current block may include the first intra prediction directional mode, the second intra prediction directional mode, and information on whether to perform weighted prediction. When the weighted prediction is not performed among the DIMD information of the neighboring pixels of the current block, the video signal processing apparatus may generate a prediction block by applying the same weight.

When the prediction block of the current block is generated using the CIIP mode, the prediction block of the current block may be generated by weighted-averaging the prediction block (intra prediction block) for which the intra prediction mode is used and the prediction block (inter prediction block) for which the inter prediction mode is used. In this case, when the intra prediction directional mode used to generate the intra prediction block is the planar mode in the CIIP mode, the encoder may generate a bitstream including the planar mode selection information and perform signaling. When the CIIP mode is used and the planar mode is used, the decoder may parse the planar mode selection information to determine the intra prediction mode used to generate the intra prediction block.

When the current block is predicted using the intra prediction mode, the continuity of pixel values at the boundary between the current block and the neighboring block may be disrupted. To solve the problem of discontinuity, position dependent intra prediction combination (PDPC) filtering may be applied to the generated prediction block. When the vertical planar mode is used and the prediction block of the current block is generated, planar mode-based PDPC filtering may not be performed and horizontal angular mode (e.g., angular mode 18 of FIG. 6)-based PDPC filtering may be performed. Alternatively, when the vertical planar mode is used and the prediction block of the current block is generated, the planar mode-based PDPC filtering may not be performed, and the vertical angular mode (e.g., angular mode 50 of FIG. 60)-based PDPC filtering may be performed. In addition, when the horizontal planar mode is used and the prediction block of the current block is generated, the planar mode-based PDPC filtering may not be performed and the vertical angular mode (e.g., angular mode 50 of FIG. 6)-based PDPC filtering may be performed. In addition, when the horizontal planar mode is used and the prediction block of the current block is generated, the planar mode-based PDPC filtering may not be performed and the horizontal angular mode (e.g., angular mode 18 of FIG. 6)-based PDPC filtering may be performed. The meaning of predicting a current block in the present disclosure may be identical to the meaning of generating a prediction block of the current block.

Referring to FIG. 33 and Equation 4, when the prediction block of the current block is generated by using the vertical planar mode, the prediction block for the current block may be generated on the basis of the pixel value at a fixed position, rec(-1, H), and the pixel value at rec(x, -1), which dynamically changes according to the x-axis coordinate. Similarly, referring to FIG. 32 and Equation 5, when the prediction block of the current block is generated by using the horizontal planar mode, the prediction block for the current block may be generated on the basis of the pixel value at a fixed position, rec(W, -1), and the pixel value at rec(-1, y), which dynamically changes according to the y-axis coordinate. That is, the prediction block may be generated so that the continuity of pixel values at the boundary between the neighboring blocks, and thus when the prediction block of the current block is generated using the vertical planar mode or the horizontal planar mode, PDPC may not be performed.

The above-described PDPC filtering for the planar mode may also be applied when the current block is encoded in the CIIP mode.

When neighboring blocks adjacent to the current block are predicted using the vertical planar mode or the horizontal planar mode in a case where the video signal processing apparatus configures the MPM list for the current block, the video signal processing apparatus may configure the intra prediction directional mode of the neighboring blocks as a planar mode and include the same in the MPM list. Alternatively, when neighboring blocks adjacent to the current block are predicted using the vertical planar mode or the horizontal planar mode in a case where the video signal processing apparatus configures the MPM list for the current block, the video signal processing apparatus may configure the intra prediction directional mode of the neighboring blocks as a DC mode and include the same in the MPM list. Alternatively, when neighboring blocks adjacent to the current block are predicted using the horizontal planar mode in a case where the video signal processing apparatus configures the MPM list for the current block, the video signal processing apparatus may configure the intra prediction directional mode of the neighboring blocks as a horizontal angular mode (angular mode 18 of FIG. 6) and include the same in the MPM list. Alternatively, when neighboring blocks adjacent to the current block are predicted using the vertical planar mode in a case where the video signal processing apparatus configures the MPM list for the current block, the video signal processing apparatus may configure the intra prediction directional mode of the neighboring blocks as a vertical angular mode (angular mode 50 of FIG. 6) and include the same in the MPM list. On the other hand, the horizontal planar mode may have vertical characteristics, and thus when neighboring blocks adjacent to the current block are predicted using the horizontal planar mode in a case where the video signal processing apparatus configures the MPM list for the current block, the video signal processing apparatus may configure the intra prediction directional mode of the neighboring blocks as a vertical angular mode (angular mode 50 of FIG. 6) and include the same in the MPM list. Alternatively, when neighboring blocks adjacent to the current block are predicted using the vertical planar mode in a case where the video signal processing apparatus configures the MPM list for the current block, the video signal processing apparatus may configure the intra prediction directional mode of the neighboring blocks as a horizontal angular mode (angular mode 18 of FIG. 6) and include the same in the MPM list.

The vertical planar mode and the horizontal planar mode proposed in the present disclosure may not be signaled as a predetermined specific mode, and may be included in any one of the intra prediction directional modes and signaled. Referring to FIG. 6, a total number of intra prediction directional modes is 67, mode 0 (planar mode) and mode 1 (DC mode) among the 67 modes are non-directional modes, and nodes 2 to 66 are directional modes (angular modes). The intra prediction directional modes may be expanded by including the newly defined vertical planar mode and the horizonal-direction planar mode. For example, in the conventional intra prediction directional mode, mode 2 may be configured as a vertical planar mode and mode 3 may be configured as a horizontal planar mode. That is, mode 0 (planar mode), mode 1 (DC mode), mode 2 (vertical planar mode), and mode 3 (horizontal planar mode) are non-directional modes, and modes 4 to 68 may be configured as directional modes like the conventional modes 2 to 66.

FIG. 34 illustrates a method of deriving a Multiple Transform Set and an LFNST set for a vertical planar mode or a horizontal planar mode according to an embodiment of the present disclosure.

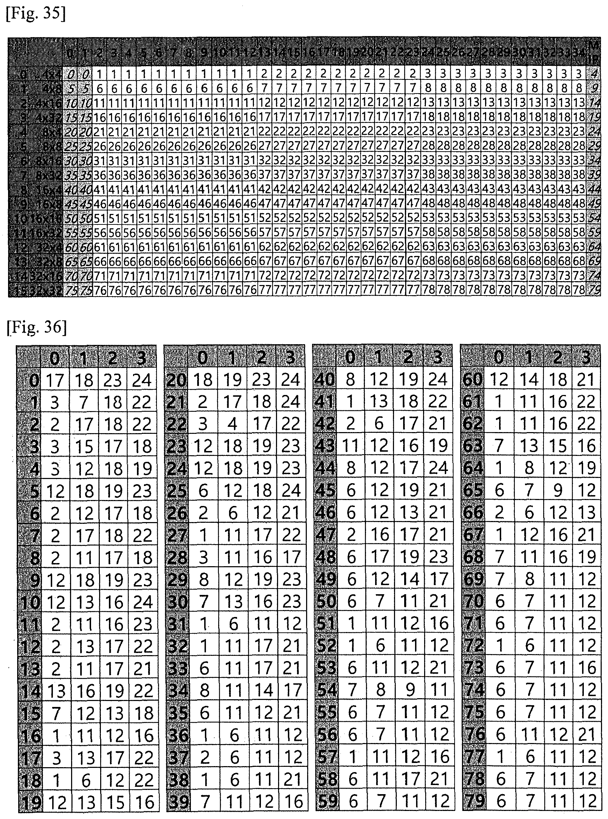

FIG. 35 illustrates a mapping table according to an embodiment of the present disclosure.

FIG. 36 illustrates a transform type set table according to an embodiment of the present disclosure.

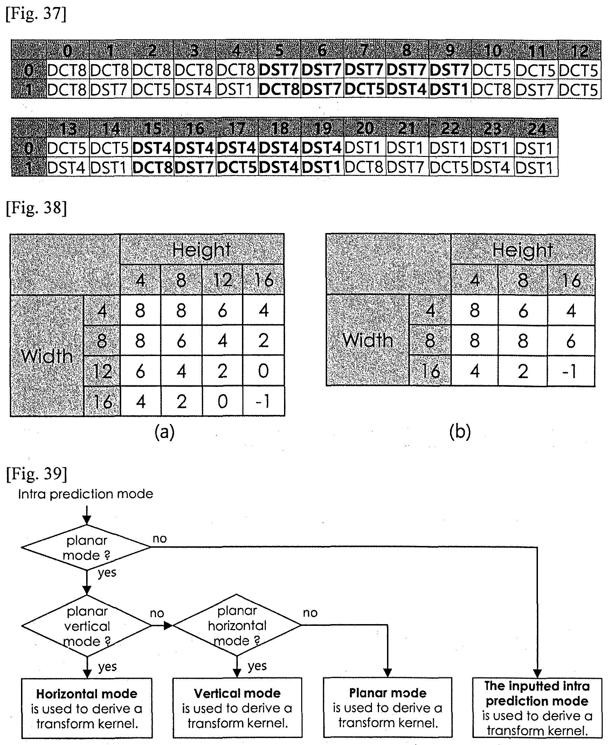

FIG. 37 illustrates a transform type combination table according to an embodiment of the present disclosure.

FIG. 38 illustrates a threshold value table for an IDT transform type according to an embodiment of the present disclosure.

When a vertical planar mode is used and a prediction block of a current block is generated, the characteristics of an error (residual) signal (block) may be similar to the characteristics of an error signal of a vertical angular mode (angular mode 50 of FIG. 6). A Multiple Transform Set (MTS) applied to the error signal may vary on the basis of an intra prediction directional mode of the current block. That is, when a vertical planar mode is used and a prediction block of a current block is generated, the encoder may perform a primary transform process based on the MTS by using a set of transform matrices of the vertical angular mode (angular mode 50 of FIG. 6) without using a set of transform matrices of the planar mode for the error signal. Alternatively, the encoder may perform primary transform by using a predetermined transform set regardless of the MTS. In addition, the encoder may use the MPS or the predetermined transform set to perform secondary transform through the LFNST for the primarily transform coefficients. The transform matrix used for performing the LFNST may vary according to the intra prediction directional mode. That is, when the vertical planar mode is used and the prediction block of the current block is generated, the encoder may perform a transform process by using a set of secondary LFNST transform matrices of the vertical angular mode (angular mode 50 of FIG. 60) without using a set of secondary LFSNT transform matrices of the planar mode for the error signal. When the horizontal planar mode is used and the prediction block of the current block is generated, the encoder may derive a primary or secondary transform matrix (or a set of matrices, a matrix set, or a kernel set) by using the horizontal angular mode (angular mode 18 of FIG. 6) rather than the planar mode. When the vertical planar mode is used and the prediction block of the current block is generated, the decoder may perform a transform process by using a set of primary LFNST transform matrices of the vertical angular mode (angular mode 50 of FIG. 6) without using the set of primary LFNST transform matrices of the planar mode for the error signal. In addition, the vertical planar mode is used and the prediction block of the current block is generated, the decoder may perform a secondary transform process based on the MTS by using a set of transform matrices of the vertical angular mode (angular mode 50 of FIG. 6) without using a set of transform matrices of the planar mode for the error signal. In the present disclosure, the encoder may perform secondary transform after performing primary transform in the encoding processing process, which correspond to primary transform and secondary transform in the decoding processing process of the decoder, respectively. That is, the primary transform performed by the encoder corresponds to the secondary transform (inverse transform of the primary transform performed by the encoder) performed by the decoder, and the secondary primary corresponds to the primary transform (inverse transform of the secondary transform performed by the encoder) performed by the decoder.

Referring to FIG. 33 and Equation 4, when the vertical planar mode is used and the prediction block of the current block is generated, the prediction block may be generated on the basis of a pixel value at a fixed position, rec(-1, H), and a pixel value at rec(x, -1), which dynamically changes according to the x-axis coordinate. That is, when the vertical planar mode is used, a change of the pixel value occurs in the x axis, and thus the characteristics of the error signal may be similar to the characteristics of the error signal of the horizontal angular mode (angular mode 50 of FIG. 60). The MTS applied to the error signal may vary on the basis of the intra prediction directional mode of the current block. That is, when the vertical planar mode is used and the prediction block of the current block is generated, the encoder may perform a primary transform process based on the MTS by using a set of transform matrices of the horizontal angular mode (angular mode 18 of FIG. 6) without using a set of transform matrices of the planar mode for the error signal. Alternatively, the encoder may perform primary transform by using a predetermined transform set regardless of the MTS. In addition, the encoder may perform secondary primary through the LFNST for the primarily transformed transform coefficients by using the MTS or the predetermined transform set. The transform matrix used for performing the LFNST may vary according to the intra prediction directional mode. That is, when the vertical planar mode is used and the prediction block of the current block is generated, the encoder may perform a transform process by using a set of secondary LFNST transform matrices of the horizontal angular mode (angular mode 18 of FIG. 6) without using a set of secondary LFNST transform matrices of the planar mode for the error signal. When the horizontal planar mode is used and the prediction block of the current block is generated, the encoder may derive a primary or secondary transform matrix (or a set of matrices, a matrix set, or a kernel set) by using the vertical angular mode (e.g., angular mode 50 of FIG. 6) rather than the planar mode. When the vertical planar mode is used and the prediction block of the current block is generated, the decoder may perform a transform process by using a set of primary LFNST transform matrices of the horizontal angular mode (angular mode 18 of FIG. 6) without using a set of primary LFNST transform matrices of the planar mode for the error signal. In addition, when the vertical planar mode is used and the prediction block of the current block is generated, the decoder may perform a secondary transform process based on the MTS by using a set of transform matrices of the horizontal angular mode (angular mode 18 of FIG. 6) without using a set of transform matrices of the planar mode for the error signal. When the horizontal planar mode is used and the prediction block of the current block is generated, the encoder may derive a primary or secondary transform matrix (or a set of matrices, a matrix set, or a kernel set) by using the vertical angular mode (angular mode 50 of FIG. 6) rather than the planar mode. When the horizontal planar mode is used and the prediction block of the current block is generated, the decoder may perform a transform process by using a set of primary LFNST transform matrices of the vertical angular mode (angular mode 50 of FIG. 6) without using a set of primary LFNST transform matrices of the planar mode for the error signal. In addition, when the horizontal planar mode is used and the prediction block of the current block is generated, the decoder may perform a secondary transform process based on the MTS by using a set of transform matrices of the vertical angular mode (angular mode 50 of FIG. 6) without using a set of transform matrices of the planar mode for the error signal.

A method of selecting an MTS available for a current block by a video signal processing apparatus when the vertical planar mode, the horizontal planar mode, and the conventional planar mode are used and the prediction block of the current block is generated is described.

1) First, in order to map the width and the height of the current block into a single variable, the video signal processing apparatus may derive nSzIdxW and nSzIdxH values on the basis of the size of the current block. nSzIdxW may be a minimum value between 3 and a value obtained by calculating a log base 2 value of the width of the current block, truncating the decimal places, and subtracting 2 therefrom. nSzIdxH may be a minimum value between 2 and a value obtained by calculating a log base 2 value of the height of the current block, truncating the decimal places, and subtracting 2 therefrom.

2) Next, the video signal processing apparatus may derive an intra directional mode (predMode) of the current block. In a case of the TIMD mode, 131 intra prediction modes extended from the existing 67 intra prediction modes may be used, reducing the precision to the existing 67 modes.

3) Next, the video signal processing apparatus may derive ucMode, nMdIdx, and isTrTransposed values.

A. When the current block is encoded in the MIP mode, ucMode may be configured as "0", nMdIdx may be configured as "35", and isTrTransposed may be configured as a value derived from the MIP.

B. When the current block is not encoded in the MIP mode, ucMode may be configured as an intra directional mode (predMode) of the current block. predMode may mean an index value of the intra directional mode. predMode may be determined through an extended angular mode according to a ratio between the width and the height of the current block. The video signal processing apparatus may clip predMode to a range of values between 2 and 66. When the vertical planar mode is used and the prediction block of the current block is generated, the video signal processing apparatus may reconfigure predMode as the horizontal prediction mode (angular mode 18 of FIG. 6). When the horizontal planar mode is used and the prediction block of the current block is generated, the video signal processing apparatus may reconfigure predMode as the vertical prediction mode (angular mode 50 of FIG. 6). When predMode is greater than angular mode 34 corresponding to a diagonal mode, the isTrTransposed value may be configured as 1, and when predMode is equal to or less than 34, the isTrTransposed value may be configured as 0. When predMode is greater than 34, the video signal processing apparatus may reconfigure a value of predMode as a value obtained by adding 1 to 67 (the maximum value of the intra direction mode index) and subtracting the value of predMode therefrom. For example, when predMode is 35, the video signal processing apparatus may reconfigure angular mode 35 as angular mode 33 (67+1-35 (predMode). When predMode is 66, the video signal processing apparatus may reconfigure angular mode 66 as angular mode 2 (67+1-66 (predMode). That is, by ensuring symmetry with respect to angular mode 34 corresponding to the diagonal mode, the size of the transform mapping table in FIG. 35 can be effectively reduced by approximately half.

4) The video signal processing apparatus may derive the nSzIdx value through the nSzIdxW, nSzIdxH, and isTrTransposed values. When the isTrTransposed value is "1", a value obtained by multiplying nSzIdxH by 4 and adding nSzIdxW thereto may be configured as nSzIdx. When the isTrTransposed value is "0", a value obtained by multiplying nSzIdxW by 4 and adding nSzIdxH thereto may be configured as nSzIdx.

5) The video signal processing apparatus may derive nTrSet corresponding to the index of an available transform type set according to a pre-defined table inf FIG. 35 by using nSzIdx corresponding to size information of the current block and nMdIdx corresponding to intra directional mode information of the current block. FIG. 35 defines the index of the transform type set according to intra directional mode (0 to 34 and MIP) of the current block and size indices (0 to 15) of the current block. Referring to FIG. 35, nTrSet may be 80, and when the size of the current block is 4x8 and the intra directional mode of the current block is 13, nTrSet may be "7".

6) The video signal processing apparatus may parse mts_idx included in the bitstream to derive a transform type set corresponding to nTrSet from the table of FIG. 36. The vertical and horizontal transform types are differently configured according to whether predMode has a value greater than angular mode 34 corresponding to the diagonal mode. In FIG. 36, numbers 0 to 79 on the gray-shaded vertical column may correspond to nTrSet, and numbers 0 to 3 on the gray-shaded horizontal row may correspond to mts_idx. Referring to FIG. 36, when nTrSet is 7 and the value of mts_idx is 3, 22 may be selected from among (2, 17, 18, 22). In addition, DST1 and DCT5 corresponding to index 22 of the transform type combination table of FIG. 37 may be selected, the vertical transform type of the current block may be configured as DST1, and the horizontal transform type may be configured as DCT5. In FIG. 37, numbers 0 to 24 on the grey-shaded horizontal row may mean indices selected through FIG. 36, and numbers 0 and 1 on the grey-shaded vertical column may mean the vertical transform type and the horizontal transform type, respectively. When the intra prediction directional mode of the current block is greater than 34 corresponding to the diagonal mode, the vertical and horizontal transform types are swapped with each other.

When the value of mts_idx is "3" and both the width and the height of the current block is equal to or less than 16, the vertical or horizontal transform type may be reconfigured as an IDT transform type through the process below.

When an absolute difference between the index of the intra prediction directional mode of the current block and 18 corresponding to the index of the horizontal mode is smaller than a predetermined value, the vertical transform type may be reconfigured as an IDT transform type. When an absolute difference between the index of the intra prediction directional mode of the current block and 50 corresponding to the index of the horizontal mode is smaller than a predetermined value, the horizontal transform type may be reconfigured as an IDT transform type. In this case, the predetermined value is an integer, and may be determined on the basis of the width or the height of the current block. For example, the predetermined value may be determined through the table of FIG. 38. The table in FIG. 38(a) illustrates a case where threshold values are configured differently whenever the width or the height differs by 4, and the table in FIG. 38(b) illustrates a case where threshold values are configured differently whenever the width or the height differs by a factor of 2. When the size of the current block is 16x16, the vertical transform type is not reconfigured as an IDT transform type, and the existing transform type may remain the same.

FIG. 39 illustrates a method of deriving a primary or secondary transform matrix by a video signal processing apparatus according to an embodiment of the present disclosure.

Specifically, FIG. 39 is a flow chart illustrating a method of deriving a primary or secondary transform matrix (a set of matrices, a matrix set, or a kernel set) by the video signal processing apparatus when a current block is predicted using a vertical planar mode, a horizontal planar mode, and the conventional planar mode.

Referring to FIG. 39, the video signal processing apparatus may receive an intra prediction directional mode (intra prediction mode) and identify whether a prediction mode of the current block is a planar mode. When the prediction mode is not the planar mode, the video signal processing apparatus may derive the primary or secondary transform matrix (the set of matrices, the matrix set, or the kernel set) on the basis of the input intra prediction directional mode. When the prediction mode is the planar mode, the video signal processing apparatus may identify whether the prediction mode is a vertical planar mode. When the prediction mode is the vertical planar mode, the video signal processing apparatus may derive the primary or secondary transform matrix (the set of matrices, the matrix set, or the kernel set) on the basis of a horizontal angular mode (angular mode 18 of FIG. 6). When the prediction mode is not the vertical planar mode, the video signal processing apparatus may identify whether the prediction mode is a horizontal planar mode. When the prediction mode is the horizontal planar mode, the video signal processing apparatus may derive the primary or secondary transform matrix (the set of matrices, the matrix set, or the kernel set) on the basis of a vertical angular mode (angular mode 50 of FIG. 6). When the prediction mode is not the horizontal planar mode, the video signal processing apparatus may derive the primary or secondary transform matrix (the set of matrices, the matrix set, or the kernel set) on the basis of the conventional planar mode.

When one of the vertical planar mode, the horizontal planar mode, and the conventional planar mode is used and a prediction block of the current block is generated, the video signal processing apparatus may derive the primary or secondary transform matrix (the set of matrices, the matrix set, or the kernel set) by using a DIMD method. In other words, when one of the vertical planar mode, the horizontal planar mode and the conventional planar mode and the prediction block of the current block is generated, the video signal processing apparatus may perform a primary transform process based on an MTS by using a set of transform matrices. In addition, when one of the vertical planar mode, the horizontal planar mode and the conventional planar mode and the prediction block of the current block is generated, the video signal processing apparatus may perform a secondary transform process based on LFNST by using a set of transform matrices of the intra prediction directional mode derived using the DIMD method. DIMD information derived from neighboring pixels of the current block may include the first intra prediction direction mode, the second intra prediction directional mode, and information on whether to perform weighted prediction. When the weighted prediction is not applied among the DIMD information from the neighboring pixels of the current block, the encoder and the decoder may derive the primary or secondary transform matrix (or the set of matrices, the matrix set, or the kernel set) by using the existing planar prediction mode.

The planar mode may be effective for a smooth area, and thus in order to reduce the complexity, the encoder may implicitly apply a DCT2 transform method without performing the primary transform process based on the MTS. When the current block is predicted using the planar mode, the decoder may apply the DCT2 transform method. When the current block is predicted using the conventional planar mode, the video signal processing apparatus may implicitly apply the DCT2 transform method without performing the primary transform process based on the MTS. When the current block is predicted using the vertical planar mode or the horizontal planar mode, the video signal processing apparatus may apply the primary transform process based on the MTS. When the current block is predicted using the vertical planar mode or the horizontal planar mode, the video signal processing apparatus may implicitly apply the DCT2 transform method without applying the primary transform process based on the MTS. When the current block is predicted using the conventional planar mode, the video signal processing apparatus may apply the primary transform process based on the MTS. In addition, in the method described above, when the size of the current block is a predetermined size, a DST7 transform method rather than the DCT2 transform method may be applied. In this case, the predetermined size may be a case where the width or the height of the current block is equal to or greater than 4 or is equal to or less than 16. For example, When the current block is predicted on the basis of the vertical planar mode or the horizontal planar mode, the width of the current block is 32, and the height is 16, the video signal processing apparatus may apply DCT2 for horizontal transformation and may apply DST7 for vertical transformation.

Similar to the planar mode, a DC mode may be divided into three prediction modes. Specifically, the DC mode may be divided into a mode according to the average of top pixels of the current block, a mode according to the average of left pixels of the current block, and a mode according to the average of the top and left pixels of the current block. When the width of the current block is greater than the height, the video signal processing apparatus may generate a prediction block of the current block by using an average value between the top pixels of the current block. When the height of the current block is greater than the width, the video signal processing apparatus may generate a prediction block of the current block by using the average value between the left pixels of the current block. When the width and the height of the current block are identical, the video signal processing apparatus may generate a prediction block of the current block by using the average value between the top and left pixels. The encoder may generate a bitstream including information (DC mode selection information) on a mode used when predicting the current block among the three DC modes, and perform signaling. The decoder may generate a prediction block for the current block on the basis of a mode determined by parsing the DC mode selection information. When the prediction mode of the current block is the DC mode, the encoder may generate a bitstream including information on a mode used for encoding, and performs signaling. When the prediction mode of the current block is the DC mode, the decoder may determine a final DC mode for the current block by parsing the DC mode selection information. For example, when the current block is predicted using the DC mode of using the average of the left pixels, the encoder may signal information indicating that the current block is the DC mode, and may signal, using an additional flag bit, information indicating that the current block is predicted through the DC mode using the average of the left pixels. When the current block is the DC mode, the decoder may determine a mode applied to the current block by parsing the additional flag bit.

The three DC prediction modes may not be used in an ISP mode. When the current block is encoded in the ISP mode and the current block is encoded in the DC mode, the encoder may not signal a flag bit indicating whether the current block corresponds to the DC mode using the average of the left pixels and the DC mode using the average of the top pixels. When the current block is the ISP mode and the current block is the DC mode, the decoder may not parse the flag bit indicating whether the current block corresponds to the DC mode using the average of the left pixels or the DC mode using the average of the top pixels.

When the three DC prediction mode may be used in the ISP mode. When the current block is encoded in the ISP mode and the current block is encoded in the DC mode, the encoder may signal a flag bit indicating a prediction mode of the current block among the three DC prediction modes and include the same in the bitstream. When the current block is the ISP mode and the current block is the DC mode, the decoder may parse the flag bit to configure a final DC mode for the current block.

Whether to apply the three DC prediction modes may be determined on the basis of a color component of the current block. When the current block is a luma component block, the three DC prediction modes may be used. Alternatively, when the current block is a chroma block, only a DC prediction mode of using the average of the top and left pixels among the three DC prediction modes may be used. Accordingly, when the current block is a chroma component block and the DC mode is applied, the encoder may not include, in the bitstream, a flag bit indicating a DC mode to be used among the three DC modes. When the current block is the chroma component block and the DC mode is not applied, the decoder may not parse the flag bit indicating the DC mode to be used among the three DC modes, and may configure the DC mode of the current block as a DC prediction mode of using the average of the top and left pixels.

When the ISP mode is applied, the current block may be divided in the horizontal direction and may be divided in the vertical direction. One block may be divided into two or four blocks according to the width or the height of the current block. When the three planar modes or the three DC modes are used in the encoded block in the ISP mode, a prediction mode may be determined according to the form of dividing the block. When the current block is encoded in the ISP mode and the division form according to the ISP mode is horizontal division, the horizontal planar mode among the three planar modes may be used. When the current block is encoded in the ISP mode and the division form according to the ISP mode is horizontal division, the vertical planar modes among the three planar modes may be used. When the current block is encoded in the ISP mode and the division form according to the ISP mode is horizontal division, a mode using the average of the left pixels among the three DC modes may be used. When the current block is encoded in the ISP mode and the division form according to the ISP mode is horizontal division, a mode using the average of the top pixels among the three DC modes may be used.

The ISP mode division form may be determined on the basis of the intra prediction directional mode derived from the DIMD or the intra prediction directional mode derived from the TIMD. When the DIMD (or TIMD) mode of the current block is less than 34, the ISP division form of the current block may be horizontal direction division. When the DIMD (or TIMD) mode of the current block is equal to or greater than 34, the ISP division form of the current block may be vertical direction division. Conversely, when the DIMD (or TIMD) mode of the current block is smaller than 34, the ISP division form of the current block may be vertical direction division. When the DIMD (or TIMD) mode of the current block is equal to or greater than 34, the ISP division form of the current block may be horizontal direction division. When the division form of the ISP mode is determined on the basis of the intra prediction directional mode derived from the DIDM (or TIMD), the division from is implicitly determined, thus the encoder may not include information on the ISP division form in the bitstream, and the decoder may not parse the information on the ISP division form.

The video signal processing apparatus may generate a prediction block for each mode by using all the three DC modes, and generate a final prediction block through weighted-averaging by applying the same weight or different weights for each prediction block. In this case, when the width of the current block is greater than the height, the largest weight may be applied to a block predicted using the average of top pixels. In addition, when the width of the current block is smaller than the height, the largest weight may be applied to a block predicted using the average of left pixels. Alternatively, when the DIMD intra prediction directional mode derived from neighboring pixels of the current block has a value equal to or greater than a predetermined value, the largest weight may be applied to a block predicted using the average of top pixels. When the DIMD intra prediction directional mode derived from neighboring pixels of the current block is smaller than a predetermined value, the largest weight may be applied to a block predicted using the average of left pixels. Here, the predetermined value may be an integer, and may be 34 corresponding to an index of a diagonal mode (angular mode 34 of FIG. 6). The DIMD information derived from the neighboring pixels of the current block may include the first intra prediction directional mode, the second intra prediction directional mode, and information on whether to perform weighted prediction. When the weighted prediction is not applied among the DIMD information derived from the neighboring pixels of the current block, the largest weight may be applied to a block predicted using the average of all the top and left pixels.

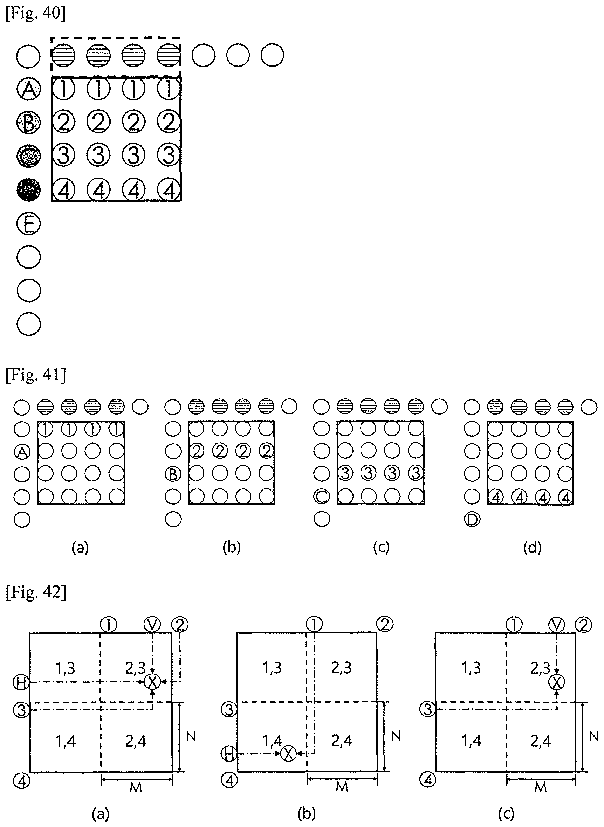

FIG. 40 illustrates a DC prediction method in units of vertical or horizontal lines according to an embodiment of the present disclosure.

A DC mode is a prediction method of generating a prediction block of a current block by using only one average value, and all pixels in the prediction block have the same value. To improve the prediction efficiency using the DC mode in blocks having gradual variations, the video signal processing apparatus may generate a prediction block such that the average value changes according to the vertical or horizontal position within the block, and this is referred to as a gradient-based DC prediction mode. Referring to FIG. 40, when a prediction block for the current block is generated using the DC mode in the horizontal direction, the video signal processing apparatus may calculate the average value of pixels (e.g., the hatched pixels of FIG. 40) adjacent to the top of the current block, and then generate a prediction sample by applying the average value to pixels (e.g., pixels indicated as 1 in FIG. 40) corresponding to the first horizontal line. Next, the average value may be recalculated according to the gradient between a reference pixel (A) positioned at the top and a reference pixel (B) in the next horizontal line among pixels adjacent to the left side of the current block. The video signal processing apparatus may generate a prediction sample by applying the recalculated average value to the second horizontal line (e.g., pixels indicated as 2 in FIG. 40) of the current block. A method of recalculating the average value for the second horizontal line may be calculation through an interpolation method using the distance (L) between the reference pixel (A) and the reference pixel (B), the distance (M) between the reference pixel (A) and the reference pixel (E), and a difference (X) between values of the reference pixel (A) and a pixel (E) positioned at (-1, -1) with reference to the bottom-left position of the current block. For example, the average value may be recalculated by adding, to the average value, a product of X and a value obtained by dividing L by M. The same calculation may be performed for the next horizontal line and a prediction sample for the current block may be generated. That is, the prediction block of the current block may be generated such that the average value for each horizontal (or vertical) line changes according to the gradient of reference pixels adjacent to the left side (or the top) of the current block. Pixel values of the respective horizontal (or vertical)-direction samples are configured to be identical to each other, and a prediction block of the current block may be generated such that one or more of the vertical (or horizontal) pixel values change. In addition, the line-unit DC prediction mode may be divided into a DC prediction mode in units of lines in the vertical direction and a DC prediction mode in units of lines in the horizontal direction. When the width of the current block is greater than the height, the number of pixels adjacent to the top of the current block is greater, the prediction block for the current block may be generated using the DC prediction mode in units of lines in the vertical direction. Alternatively, when the width and the height of the current block are identical to each other, the prediction block for the current block may be generated using the conventional DC prediction mode.

FIG. 41 illustrates a planar prediction method in units of vertical or horizontal lines according to an embodiment of the present disclosure.

Referring to FIGS. 41(a) to (d), when the current block is predicted using the horizontal planar mode, the position of a used reference pixel may vary for each horizonal line. Specifically, the first horizontal line (pixels indicated as 1 in FIG. 41(a)) of the current block may be predicted using pixel A and pixels (e.g., the hatched pixels in FIG. 41) adjacent to the top of the current block. The second horizontal line (pixels indicated as 2 in FIG. 41(a)) of the current block may be predicted using pixel B and pixels (e.g., the hatched pixels in FIG. 41) adjacent to the top of the current block. In addition, the line-unit planar prediction mode may be divided into a vertical planar mode, a horizontal planar mode, and a mode obtained by weighted-averaging the prediction blocks in the vertical and horizontal directions. When the width of the current block is greater than the height, the number of pixels adjacent to the top of the current block is greater, and thus the video signal processing apparatus may be generate a prediction block for the current block by using the vertical planar mode. When the height of the current block is greater than the width, the number of pixels adjacent to the left of the current block, the video signal processing apparatus may generate a prediction block of the current block by using the horizontal planar mode. When the width and the height of the current block are identical to each other, the video signal processing apparatus may generate a prediction block of the current block by using the conventional planar mode.

FIG. 42 illustrates a prediction method in units of subblocks by using a planar mode according to an embodiment of the present disclosure.

After dividing the current block into a predetermined size (MxN)-sized subblocks, the video signal processing apparatus may perform prediction in units of subblocks by using the planar mode. Referring to FIGS. 42(a) to (c), the position (1, 2, 3, or 4 of FIG. 42) of a reference pixel for prediction may vary for each subblock. Specifically, referring to FIG. 42(a), the current block may be divided into (MXN)-sized four subblocks. The position of the reference pixel may be determined on the basis of the top-left position of the current subblock and/or the width and the height of the current subblock. In FIG. 42(a), the position of the reference pixel of the top-left subblock may be 1 or 3, the position of the reference pixel of the top-right subblock may be 2 or 3, the position of the reference pixel of the bottom-left subblock may be 1 or 4, and the position of the reference pixel of the bottom-right subblock may be 2 or 4. For example, when the planar mode is used to generate a prediction block for the top-right subblock of FIG. 42(a), the video signal processing apparatus may generate a prediction value for a pixel indicated as "X" by weighted-averaging a value generated using reference pixel 3 and a value of pixel V and a value generated using reference pixel 2 and a value of pixel H. FIG. 42(b) illustrates prediction of a horizontal planar mode in units of subblocks. For example, when a horizontal planar mode is used to generate a prediction block for the bottom-left subblock of FIG. 42(b), the video signal processing apparatus may generate a prediction value for a pixel indicated as "X" by weighted-averaging a value of pixel H and a value generated using reference pixel 1. FIG. 42(c) illustrates prediction of a vertical planar mode in units of subblocks. For example, when the vertical planar mode is used to generate a prediction block for the top-right subblock of FIG. 42(c), the video signal processing apparatus may generate a prediction value for a pixel indicated as "X" by weighted-averaging a value generated using reference pixel 3 and a value of pixel V.

The video signal processing apparatus may determine a planar mode to be applied to each subblock among the horizonal-directional planar mode, the vertical planar mode, and the conventional planar mode on the basis of at least one of the width or the height of the current block, a ratio between the width and the height of the current block, information on whether the current block is a luma component block or a chroma component block, quantization parameter information, information on an intra prediction directional mode of neighboring blocks of the current block, the position of a subblock, and information on an intra prediction directional mode derived using the DIMD from neighboring pixels of the current block.

When the intra prediction directional mode derived using the DIMD from neighboring pixels of the current block has a value equal to or greater than a predetermined value, the video signal processing apparatus may generate a prediction block of the subblock by applying the vertical planar mode. When the intra prediction directional mode derived using the DIMD from neighboring pixels of the current block has a value smaller than a predetermined value, the video signal processing apparatus may generate a prediction block of the subblock by applying the horizontal planar mode. In this case, the predetermined value may be an integer, and may be 34 corresponding to an index of a diagonal mode (angular mode 34 of FIG. 6). The DIMD information derived from the neighboring pixels of the current block may include the first intra prediction directional mode, the second intra prediction directional mode, and information on whether to perform weighted-averaging. When the DIMD information derived from the neighboring pixels of the current block indicates that the weighted prediction is not performed, the video signal processing apparatus may generate a prediction block of each subblock by using the conventional planar mode.

A planar mode to be used to generated a prediction block of each subblock may be determined on the basis of the position of each subblock. The video signal processing apparatus may generate a prediction block of the top-left subblock by using the conventional planar mode, may generate a prediction block of the top-right subblock by using the vertical planar mode, may generate a prediction block of the bottom-left subblock by using the horizontal planar mode, and may generate a prediction block of the bottom-right subblock by using the conventional planar mode.

The planar mode prediction method in units of subblocks may be applied only when the vertical or horizontal planar mode is applied to the current block. In other words, when the conventional planar mode is applied to the current block, the video signal processing apparatus may generate a prediction block of the current block by using the conventional planar mode. When the vertical or horizontal planar mode is used for the current block, the video signal processing apparatus may divide the current block into subblocks, and generate a prediction of each subblock by using the vertical or horizontal planar mode.

The first horizontal line (pixels indicated as 1 in FIG. 40(a)) of the current block may be predicted using pixel A and pixels (e.g., the hatched pixels of FIG. 40) adjacent to the top of the current block. Similarly, the second horizontal line (pixels indicated as 2 in FIG. 40(a)) of the current block may be predicted using pixel B and pixels (e.g., the hatched pixels of FIG. 40) adjacent to the top of the current block. In addition, the line-unit planar mode may be divided into a vertical planar mode, a horizontal planar mode, and a prediction mode of weighted-averaging prediction blocks in the vertical and horizontal directions. When the width of the current block is greater than the height, the number of top pixels adjacent to the current block is greater, and thus the video signal processing apparatus may generate a prediction block for the current block by using the vertical planar mode. When the height and the width of the current block are identical to each other, the number of pixels adjacent to the left side of the current block is greater, and thus the video signal processing apparatus may generate a prediction block for the current block by using the horizontal planar mode. When the width and the height of the current block are identical to each other, the video signal processing apparatus may generate a prediction block for the current block by using the conventional planar mode.

When the prediction block of the current block is generated using the planar mode, the video signal processing apparatus may generate a prediction block by using the vertical planar mode, may generate a prediction block by using the horizontal planar mode, and may generate a final prediction block by weighted-averaging the respective prediction blocks. In this case, the weights may be identical to or different from each other. When the DIMD intra prediction directional mode derived from neighboring pixels of the current block has a value equal to or greater than a predetermined value, the weight of the block predicted using the vertical planar mode may be the largest. The weight of the block predicted using the vertical planar mode may be 3, and the weight of the block predicted using the horizontal planar mode may be 1. When the DIMD intra prediction directional mode derived from neighboring pixels of the current block has a value smaller than a predetermined value, the weight of the block predicted using the horizontal planar mode may be the largest. The weight of the block predicted using the horizonal-direction planar mode may be 3, and the weight of the block predicted using the vertical planar mode may be 1. Here, the predetermined value may be an integer, and may be 34 corresponding to an index of a diagonal mode (angular mode 34 of FIG. 6). The DIMD information derived from the neighboring pixels of the current block may include the first intra prediction directional mode, the second intra prediction directional mode, and information on whether to perform weighted prediction. When the DIMD information derived from the neighboring pixels of the current block indicates that the weighted prediction is not applied, the video signal processing apparatus may apply the same weight to each prediction block. Here, the prediction block generated using the vertical planar mode and the prediction block generated using the horizontal planar mode may be generated using the subblock-based planar mode prediction method.

The prediction using the DC mode has a problem of generating discontinuous edges at the boundary between blocks at a low bit rate. To improve this problem, the video signal processing apparatus may perform correction of the prediction block by adding a predetermined offset value to the prediction block of the current block, generated through the DC mode. In this case, information on the predetermined offset value may be explicitly signaled by being included in the bitstream, or may be implicitly derived from values of neighboring pixels adjacent to the current block. The decoder may perform correction for the prediction block of the current block on the basis of the offset value obtained by parsing the information on the predetermined offset value. Alternatively, the decoder may perform correction for the prediction block of the current block by deriving the offset value from the values of the neighboring pixels adjacent to the current block. Alternatively, the prediction block of the current block may be generated by weighted-averaging the block predicted using the planar mode and the block predicted using the DC mode.

The three planar modes and the three DC modes may be derived on the basis of a template. First, the video signal processing apparatus may configure a reference template including reconstructed neighboring blocks adjacent to the current block (see FIG. 23). The video signal processing apparatus may configure a prediction template for the three planar modes by using reference pixels around the reference template. The video signal processing apparatus may calculate a cost between the reference template and the prediction template and then generate a prediction block of the current block by using a planar prediction mode indicating the minimum cost.

In addition, the video signal processing apparatus may configure a reference template including reconstructed neighboring blocks adjacent to the current block (see FIG. 23). The video signal processing apparatus may configure a prediction template for the three planar modes by using reference pixels around the reference template. The video signal processing apparatus may calculate a cost between the reference template and the prediction template and then configure a list for the planar mode on the basis of the cost. In this case, the planar mode having the smallest cost may be positioned at the top of the list, and a list may be configured in an ascending order according to the cost. The encoder may generate and signal a bitstream including index information of the optimal planar mode for generating a prediction block of the current block among planar modes in the list. The decoder may generate a prediction block of the current block by using a planar mode determined by parsing index information.

The above-described template-based planar mode deriving method may be applied the same to the three DC modes.

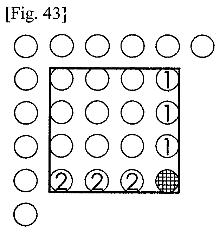

FIG. 43 illustrates a bidirectional prediction-based intra prediction method according to an embodiment of the present disclosure.

When the video signal processing apparatus encodes a current block in an intra prediction mode, pixels on the left side of the current block or above the current block are adjacent to neighboring pixels of the reconstructed current block, and thus effective prediction can be performed. However, adjacent pixels around the pixels on the right side of the current block or below the current block have not be reconstructed yet, and thus the prediction efficiency is low. That is, a pixel positioned closer to the bottom-right of the current block is farther from the reference pixel (a pixel around the reconstructed current block), and thus the number of error signals is increased. To improve this problem, as shown in FIG. 43, the video signal processing apparatus may reconstruct only one pixel positioned at the bottom-right of the current block in advance, and then generate a prediction block of the current block on the basis of the reconstructed bottom-right pixel and the neighboring pixels adjacent to the current block. In this case, the pixel positioned on the bottom-right of the current block may be predicted from the pixel adjacent to the current block and encoded, and information on a differential value corresponding to a difference between the pixel value positioned at the bottom-right of the current block and a prediction value may be included in a bitstream and signaled. The decoder may reconstruct the pixel positioned at the bottom-right of the current block by using a differential value determined by parsing the information on the differential value. Next, the video signal processing apparatus may generate a prediction block of the current block by using one pixel positioned at the bottom-right of the current block and pixels adjacent to the current block. The video signal processing apparatus may predict right pixels (pixels indicated as 1 in FIG. 43) and bottom pixels (pixels indicated as 2 in FIG. 43) by using one pixel positioned at the bottom-right of the current block and pixels adjacent to the current block, and then may generate a prediction block of the current block by using the pixels adjacent to the current block and the bottom and right pixels within the current block.

In order to increase coding efficiency, instead of coding the above-described residua signal without transformation, a method of quantizing a transform coefficient value obtained by transforming a residual signal and coding the quantized transform coefficients may be used. As described above, a transformation unit may acquire a transform coefficient value by transforming the residual signal. In this case, the residual signals of a specific block may be distributed to all areas of the current block. Accordingly, coding efficiency can be enhanced by concentrating energy to a low-frequency area through frequency domain transformation for the residual signal.

The encoder may acquire at least on residual block including a residual signal of the current block. The residual block may be one of blocks segmented from the current block or the current block. In the present disclosure, the residual block may be described as a residual array or a residual matrix including residual samples of the current block. In addition, in the present disclosure, the residual block may indicate a block having the same size as the size of a transform unit or a transform block.

The encoder may transform the residual block by using a transform kernel. The transform kernel used for transformation of the residual block may be a transform kernel having separable characteristics of the vertical and horizontal transformation. In this case, the transformation for the residual block may may be separated into vertical transformation and horizontal transformation and performed. For example, the encoder may apply a transform kernel in the vertical direction of the residual block to perform the vertical transformation. In addition, the encoder may apply the transform kernel in the horizontal direction of the residual block to perform the horizontal transformation. In the present disclosure, the transform kernel may be used as a term indicating a parameter set used for transformation of the residual signal, like the transform matrix, the transform array, the transform function, and the transformation. According to an embodiment, the transform kernel may be one of multiple available kernels. In addition, transform kernels based on different transform types may be used for each of the vertical transformation and the horizontal transformation. That is, before performing the primary transform, the transformation methods for the vertical and horizontal directions may be derived using at least one of the intra-prediction mode of the current block, the encoding mode, the transformation method parsed from the bitstream, or the size information of the current block. In addition, to reduce the complexity in calculation in a transform process for a large block, a process of leaving only the low-frequency area and processing a high-frequency area as "0" may be performed. This process may be called high-frequency zeroing, and for this zeroing, a transform size during actual primary transform may be configured. In the high-frequency zeroing process, the low-frequency area may be configured to have a predetermined size, and for example, the width or the height may be a combination of 4, 8, 16, 32, etc.

The encoder may transfer a transform block transformed from the residual block to a quantization unit and quantize the same. In this case, the transform block may include multiple transform coefficients. Specifically, the transform block may include multiple two-dimensional arrayed transform coefficients. The size of the transform block may be identical to the current block or one of blocks divided from the current block, similar to the residual block. The transform coefficients transferred to the quantization unit may be represented as quantized values.

In addition, the encoder may perform additional transform before the transform coefficients are quantized. The above-described transform method may be referred to as primary transform, and the additional transform may be referred to as secondary transform. The secondary transform may be selective for each residual block. According to an embodiment, the encoder may perform secondary transform for an area in which energy concentration in the low-frequency area is difficult only with the primary transform, so as to improve coding efficiency. For example, the secondary transform may be added to a block in which residual values are large in the direction other than the horizontal or vertical direction of the residual block. The residual values of intra predicted block may have a high probability of changing in the direction other than the horizontal or vertical direction, compared to the residual values of inter predicted block. Accordingly, the encoder may additionally perform secondary transform for the residual signal of the intra predicted block. In addition, the encoder may omit the secondary transform for the residual signal of the inter predicted block. The high-frequency zeroing in the primary transform may be performed also in the secondary transform process.

In another example, whether to perform the secondary transform may be determined according to the size of the current block or the residual block. In addition, transform kernels having different sizes according to the size of the current block or the residual block may be used. For example, 8X8 secondary transform may be applied to a block in which the length of a shorter side between the width and the height is equal to or greater than a first pre-configured length. In addition, 4X4 secondary transform may be applied to a block in which the length of a shorter side between the width and the height is equal to or greater than a second pre-configured length and is smaller than the first pre-configured length. In this case, the first pre-configured length may have a value greater than the second pre-configured length, and the disclosure is not limited thereto. In addition, the secondary transform may not be divided into vertical transform and horizontal transform, unlike the primary transform. The secondary transform may be referred to as Low Frequency Non-Separable Transform (LFNST).

In addition, in a case of a video signal in a specific area, high-frequency band energy may not be reduced even though frequency transform is performed due to sudden brightness change. Accordingly, the compression performance by the quantization may deteriorate. In addition, when transform is performed for an area in which a residual value sparsely exists, an encoding time and a decoding time may be unnecessarily increased. Accordingly, transform for the residual signal in the specific area may be omitted. Whether to perform transform for the residual signal in the specific area may be determined by a syntax element related to transformation of the specific area. For example, the syntax element may include transform skip information. The transform skip information may be a transform skip flag. When the transform skip information for the residual block indicates transform skip, transform for the corresponding residual block is not performed. In this case, the encoder may immediately quantize a residual signal for which transform of the corresponding area is not performed.

The above-described transform-related syntax elements may be information parsed from a video signal bitstream. The decoder may obtain transform-related syntax elements by entropy-decoding the video signal bitstream. In addition, the encoder may generate a video signal bitstream by entropy-coding the transform-related syntax elements.

The decoder may acquire encoding information required to parse and decode the received bitstream. In this case, information related to the transform process may be index information, the quantized transform coefficients, etc. for the primary and secondary transform types. An inverse transform unit may acquire a residual signal by inverse transforming inversely quantized transform coefficients. First, the inverse transform unit may detect whether inverse transform for the corresponding area is performed from the transform-related syntax element of the specific area. According to an embodiment, when the transform-related syntax element for the specific transform block indicates transform skip, transform for the corresponding transform block may be omitted. In this case, for the transform block, both primary inverse transform and secondary inverse transform may be omitted. In addition, the inversely quantized transform coefficients may be used as residual signals. For example, the decoder may reconstruct the current block by using the inversely quantized transform coefficients as residual signals. Alternatively, the secondary inverse transform may be performed, the primary inverse transform may be omitted, and a value obtained through the secondary inverse transform may be used as a residual signal. The above-described primary inverse transform may indicate inverse transform for the primary transform, and may be referred to as inverse primary transform. The secondary inverse transform may indicate inverse transform for the secondary transform, and may be referred to as inverse secondary transform or inverse LFNST. In the present disclosure, the primary (inverse) transform may be referred to as first (inverse) transform, and the secondary (inverse) transform may be referred to as second (inverse) transform.

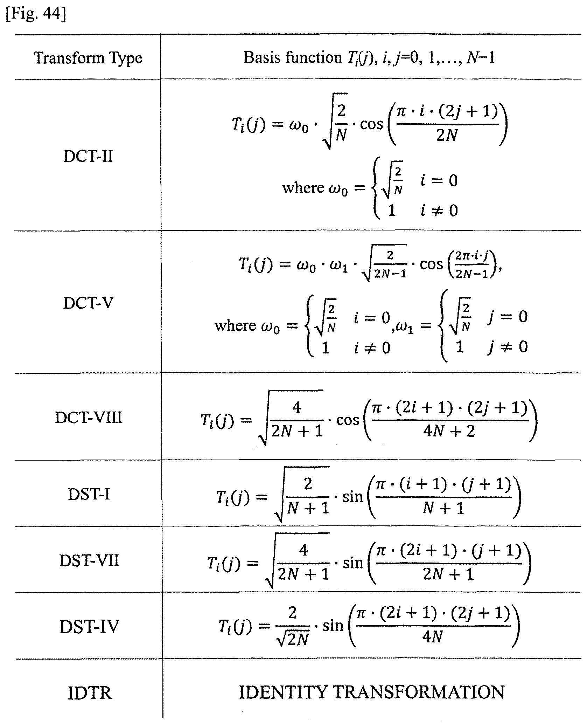

FIG. 44 illustrates a transform kernel type which can be used for video coding according to an embodiment of the present disclosure.

FIG. 44 illustrates equations of discrete cosine transform type (DCT)-II, DCT-V, DCT-VIII, discrete sine transform type (DST)-I, and DST-VII kernels applied to the MTS. The DCT and the DST may be expressed by cosine and sine functions, respectively, and when a basis function of a transform kernel for sample number N is expressed by Ti(j), index i indicates an index in the frequency domain, and index j indicates an index in the basis function. That is, as i decreases, it represents a low-frequency basis function, and as i increases, it represents a high-frequency basis function. When basis function Ti(j) may indicate the j-th element in the i-th row when being expressed by a two-dimensional matrix, all the transform kernels illustrated in FIG. 30 have separable characteristics, and thus transforms in each of the horizonal and vertical directions may be performed for residual signal X. That is, when a residual signal block is X and a transform kernel matrix is T, transformation for residual signal X may be indicated as "TXT‴". In this case, "T'" means the transpose of the transformation kernel matrix T. The DCT and the DST are in the form of floating-point numbers rather than integers, which may thus cause a burden in directly implementing the same in hardware encoders and decoders. Accordingly, the floating-point transform kernel needs to be approximated to an integer transform kernel through scaling and rounding. The integer precision of the transform kernel may be determined as either 8-bit or 10-bit, but if the precision is reduced, the encoding efficiency may decrease. The orthonormal properties of DCT and DST may not be preserved depending on the approximation, but the loss in encoding efficiency resulting from is not significant, and thus approximating the transform kernel in the form of an integer is advantageous for implementing hardware encoders and decoders. Identity Transform (IDTR) refers to a transformation where the output of the transform is identical to itself before the transformation, and is called identity transformation. In general, in the identity transformation, a transform matrix is configured by setting "1" at positions where the row and column has the same value. However, in this case, the identity transformation uses a predetermined fixed value rather than "1", and the same value is used to uniformly increase or decrease the input residual signal.

A bitstream may include one or more coded video sequences (CVSs), and one CVS is encoded independently from other CVSs. Each CVS includes one or more layers, and each layer may indicate a specific image quality or a specific resolution, or indicate a normal video, a depth information map, and a transparency map. In addition, a coded layer video sequence (CLVS) means a layer-wise CVS including consecutive Pus (in a decoding order) in the same layer. For example, there may be a CLVS for a layer having a specific image quality, and there may be a CLVS for a depth information map.

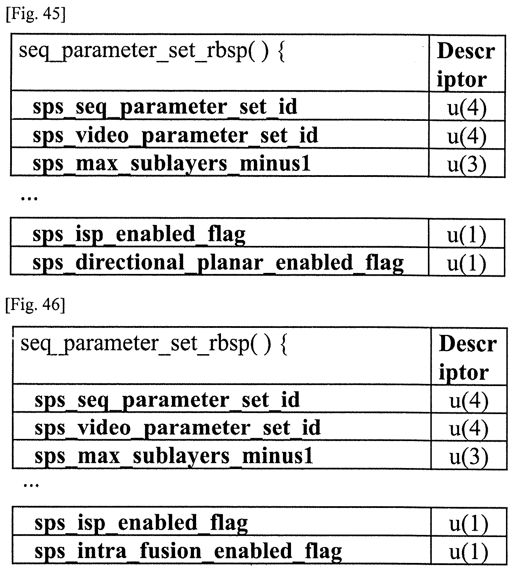

FIGS. 45 and 46 illustrate a part of sequence parameter set according to an embodiment of the present disclosure.

FIG. 45 illustrates a method of signaling, via SPS, a syntax element indicating whether a vertical planar mode and a horizontal planar mode are enabled.

When sps_directional_planar_enabled_flag of FIG. 45 is "1" (true), it may indicate that the vertical planar mode and the horizontal planar mode are enabled. When sps_directional_planar_enabled_flag is "0" (false), it may indicate that the vertical planar mode and the horizontal planar mode are disabled. That is, the vertical planar mode and the horizontal planar mode are not used for all blocks. When sps_directional_planar_enabled_flag is not parsed (is not included in the bitstream), a value of sps_directional_planar_enabled_flag may be inferred as 0.

sps_directional_planar_enabled_flag equal to 1 specifies that the vertical planar and the horizontal planar modes are enabled for the CLVS. sps_directional_planar_enabled_flag equal to 0 specifies that the vertical planar and the horizontal planar modes are disabled for the CLVS. When sps_directional_planar_enabled_flag is not present, it is inferred to be equal to 0.

In the same manner as the above-described method of performing signaling in SPS, a syntax element indicating whether the vertical planar mode and the horizontal planar mode are enabled may be signaled also in PPS. That is, whether the vertical planar mode and the horizontal planar mode are enabled may vary for each picture and/or frame according to the syntax element signaled in the PPS (e.g., pps_directional_planar_enabled_flag).

FIG. 46 illustrates a method of signaling, in SPS, a syntax element indicating whether the method of generating a prediction block by using multiple reference pixel lines described through FIGS. 25 to 29 is enabled. The method of generating a prediction block by using multiple reference pixel elements may be described as intra fusion.

When sps_intra_fusion_enabled_flag of FIG. 46 is "1" (true), it may indicate that intra fusion is enabled. When sps_intra_fusion_enabled_flag is "0" (false), it indicates that intra fusion is disabled. That is, intra fusion is not performed for all blocks. When sps_intra_fusion_enabled_flag is not parsed (is not included in the bitstream), a value of sps_intra_fusion_enabled flag may be inferred as 0.

sps_intra_fusion_enabled_flag equal to 1 specifies that the intra fusion method is enabled for the CLVS. sps_intra_fusion_enabled_flag equal to 0 specifies that intra fusion method is disabled for the CLVS. When sps_intra_fusion_enabled_flag is not present, it is inferred to be equal to 0.

In the same manner as the above-described method of performing signaling in SPS, a syntax element indicating whether the intra fusion is enabled may be signaled also in PPS. That is, whether the intra fusion is enabled may vary for each picture and/or frame according to the syntax element signaled in the PPS (e.g., pps_intra_fusion_enabled_flag).

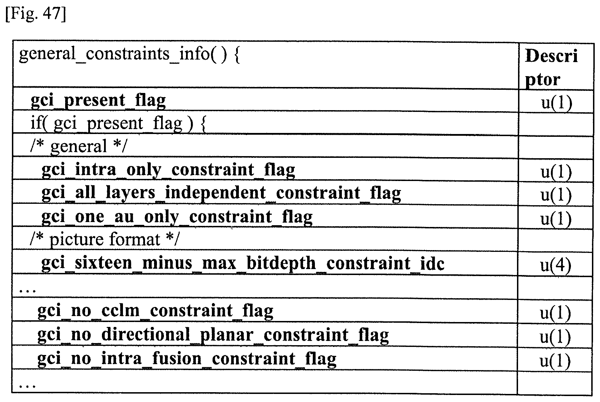

FIG. 47 illustrates a part of a general_constraint_info() syntax structure according to an embodiment of present disclosure.

FIG. 47 illustrates a constraint flag related to the vertical planar and horizonal planar modes and the intra fusion. A general_constraint_info() syntax of FIG. 47 may be invoked by a profile_tier_level() syntax. The profile_tier_level() syntax may be invoked by a sequence parameter set RBSP syntax, a video parameter set RBSP syntax, and a decoding capability information RBSP syntax. Individual syntax elements of the general_constraint_info() syntax may have corresponding syntax elements within the sequence parameter set RBSP, and whether the corresponding sequence parameter set RBSP syntax element is enabled/disabled may be constrained by the definition of the corresponding flog.

A constraint flag related to the vertical planar mode and the horizonal planar mode may be gci_no_directional_planar_constraint_flag.

When a value of gci_no_directional_planar_constraint_flag is equal to 1, a value of sps_directional_planar_enabled_flag for all pictures present in OlsScope is constrained to 0. That is, disabling the vertical planar mode and the horizontal planar mode may be constrained (enforced). When the value of gci_no_directional_planar_constraint_flag is equal to 0, the value of sps_directional_planar_enabled_flag is not constrained.

gci_no_directional_planar_constraint_flag equal to 1 specifies that sps_directional_planar_enabled_flag for all pictures in OlsInScope shall be equal to 0. gci_no_directional_planar_constraint_flag equal to 0 does not impose such a constraint.

The constraint flag related to the intra fusion may be gci_no_intra_fusion_constraint_flag.

When the value of gci_no_intra_fusion_constraint_flag is equal to 1, the value of sps_intra_fusion_enabled_flag is constrained to 0 for all pictures present in OlsScope. That is, disabling the intra fusion may be constrained (enforced). When the value of gci_no_intra_fusion_constraint_flag is equal to 0, the value of sps_intra_fusion_enabled_flag is not constrained to 0.

gci_no_intra_fusion_constraint_flag equal to 1 specifies that sps_intra_fusion_enabled_flag for all pictures in OlsInScope shall be equal to 0. gci_no_intra_fusion_constraint_flag equal to 0 does not impose such a constraint.

When generating a prediction for a current block, the video signal processing apparatus may use a multiple-prediction mode of weighted-averaging two or more intra prediction blocks. When a DIMD or TIMD mode is used, two intra prediction directional modes may be implicitly determined from neighboring blocks or an MPM list. The two intra prediction directional mode may be signaled from a bitstream in a block other than the DIMD or TIMD mode, but a bit amount is increased and the compression efficiency can be thus reduced.

To mitigate such an increase of the bit amount, when the video signal processing apparatus configures an MPM list, the number of intra prediction directional modes to be included in each item of the list may be configured to be two or more rather than one.

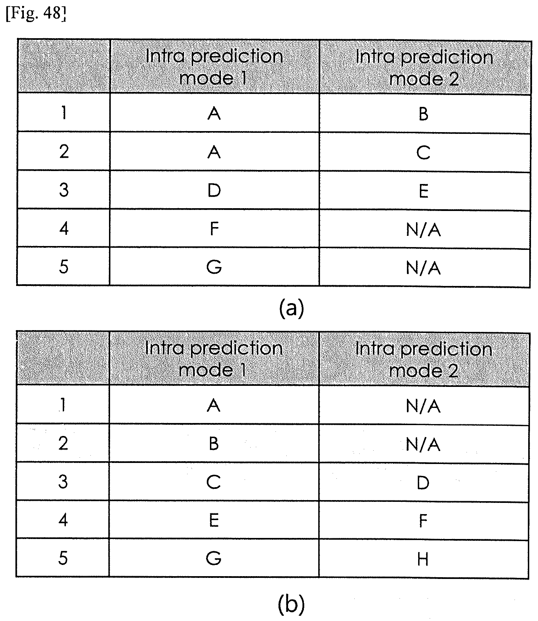

FIG. 48 illustrates a method of configuring an MPM list by using a multiple-prediction mode according to an embodiment of the present disclosure.

FIG. 48(a), A, B, C, ... , F, and G may indicate one of a predetermined prediction directional mode, MIP, Intra TMP, IBC, DIMD, and TIMD, "N/A" indicates that the mode is not used, and the fourth and the fifth of the MPM list may be only configured as one intra prediction direction mode rather than the multiple-prediction mode. As shown in FIG. 48(b), a multiple-prediction mode may be added after a single-prediction mode is first added to the MPM list, N/A" indicates that the mode is not used, and the first and the second of the MPM list may be only configured as one intra prediction directional mode rather than the multiple-prediction mode.

The encoder may adaptively include, in the bitstream, information on whether to use an MPM list including only one intra prediction directional mode (a single prediction-based MPM list) or a multiple prediction-based MPM list, in units of blocks, and signal the same. The decoder may parse information on whether to use the MPM list including only one intra prediction directional mode (the single prediction-based MPM list) or the multiple prediction-based MPM list, and determine an MPM list used to generate a prediction block for the current block.

The video signal processing apparatus may determine whether to use the multiple prediction-based MPM list by using at least one of the width or the height of the current block, a ratio of the width and the height of the current block, information non whether the current block is a luma block or a chroma block, quantization parameter information, information on an intra prediction directional mode of neighboring blocks of the current block, and encoding mode information of the current block.

The encoding efficiency may vary according to a configuration of the multiple prediction-based MPM list, and various schemes may be applied as follows.

After configuring a single prediction-based MPM list, the video signal processing apparatus may configure a multiple prediction-based MPM list by using the single prediction-based MPM list. For example, the video signal processing apparatus may configure a multiple prediction-based MPM list in a combination of respective intra prediction directional modes in the single prediction-based MPM list. In this case, the video signal processing apparatus may rearrange the single prediction-based MPM list by using a template cost-based rearrangement method used in the TIMD method. The video signal processing apparatus may configure the multiple prediction-based MPM list by using only a combination of the first intra prediction directional mode of the rearranged single prediction-based MPM list and intra prediction directional modes other than the first.

The video signal processing apparatus may a multiple prediction-based MPM list by using a combination of intra prediction directional modes derived from the DIMD and single prediction-based MPM lists. For example, the video signal processing apparatus may combine the first intra prediction directional mode derived from the DIMD and the first intra prediction directional mode in the single prediction-based MPM list to add the same to the first of a multiple prediction-based MPM list. The video signal processing apparatus may combine the second intra prediction directional mode derived from the DIMD and the first intra prediction directional mode in the single prediction-based MPM list to add the same to the second of the multiple prediction-based MPM list. The video signal processing apparatus may combine the first intra prediction directional mode derived from the DIMD and the second intra prediction directional mode in the single prediction-based MPM list to add the same to the third of the multiple prediction-based MPM list. Through this method, the video signal processing apparatus may configure a multiple prediction-based MPM list by using all possible combinations.

The video signal processing apparatus may configure a multiple prediction-based MPM list by using pre-defined several multiple-prediction modes. Here, the pre-defined several multiple-prediction modes may be (18, 0), (50, 0), (34, 0), (2, 0), (66, 0), (18, 1), (50, 1), (34, 1), (2, 1), (66, 1), etc., and in "(X, Y)", X and Y may be (indices of) the intra prediction directional mode of FIG. 6.

The video signal processing apparatus may rearrange the multiple prediction-based MPM list through a TIMD-based rearrangement method. The video signal processing apparatus may reconfigure the multiple prediction-based MPM list by using only some items having low costs.

When the video signal processing apparatus generates a prediction by using the multiple-prediction mode, an intra prediction mode used to generate each prediction block may be signaled on the basis of primary MPM and secondary MPM. The primary MPM may include 6 intra prediction directional modes, and the secondary MPM may include 16 intra prediction directional modes. The secondary MPM may be configured using pre-defined several intra prediction modes. For example, the prediction modes (see the intra prediction modes of FIG. 6) of DC, 50, 18, 46, 54, 14, 22, 42, 58, 10, 26, 38, 62, 6, 30, 34, 66, 2, 48, 52, and 16 are not present in the primary MPM, the video signal processing apparatus may configure the secondary MPM list by sequentially adding the prediction modes of DC, 50, 18, 46, 54, 14, 22, 42, 58, 10, 26, 38, 62, 6, 30, 34, 66, 2, 48, 52, and 16 until the secondary MPM list is all configured. When the multiple-prediction mode is used for the current block, the video signal processing apparatus may derive one intra prediction directional mode from the primary MPM, and derive another intra prediction directional mode from the secondary MPM, thereby determining an intra prediction directional mode used to generate the prediction block of the current block. When the multiple-prediction mode is used for the current block, the encoder may include, in the bitstream, index information indicating intra prediction directional modes in the primary MPM and the secondary MPM, which have been used, and signal the same. When the multiple-prediction mode is used for the current block, the decoder may parse the index information to determine, within the primary MPM and the secondary MPM lists, intra prediction directional modes used to generate prediction blocks for the current block.

When the multiple-prediction mode is used for the current block, the video signal processing apparatus may determine intra prediction directional modes used to generate the prediction block of the current block by using the intra prediction directional mode derived from the DIMD, the primary MPM, and the secondary MPM. When the multiple-prediction mode is used for the current block, the encoder may include, in the bitstream, information on whether the intra prediction directional mode derived from the DIMD has been used and index information indicating intra prediction directional modes within the primary MPM and the secondary MPM, which have been used, and signal the same. When the multiple-prediction mode is used for the current block, the decoder may parse the information on whether the intra prediction directional mode derived from the DIMD has been used and the index information indicating intra prediction directional modes within the primary MPM and the second MPM, which have been used, and determine intra prediction directional modes used to generate prediction blocks for the current block.

When the multiple-prediction mode is used for the current block, the video signal processing apparatus may configure the secondary MPM list as the multiple prediction-based MPM list by using the primary MPM list. For example, when primary MPM modes generated from neighboring blocks correspond to the planar mode and modes 18, 54, 30, 45, and 17, modes such as Planar+18, Planard+54, ... may be added to the secondary MPM list and configured as the multiple prediction-based MPM list. When the multiple-prediction mode is used for the current block, the encoder may configure the secondary MPM list as the multiple prediction-based MPM list by using the primary MPM list, and then determine a multiple-prediction mode used to generated a prediction block of the current bloc from the secondary MPM list, and may include index information of the determined secondary MPM list in the bitstream and signal the same. The decoder may parse the index information to determine a multiple-prediction mode used to generate a prediction block of the current block from the secondary MPM list.

In addition, when the multiple-prediction mode is used for the current block, the video signal processing apparatus may configure the secondary MPM list as the multiple prediction-based MPM list by using the intra prediction directional mode derived from the DIMD and the primary MPM list. For example, when the primary MPM modes generated from neighboring block correspond to a planar mode and modes 18, 54, 30, 45, and 17, modes such as Planar+18, Planard+54, ... may be added to the secondary MPM list and configured as the multiple prediction-based MPM list. When the multiple-prediction mode is used for the current block, the encoder may configure the secondary MPM list as the multiple prediction-based MPM list by using the intra prediction directional mode derived from the DIMD and the primary MPM list. The encoder may determine the multiple-prediction mode used to generate a prediction block of the current block from the secondary MPM list, and may include index information of the secondary MPM list in a bitstream and signal the same. The decoder may parse the index information to determine a multiple-prediction mode used to generate a prediction block of the current block from the secondary MPM list.

When a prediction block is generated using the multiple-prediction mode, the video signal processing apparatus may determine the position of a reference pixel used to generated each prediction block. That is, the video signal processing apparatus may designate a left reference pixel line and an above reference pixel line used to generate each prediction block among various reference pixel lines (see FIG. 31). The encoder may determine the optimal reference pixel line, and then may include information on the position of the left reference pixel line and information on the position of the above reference pixel line in a bitstream and signal the same. The decoder may parse each piece of position information to determine the positions of the left reference pixel line and the above reference pixel line used to generate each prediction block.

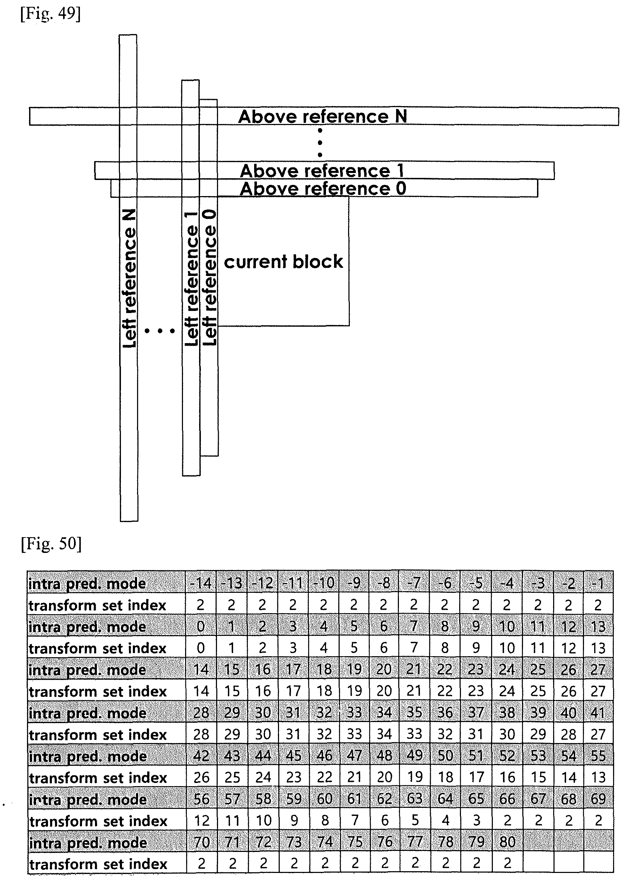

FIG. 49 illustrates a position of a reference pixel used when a prediction block is generated using a multiple-prediction mode according to an embodiment of the present disclosure.

Referring to FIG. 49, when a prediction block is generated using the first intra prediction direction mode of the multiple-prediction mode, the video signal processing apparatus may generate a prediction block by using only the left reference pixel of the current block. In addition, when a prediction block is generated using the second intra prediction directional mode of the multiple-prediction mode, the video signal processing apparatus may generate a prediction block by using only the above reference pixel of the current block. As the first intra prediction directional mode, only modes having an index smaller than 34 among the intra prediction directional modes of FIG. 6 may be used, and as the second intra prediction directional mode, only modes having an index equal to or greater than 34 among the intra prediction directional modes of FIG. 6 may be used. Accordingly, the multiple prediction-based MPM list may be configured such that as the first intra prediction directional mode, only modes having an index smaller than 34 are used, and as the second intra prediction directional mode, only modes having a number equal to or greater than 34 are used.

Referring to FIG. 49, the video signal processing apparatus may designate the left reference pixel line and the above reference pixel line to generate prediction blocks, respectively. After determining the optimal reference pixel line, the encoder may include information non the position of the left reference pixel line and information on the position of the above reference pixel line in a bitstream and signal the same. The decoder may parse each piece of location information to determine the position of the left reference pixel line and the position of the above reference pixel line used to generate prediction blocks, respectively. In addition, the information on the position of the above reference pixel line may be derived from the information on the position of the left reference pixel line, and the information on the position of the above reference pixel line may be identical to the information on the position of the left reference pixel line. When signaling the information on the position of the above reference pixel line, the encoder may include only a value of a difference from the information on the position of the left reference pixel line in a bitstream and signal the same. The decoder may parse the information on the position of the left reference pixel line, parse a difference value for the information on the position of the above reference pixel line, and then determine the information on the position of the above reference pixel line by using the information on the position of the left reference pixel line and the difference value for the information on the position of the above reference pixel line.

When secondary transform is applied to the current block to which the multiple-prediction mode is applied, a transform set for the secondary transform may be determined on the basis of two intra prediction directional modes. In this case, one of the two intra prediction directional modes may be used to select a primary transform or a secondary transform set, and the first intra prediction directional mode may be used. The encoder may include information on one of the two intra prediction directional modes to be used to derive the primary transform or second transform set, in a bitstream and signal the same. The decoder may parse the information on one of the two intra prediction directional modes to be used to derive the primary transform or secondary transform set, and determine an intra prediction directional mode used to derive a primary inverse transform or secondary inverse transform set for a current error block. Alternatively, when the multiple-prediction mode is applied to the current block, the video signal processing apparatus may determine, as a pre-defined mode, an intra prediction directional mode used to derive the primary transform (inverse transform) or secondary transform (inverse transform) set. Here, the pre-defined mode may be a planar mode, a DC mode, etc.

The video signal processing apparatus may not perform PDPC for a prediction block to which the multiple-prediction mode is applied. The video signal processing apparatus may perform PDPC for the prediction block to which the multiple-prediction mode is applied on the basis of the first intra prediction directional mode between the two intra prediction directional modes. For the prediction block to which the multiple-prediction mode is applied, the video signal processing apparatus may perform first PDPC on the basis of the first intra prediction directional mode between the two intra prediction directional modes, and then perform second PDPC on the basis of the second intra prediction directional mode.

Transform in the above-described MTS transform corresponding to primary transform is calculated by applying transform kernels in the vertical and horizontal directions of the error block, respectively, and may thus be called a separable transform scheme. On the other hand, transform in the above-described LFNST transform corresponding to secondary transform is calculated by applying only one transform kernel without applying transform kernels in the vertical and horizontal directions, respectively, and may thus be called a non-separable transform scheme. In addition, the above-described secondary transform is additionally applied to primarily transformed transform coefficients of a block to which DCT-2 transform is applied, and may thus be called a two-step transform technique. The above-described secondary transform has high encoding efficiency, but has disadvantage of complexity since a total of three transform kernels are applied. To reduce the complexity, a non-separable primary transform (NSPT) scheme corresponding to a scheme of applying transform by using only the secondary transform scheme may be applied. The NSPT scheme is a non-separable transform scheme, and calculation is made by applying only one transform kernel without applying transform kernels in the vertical and horizontal directions of the error block, respectively. For the error block of the current block, the video signal processing apparatus may perform transform or inverse transform by using one transform scheme among MTS, DCT2 + LFNST, and NSPT transform schemes.

FIG. 50 illustrates a transform set table for LFNST and NSPT according to an embodiment of the present disclosure.

There may be 35 types of transform sets used in LFNST and NSPT, and the transform set may vary according to an intra prediction mode (see FIG. 6). That is, referring to the transform set table of FIG. 50, the video signal processing apparatus may derive transform set indices of the LFNST and NSPT corresponding to the intra prediction mode (see FIG. 6). In addition, The LFNST and NSPT transform set may vary according to the intra prediction mode, information on whether the current block is a luma block or a chroma block, the width and height of the current block, and information on whether the intra prediction directional mode of the current block is an extended angular mode. A predetermined number of transform matrices may exist for each transform set. Here, the predetermined number may be an integer equal to or greater than 1, and may be 3. The encoder may include, in a bitstream, index information of the optimal transform matrix among several transform matrices in the transform set, and signal the same. The decoder may parse the index of the optimal transform matrix and then apply inverse transform by using the transform matrix corresponding to the index from the transform set.

When a prediction block of the current block is generated using the vertical planar mode and NSPT is applied, the encoder may perform a transform process by using a transform set of the vertical angular mode (angular mode 50 of FIG. 6) without using a transform set of the planar mode for the error signal. When a prediction block of the current block is generated using the horizontal planar mode and NSPT is , applied, the encoder may derive a transform set by using the horizontal angular mode (angular mode 18 of FIG. 6) rather than the planar mode. When a prediction block of the current block is generated using the vertical planar mode and NSPT is applied, the decoder may perform a transform process by using a transform set of the vertical angular mode (angular mode 50 of FIG. 6) without using a transform set of the planar mode for the error signal. When a prediction block of the current block is generated using the horizontal planar mode and NSPT is applied, the decoder may perform a transform process by using a transform set of the horizontal angular mode (angular mode 18 of FIG. 6) without using a transform set of the planar mode for the error signal.

Referring to FIG. 34 and Equation 4, when a prediction block of the current block is generated using the vertical planar mode, the prediction block may be generated on the basis of a pixel value of rec(-1, H) corresponding to a fixed position and a pixel value of rec(x, -1) which dynamically changes according to the a-axis coordinate. That is, when the vertical planar mode is used, a change in the pixel value occurs in the x axis, and thus the characteristics of the error signal may be similar to the characteristics of the error signal of the horizontal angular mode (angular mode 50 of FIG. 6). That is, when a prediction block of the current block is generated using the vertical planar mode and NSPT is applied, the encoder may perform a transform process by using a transform set of the horizontal angular mode (angular mode 18 of FIG. 6) without using a transform set of the planar mode for the error signal. When a prediction block of the current block is generated using the horizontal planar mode and NSPT is applied, the encoder may derive a transform set by using the vertical angular mode (angular mode 50 of FIG. 6) rather than the planar mode. When a prediction block of the current block is generated using the vertical planar mode and NSPT is applied, the decoder may perform a transform process by using a transform set of the horizontal angular mode (angular mode 18 of FIG. 6) without using a transform set of the planar mode for the error signal. When a prediction block of the current block is generated using the horizontal planar mode and NSPT is applied, the decoder may perform a transform process by using a transform set of the vertical angular mode (angular mode 50 of FIG. 6) without using a transform set of the planar mode for the error signal. When the current block is adjacent to at least one of the tile boundary, the slice boundary, and the sub picture boundary, a reconstructed sample of another adjacent tile, another adjacent slice, and another adjacent sub picture cannot be accessed or used. When the current block is adjacent to at least one of the tile boundary, the slice boundary, and the sub picture boundary, the encoder may not signal planar mode selection information, and may not include the same in a bitstream. When the current block is adjacent to at least one of the tile boundary, the slice boundary, and the sub picture boundary, the decoder may not parse the planar mode selection information, and may configure a mode of the current block as a planar mode (or DC mode).

When the current block is adjacent to at least one of the tile boundary, the slice boundary, and the sub picture boundary, the encoder may not signal information related to the DIMD, TIMD, Intra TMP, TMRL, and intra fusion, and may not include the same in a bitstream. When the current block is adjacent to at least one of the tile boundary, the slice boundary, and the sub picture boundary, the decoder may not parse the information related to the DIMD, TIMD, Intra TMP, TMRL, and intra fusion, and may configure a mode of the current block as a planar mode (or DC mode).

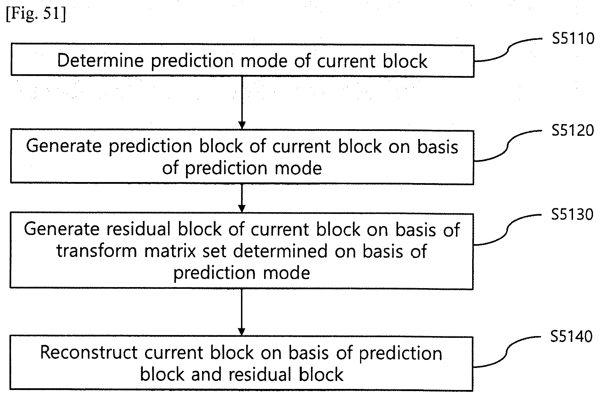

FIG. 51 illustrates a method of deriving a transform set for a linear mode in prediction using the linear mode according to an embodiment of the present disclosure.

FIG. 51 illustrates a method of deriving a Multiple Transform Set and an LFNST transform set for a linear mode when the liner mode is used when generating a prediction of the current block as described through FIGS. 1 to 50.

Referring to FIG. 51, the video signal processing apparatus may determine a first prediction mode of the current block (S5110). The video signal processing apparatus may generate a prediction block of the current block on the basis of the first prediction mode (S5120). The video signal processing apparatus may generate a residual block of the current block on the basis of a transform matrix set determined on the basis of a second prediction mode (S5130). The video signal processing apparatus may reconstruct the current block on the basis of the prediction block and the residual block (S5140).

The residual block may be generated on the basis of at least one of a set of transform matrices of a Multiple transform Set (MTS) and/or a set of transform matrices of Low Frequency Non-Separable Transform (LFNST).

The first prediction mode and the second prediction mode may be different prediction modes.

The first prediction mode may be one of a horizontal direction-based planar mode (a horizontal planar mode) and a vertical direction-based planar mode (a vertical planar mode).

The horizontal planar mode may be a prediction mode based on a value of a block at the position of (-1, y) and a block at the position of (W, -1). The vertical planar mode may be a prediction mode based on a value of a block at the position of (x, -1) and a value of a block at the position of (-1, H). In this case, the position of the top-left block of the current block may be (0, 0), and the position of the prediction block may be (x, y).

i) The first prediction mode may be the horizontal planar mode, and the second prediction mode may be a vertical angular mode, or ii) the first prediction mode may be the horizontal planar mode, and the second prediction mode may be a horizontal angular mode.

The first prediction mode may be a linear prediction mode.

The first prediction mode may be indicated by a syntax element included in a bitstream.

The above methods described in the present specification may be performed by a processor in a decoder or an encoder. Furthermore, the encoder may generate a bitstream that is decoded by a video signal processing method. Furthermore, the bitstream generated by the encoder may be stored in a computer-readable non-transitory storage medium (recording medium).

The present specification has been described primarily from the perspective of a decoder, but may function equally in an encoder. The term "parsing" in the present specification has been described in terms of the process of obtaining information from a bitstream, but in terms of the encoder, may be interpreted as configuring the information in a bitstream. Thus, the term "parsing" is not limited to operations of the decoder, but may also be interpreted as the act of configuring a bitstream in the encoder. Furthermore, the bitstream may be configured to be stored in a computer-readable recording medium.

The above-described embodiments of the present invention may be implemented through various means. For example, embodiments of the present invention may be implemented by hardware, firmware, software, or a combination thereof.

For implementation by hardware, the method according to embodiments of the present invention may be implemented by one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and the like.

In the case of implementation by firmware or software, the method according to embodiments of the present invention may be implemented in the form of a module, procedure, or function that performs the functions or operations described above. The software code may be stored in memory and driven by a processor. The memory may be located inside or outside the processor, and may exchange data with the processor by various means already known.

Some embodiments may also be implemented in the form of a recording medium including computer-executable instructions such as a program module that is executed by a computer. Computer-readable media may be any available media that may be accessed by a computer, and may include all volatile, nonvolatile, removable, and non-removable media. In addition, the computer-readable media may include both computer storage media and communication media. The computer storage media include all volatile, nonvolatile, removable, and non-removable media implemented in any method or technology for storing information such as computer-readable instructions, data structures, program modules, or other data. Typically, the communication media include computer-readable instructions, other data of modulated data signals such as data structures or program modules, or other transmission mechanisms, and include any information transfer media.

The above-mentioned description of the present invention is for illustrative purposes only, and it will be understood that those of ordinary skill in the art to which the present invention belongs may make changes to the present invention without altering the technical ideas or essential characteristics of the present invention and the invention may be easily modified in other specific forms. Therefore, the embodiments described above are illustrative and are not restricted in all aspects. For example, each component described as a single entity may be distributed and implemented, and likewise, components described as being distributed may also be implemented in an associated fashion.

The scope of the present invention is defined by the appended claims rather than the above detailed description, and all changes or modifications derived from the meaning and range of the appended claims and equivalents thereof are to be interpreted as being included within the scope of present invention.

**Claims**

1. A video signal decoding apparatus comprising a processor,
   wherein the processor is configured to:

   determine a first prediction mode of a current block;
   generate a prediction block of the current block, based on the first prediction mode;
   generate a residual block of the current block, based on a transform matrix set determined based on a second prediction mode; and
   reconstruct the current block, based on the prediction block and the residual block.

2. The video signal decoding apparatus of claim 1, wherein the residual block is generated based on at least one of a set of transform matrices of a Multiple Transform Set (MTS) and/or a set of transform matrices of Low Frequency Non-Separable Transform (LFNST).

3. The video signal decoding apparatus of claim 1, wherein the first prediction mode and the second prediction mode are different from each other.

4. The video signal decoding apparatus of claim 3, wherein the first prediction mode is one of a planar mode based on a horizontal direction or a planar mode based on a vertical direction.

5. The video signal decoding apparatus of claim 4, wherein the planar mode based on the horizontal direction is a prediction mode based on a value of a block at position (-1, y) and a value of a block at position (W, -1),

the planar mode based on the vertical direction is a prediction mode based on a value of a block at position (x, -1) and a value of a block at position (-1, H),
a position of a top left block of the current block is (0, 0), and
a position of the prediction block is (x, y).

6. The video signal decoding apparatus of claim 4, wherein i) the first prediction mode is the planar mode based on the horizontal direction, and the second prediction mode is a vertical direction angular mode, or
ii) the first prediction mode is the planar mode based on the horizontal direction, and the second prediction mode is a horizontal direction angular mode.

7. The video signal decoding apparatus of claim 4, wherein the first prediction mode is a linear prediction mode.

8. The video signal decoding apparatus of claim 4, wherein the first prediction mode is indicated by a syntax element included in a bitstream.

9. A video signal encoding apparatus comprising a processor,
wherein the processor is configured to:

determine a first prediction mode of a current block;
generate a prediction block of the current block, based on the first prediction mode;
generate a residual block of the current block, based on a transform matrix set determined based on a second prediction mode; and
reconstruct the current block, based on the prediction block and the residual block.

10. The video signal encoding apparatus of claim 9, wherein the residual block is generated based on at least one of a set of transform matrices of a Multiple Transform Set (MTS) and/or a set of transform matrices of Low Frequency Non-Separable Transform (LFNST).

11. The video signal encoding apparatus of claim 9, wherein the first prediction mode and the second prediction mode are different from each other.

12. The video signal encoding apparatus of claim 11, wherein the first prediction mode is one of a planar mode based on a horizontal direction or a planar mode based on a vertical direction.

13. The video signal encoding apparatus of claim 12, wherein the planar mode based on the horizontal direction is a prediction mode based on a value of a block at position (-1, y) and a value of a block at position (W, -1),

the planar mode based on the vertical direction is a prediction mode based on a value of a block at position (x, -1) and a value of a block at position (-1, H),
a position of a top left block of the current block is (0, 0), and
a position of the prediction block is (x, y).

14. The video signal encoding apparatus of claim 12, wherein i) the first prediction mode is the planar mode based on the horizontal direction, and the second prediction mode is a vertical direction angular mode, or
ii) the first prediction mode is the planar mode based on the horizontal direction, and the second prediction mode is a horizontal direction angular mode.

15. The video signal encoding apparatus of claim 12, wherein the first prediction mode is a linear prediction mode.

16. The video signal encoding apparatus of claim 12, wherein the first prediction mode is indicated by a syntax element included in a bitstream.

17. A non-transitory computer-readable storage medium storing a bitstream, the bitstream being decoded by a decoding method,
wherein the decoding method comprises:

determining a first prediction mode of a current block;
generating a prediction block of the current block, based on the first prediction mode;
generating a residual block of the current block, based on a transform matrix set determined based on a second prediction mode; and
reconstructing the current block, based on the prediction block and the residual block.

18. The non-transitory computer-readable storage medium of claim 17, wherein the residual block is generated based on at least one of a set of transform matrices of a Multiple Transform Set (MTS) and/or a set of transform matrices of Low Frequency Non-Separable Transform (LFNST).

19. The non-transitory computer-readable storage medium of claim 17, wherein the first prediction mode and the second prediction mode are different from each other.

20. The non-transitory computer-readable storage medium of claim 19, wherein the first prediction mode is one of a planar mode based on a horizontal direction or a planar mode based on a vertical direction.

[Fig. 1]

<u>100</u>

[Fig. 2]

<u>200</u>

[Fig. 3]

[Fig. 4]

[Fig. 5]

REFERENCE SAMPLE

SAMPLE OF CURRENT UNIT

[Fig. 6]

[Fig. 7]

[Fig. 8]

[Fig. 9]

[Fig. 10]

[Fig. 11]

[Fig. 12]

| | |
|---|---|
| if( sh_slice_type != 1 \|\| sps_ibc_enabled_flag ) { | |
| if( treeType != DUAL_TREE_CHROMA && <br> ( ( !( cbWidth == 4 && cbHeight == 4 ) && <br> modeType != MODE_TYPE_INTRA ) \|\| <br> ( sps_ibc_enabled_flag && cbWidth <= 64 && cbHeight <= 64 ) ) ) | |
| **cu_skip_flag**[ x0 ][ y0 ] | ae(v) |
| if( cu_skip_flag[ x0 ][ y0 ] == 0 && sh_slice_type != I && <br> !( cbWidth == 4 && cbHeight == 4 ) && modeType == MODE_TYPE_ALL ) | |
| **pred_mode_flag** | ae(v) |
| ... | |
| if( CuPredMode[ chType ][ x0 ][ y0 ] == MODE_INTRA && sps_dimd_enabled_flag && <br> cu_skip_flag[ x0 ][ y0 ] == 0 && modeType != MODE_TYPE_INTER && <br> treeType != DUAL_TREE_CHROMA ) | |
| **cu_dimd_flag** | ae(v) |
| ... | |

[Fig. 13]

| | |
|---|---|
| if( sps_mip_enabled_flag && !cu_dimd_flag) | |
| **intra_mip_flag**[ x0 ][ y0 ] | ae(v) |
| if( intra_mip_flag[ x0 ][ y0 ] ) { | |
| **intra_mip_transposed_flag**[ x0 ][ y0 ] | ae(v) |
| **intra_mip_mode**[ x0 ][ y0 ] | ae(v) |
| } else { | |
| if( sps_mrl_enabled_flag && ( ( y0 % CtbSizeY ) > 0 ) && !cu_dimd_flag ) | |
| **intra_luma_ref_idx**[ x0 ][ y0 ] | ae(v) |
| if( sps_isp_enabled_flag && intra_luma_ref_idx[ x0 ][ y0 ] == 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag && !cu_dimd_flag ) | |
| **intra_subpartitions_mode_flag**[ x0 ][ y0 ] | ae(v) |
| if( intra_subpartitions_mode_flag[ x0 ][ y0 ] == 1 ) | |
| **intra_subpartitions_split_flag**[ x0 ][ y0 ] | ae(v) |
| if( !cu_dimd_flag) { | |
| if( intra_luma_ref_idx[ x0 ][ y0 ] == 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx[ x0 ][ y0 ] == 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| } | |

[Fig. 14]

[Fig. 15]

[Fig. 16]

| if( sh_slice_type != I \|\| sps_ibc_enabled_flag ) { | |
|---|---|
| if( treeType != DUAL_TREE_CHROMA && <br> ( ( !( cbWidth == 4 && cbHeight == 4 ) && <br> modeType != MODE_TYPE_INTRA ) \|\| <br> ( sps_ibc_enabled_flag && cbWidth <= 64 && cbHeight <= 64 ) ) ) | |
| **cu_skip_flag**[ x0 ][ y0 ] | ae(v) |
| if( cu_skip_flag[ x0 ][ y0 ] == 0 && sh_slice_type != I && <br> !( cbWidth == 4 && cbHeight == 4 ) && modeType == MODE_TYPE_ALL ) | |
| **pred_mode_flag** | ae(v) |
| ... | |
| if( CuPredMode[ chType ][ x0 ][ y0 ] == MODE_INTRA && sps_dimd_enabled_flag && <br> cu_skip_flag[ x0 ][ y0 ] == 0 && modeType != MODE_TYPE_INTER && <br> treeType != DUAL_TREE_CHROMA ) | |
| **cu_dimd_flag** | ae(v) |
| if(cu_dimd_flag) | |
| **cu_dimd_mode** | ae(v) |
| ... | |

[Fig. 17]

|  | Case 1<br>Similar direction<br>Similar weight | Case 2<br>Different direction<br>Different weight | Case 3<br>Similar direction<br>Different weight | Case 4<br>Different direction<br>Similar weight |
|---|---|---|---|---|
| ModeA | 56 | 18 | 3 | 45 |
| WeightA | 0.34 | 0.5 | 0.65 | 0.36 |
| ModeB | 58 | 31 | 5 | 21 |
| WeightB | 0.25 | 0.2 | 0.10 | 0.34 |
| ... | ... | ... | ... | ... |
| ModeX | - | - | - | - |
| WeightX | - | - | - | - |

[Fig. 18]

[Fig. 19]

[Fig. 20]

(a)

(b)

(c)

(d)

[Fig. 21]

(a)

(b)

(c)

(d)

[Fig. 22]

| | Intra prediction mode | Prediction method | Position of neighboring block | Coding mode |
|---|---|---|---|---|
| 1 | DIMD | multiple prediction | Left | MIP mode |
| 2 | Mode A | Uni prediction | Above | Intra directional mode |
| 3 | Mode A + X | Uni prediction | - | - |
| 4 | Mode A – Y | Uni prediction | - | - |
| 5 | DC | Uni prediction | - | - |

[Fig. 23]

(a)                                    (b)

[Fig. 24]

(a)                                    (b)

[Fig. 25]

Reference line 2
Reference line 1

2502

2501

(a)

2504

Reference line 2

2505

2503

Reference line 1

2502

(b)

[Fig. 26]

Reference line 2

Reference line 1

2601

(a)

2603 2604 2605

Padding

2607

2606

2601

2602

(b)

[Fig. 27]

(a)

(b)

[Fig. 28]

2801

[Fig. 29]

[Fig. 30]

[Fig. 31]

⋮

Reference line 3
Reference line 2
Reference line 1
Reference line 0

Reference line 3
Reference line 2
Reference line 1 (0)
Template

Template
Reference line 1 (0)
Reference line 2
Reference line 3

Reference line 0
Reference line 1
Reference line 2
Reference line 3

current block

current block

···

···

(a)

(b)

[Fig. 32]

Intra prediction

Reference line A → Prediction A

⋮

Reference line N → Prediction X

Weighted Prediction → reorde ring → selecti on → Prediction block

Additional Information (weight, ..)

index

[Fig. 33]

*rec(x,-1)*                                              *rec(W,-1)*

*rec(-1,y)*

*pred(x,y)*

*The current block*

*rec(-1,H)*

[Fig. 34]

Transform coefficient → LFNST → MTS → residual block

Change mode

Change mode

Intra prediction mode

[Fig. 35]

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | M |
|---|---|---|---|---|---|---|---|---|---|---|---|---|---|---|---|---|---|---|---|---|---|---|---|---|---|---|---|---|---|---|---|---|---|---|---|---|
| 0 (4x4) | 0 | 0 | 1 | 1 | 1 | 1 | 1 | 1 | 1 | 1 | 1 | 1 | 1 | 1 | 2 | 2 | 2 | 2 | 2 | 2 | 2 | 2 | 2 | 2 | 2 | 3 | 3 | 3 | 3 | 3 | 3 | 3 | 3 | 3 | 3 | 4 |
| 1 (4x8) | 5 | 5 | 6 | 6 | 6 | 6 | 6 | 6 | 6 | 6 | 6 | 6 | 6 | 6 | 7 | 7 | 7 | 7 | 7 | 7 | 7 | 7 | 7 | 7 | 7 | 8 | 8 | 8 | 8 | 8 | 8 | 8 | 8 | 8 | 8 | 9 |
| 2 (4x16) | 10 | 10 | 11 | 11 | 11 | 11 | 11 | 11 | 11 | 11 | 11 | 11 | 11 | 11 | 12 | 12 | 12 | 12 | 12 | 12 | 12 | 12 | 12 | 12 | 12 | 13 | 13 | 13 | 13 | 13 | 13 | 13 | 13 | 13 | 13 | 14 |
| 3 (4x32) | 15 | 15 | 16 | 16 | 16 | 16 | 16 | 16 | 16 | 16 | 16 | 16 | 16 | 16 | 17 | 17 | 17 | 17 | 17 | 17 | 17 | 17 | 17 | 17 | 17 | 18 | 18 | 18 | 18 | 18 | 18 | 18 | 18 | 18 | 18 | 19 |
| 4 (8x4) | 20 | 20 | 21 | 21 | 21 | 21 | 21 | 21 | 21 | 21 | 21 | 21 | 21 | 21 | 22 | 22 | 22 | 22 | 22 | 22 | 22 | 22 | 22 | 22 | 22 | 23 | 23 | 23 | 23 | 23 | 23 | 23 | 23 | 23 | 23 | 24 |
| 5 (8x8) | 25 | 25 | 26 | 26 | 26 | 26 | 26 | 26 | 26 | 26 | 26 | 26 | 26 | 26 | 27 | 27 | 27 | 27 | 27 | 27 | 27 | 27 | 27 | 27 | 27 | 28 | 28 | 28 | 28 | 28 | 28 | 28 | 28 | 28 | 28 | 29 |
| 6 (8x16) | 30 | 30 | 31 | 31 | 31 | 31 | 31 | 31 | 31 | 31 | 31 | 31 | 31 | 31 | 32 | 32 | 32 | 32 | 32 | 32 | 32 | 32 | 32 | 32 | 32 | 33 | 33 | 33 | 33 | 33 | 33 | 33 | 33 | 33 | 33 | 34 |
| 7 (8x32) | 35 | 35 | 36 | 36 | 36 | 36 | 36 | 36 | 36 | 36 | 36 | 36 | 36 | 36 | 37 | 37 | 37 | 37 | 37 | 37 | 37 | 37 | 37 | 37 | 37 | 38 | 38 | 38 | 38 | 38 | 38 | 38 | 38 | 38 | 38 | 39 |
| 8 (16x4) | 40 | 40 | 41 | 41 | 41 | 41 | 41 | 41 | 41 | 41 | 41 | 41 | 41 | 41 | 42 | 42 | 42 | 42 | 42 | 42 | 42 | 42 | 42 | 42 | 42 | 43 | 43 | 43 | 43 | 43 | 43 | 43 | 43 | 43 | 43 | 44 |
| 9 (16x8) | 45 | 45 | 46 | 46 | 46 | 46 | 46 | 46 | 46 | 46 | 46 | 46 | 46 | 46 | 47 | 47 | 47 | 47 | 47 | 47 | 47 | 47 | 47 | 47 | 47 | 48 | 48 | 48 | 48 | 48 | 48 | 48 | 48 | 48 | 48 | 49 |
| 10 (16x16) | 50 | 50 | 51 | 51 | 51 | 51 | 51 | 51 | 51 | 51 | 51 | 51 | 51 | 51 | 52 | 52 | 52 | 52 | 52 | 52 | 52 | 52 | 52 | 52 | 52 | 53 | 53 | 53 | 53 | 53 | 53 | 53 | 53 | 53 | 53 | 54 |
| 11 (16x32) | 55 | 55 | 56 | 56 | 56 | 56 | 56 | 56 | 56 | 56 | 56 | 56 | 56 | 56 | 57 | 57 | 57 | 57 | 57 | 57 | 57 | 57 | 57 | 57 | 57 | 58 | 58 | 58 | 58 | 58 | 58 | 58 | 58 | 58 | 58 | 59 |
| 12 (32x4) | 60 | 60 | 61 | 61 | 61 | 61 | 61 | 61 | 61 | 61 | 61 | 61 | 61 | 61 | 62 | 62 | 62 | 62 | 62 | 62 | 62 | 62 | 62 | 62 | 62 | 63 | 63 | 63 | 63 | 63 | 63 | 63 | 63 | 63 | 63 | 64 |
| 13 (32x8) | 65 | 65 | 66 | 66 | 66 | 66 | 66 | 66 | 66 | 66 | 66 | 66 | 66 | 66 | 67 | 67 | 67 | 67 | 67 | 67 | 67 | 67 | 67 | 67 | 67 | 68 | 68 | 68 | 68 | 68 | 68 | 68 | 68 | 68 | 68 | 69 |
| 14 (32x16) | 70 | 70 | 71 | 71 | 71 | 71 | 71 | 71 | 71 | 71 | 71 | 71 | 71 | 71 | 72 | 72 | 72 | 72 | 72 | 72 | 72 | 72 | 72 | 72 | 72 | 73 | 73 | 73 | 73 | 73 | 73 | 73 | 73 | 73 | 73 | 74 |
| 15 (32x32) | 75 | 75 | 76 | 76 | 76 | 76 | 76 | 76 | 76 | 76 | 76 | 76 | 76 | 76 | 77 | 77 | 77 | 77 | 77 | 77 | 77 | 77 | 77 | 77 | 77 | 78 | 78 | 78 | 78 | 78 | 78 | 78 | 78 | 78 | 78 | 79 |

[Fig. 36]

| | 0 | 1 | 2 | 3 |
|---|---|---|---|---|
| 0 | 17 | 18 | 23 | 24 |
| 1 | 3 | 7 | 18 | 22 |
| 2 | 2 | 17 | 18 | 22 |
| 3 | 3 | 15 | 17 | 18 |
| 4 | 3 | 12 | 18 | 19 |
| 5 | 12 | 18 | 19 | 23 |
| 6 | 2 | 12 | 17 | 18 |
| 7 | 2 | 17 | 18 | 22 |
| 8 | 2 | 11 | 17 | 18 |
| 9 | 12 | 18 | 19 | 23 |
| 10 | 12 | 13 | 16 | 24 |
| 11 | 2 | 11 | 16 | 23 |
| 12 | 2 | 13 | 17 | 22 |
| 13 | 2 | 11 | 17 | 21 |
| 14 | 13 | 16 | 19 | 22 |
| 15 | 7 | 12 | 13 | 18 |
| 16 | 1 | 11 | 12 | 16 |
| 17 | 3 | 13 | 17 | 22 |
| 18 | 1 | 6 | 12 | 22 |
| 19 | 12 | 13 | 15 | 16 |

| | 0 | 1 | 2 | 3 |
|---|---|---|---|---|
| 20 | 18 | 19 | 23 | 24 |
| 21 | 2 | 17 | 18 | 24 |
| 22 | 3 | 4 | 17 | 22 |
| 23 | 12 | 18 | 19 | 23 |
| 24 | 12 | 18 | 19 | 23 |
| 25 | 6 | 12 | 18 | 24 |
| 26 | 2 | 6 | 12 | 21 |
| 27 | 1 | 11 | 17 | 22 |
| 28 | 3 | 11 | 16 | 17 |
| 29 | 8 | 12 | 19 | 23 |
| 30 | 7 | 13 | 16 | 23 |
| 31 | 1 | 6 | 11 | 12 |
| 32 | 1 | 11 | 17 | 21 |
| 33 | 6 | 11 | 17 | 21 |
| 34 | 8 | 11 | 14 | 17 |
| 35 | 6 | 11 | 12 | 21 |
| 36 | 1 | 6 | 11 | 12 |
| 37 | 2 | 6 | 11 | 12 |
| 38 | 1 | 6 | 11 | 21 |
| 39 | 7 | 11 | 12 | 16 |

| | 0 | 1 | 2 | 3 |
|---|---|---|---|---|
| 40 | 8 | 12 | 19 | 24 |
| 41 | 1 | 13 | 18 | 22 |
| 42 | 2 | 6 | 17 | 21 |
| 43 | 11 | 12 | 16 | 19 |
| 44 | 8 | 12 | 17 | 24 |
| 45 | 6 | 12 | 19 | 21 |
| 46 | 6 | 12 | 13 | 21 |
| 47 | 2 | 16 | 17 | 21 |
| 48 | 6 | 17 | 19 | 23 |
| 49 | 6 | 12 | 14 | 17 |
| 50 | 6 | 7 | 11 | 21 |
| 51 | 1 | 11 | 12 | 16 |
| 52 | 1 | 6 | 11 | 12 |
| 53 | 6 | 11 | 12 | 21 |
| 54 | 7 | 8 | 9 | 11 |
| 55 | 6 | 7 | 11 | 12 |
| 56 | 6 | 7 | 11 | 12 |
| 57 | 1 | 11 | 12 | 16 |
| 58 | 6 | 11 | 17 | 21 |
| 59 | 6 | 7 | 11 | 12 |

| | 0 | 1 | 2 | 3 |
|---|---|---|---|---|
| 60 | 12 | 14 | 18 | 21 |
| 61 | 1 | 11 | 16 | 22 |
| 62 | 1 | 11 | 16 | 22 |
| 63 | 7 | 13 | 15 | 16 |
| 64 | 1 | 8 | 12 | 19 |
| 65 | 6 | 7 | 9 | 12 |
| 66 | 2 | 6 | 12 | 13 |
| 67 | 1 | 12 | 16 | 21 |
| 68 | 7 | 11 | 16 | 19 |
| 69 | 7 | 8 | 11 | 12 |
| 70 | 6 | 7 | 11 | 12 |
| 71 | 6 | 7 | 11 | 12 |
| 72 | 1 | 6 | 11 | 12 |
| 73 | 6 | 7 | 11 | 16 |
| 74 | 6 | 7 | 11 | 12 |
| 75 | 6 | 7 | 11 | 12 |
| 76 | 6 | 11 | 12 | 21 |
| 77 | 1 | 6 | 11 | 12 |
| 78 | 6 | 7 | 11 | 12 |
| 79 | 6 | 7 | 11 | 12 |

[Fig. 37]

| | 0 | 1 | 2 | 3 | 4 | 5 | 6 | 7 | 8 | 9 | 10 | 11 | 12 |
|---|---|---|---|---|---|---|---|---|---|---|---|---|---|
| **0** | DCT8 | DCT8 | DCT8 | DCT8 | DCT8 | **DST7** | **DST7** | **DST7** | **DST7** | **DST7** | DCT5 | DCT5 | DCT5 |
| **1** | DCT8 | DST7 | DCT5 | DST4 | DST1 | **DCT8** | **DST7** | **DCT5** | **DST4** | **DST1** | DCT8 | DST7 | DCT5 |

| | 13 | 14 | 15 | 16 | 17 | 18 | 19 | 20 | 21 | 22 | 23 | 24 |
|---|---|---|---|---|---|---|---|---|---|---|---|---|
| **0** | DCT5 | DCT5 | **DST4** | **DST4** | **DST4** | **DST4** | **DST4** | DST1 | DST1 | DST1 | DST1 | DST1 |
| **1** | DST4 | DST1 | **DCT8** | **DST7** | **DCT5** | **DST4** | **DST1** | DCT8 | DST7 | DCT5 | DST4 | DST1 |

[Fig. 38]

| | | Height | | | |
|---|---|---|---|---|---|
| | | 4 | 8 | 12 | 16 |
| Width | 4 | 8 | 8 | 6 | 4 |
| | 8 | 8 | 6 | 4 | 2 |
| | 12 | 6 | 4 | 2 | 0 |
| | 16 | 4 | 2 | 0 | -1 |

(a)

| | | Height | | |
|---|---|---|---|---|
| | | 4 | 8 | 16 |
| Width | 4 | 8 | 6 | 4 |
| | 8 | 8 | 8 | 6 |
| | 16 | 4 | 2 | -1 |

(b)

[Fig. 39]

Intra prediction mode

planar mode ? — no →

yes ↓

planar vertical mode ? — no → planar horizontal mode ? — no →

yes ↓ (planar vertical) yes ↓ (planar horizontal)

**Horizontal mode** is used to derive a transform kernel.

**Vertical mode** is used to derive a transform kernel.

**Planar mode** is used to derive a transform kernel.

**The inputted intra prediction mode** is used to derive a transform kernel.

[Fig. 40]

[Fig. 41]

(a)　　　　　　(b)　　　　　　(c)　　　　　　(d)

[Fig. 42]

(a)　　　　　　　　(b)　　　　　　　　(c)

[Fig. 43]

[Fig. 44]

| Transform Type | Basis function $T_i(j)$, $i,j=0, 1,..., N-1$ |
|---|---|
| DCT-II | $T_i(j) = \omega_0 \cdot \sqrt{\dfrac{2}{N}} \cdot \cos\left(\dfrac{\pi \cdot i \cdot (2j+1)}{2N}\right)$<br><br>where $\omega_0 = \begin{cases} \sqrt{\dfrac{2}{N}} & i = 0 \\ 1 & i \neq 0 \end{cases}$ |
| DCT-V | $T_i(j) = \omega_0 \cdot \omega_1 \cdot \sqrt{\dfrac{2}{2N-1}} \cdot \cos\left(\dfrac{2\pi \cdot i \cdot j}{2N-1}\right),$<br><br>where $\omega_0 = \begin{cases} \sqrt{\dfrac{2}{N}} & i = 0 \\ 1 & i \neq 0 \end{cases}, \omega_1 = \begin{cases} \sqrt{\dfrac{2}{N}} & j = 0 \\ 1 & j \neq 0 \end{cases}$ |
| DCT-VIII | $T_i(j) = \sqrt{\dfrac{4}{2N+1}} \cdot \cos\left(\dfrac{\pi \cdot (2i+1) \cdot (2j+1)}{4N+2}\right)$ |
| DST-I | $T_i(j) = \sqrt{\dfrac{2}{N+1}} \cdot \sin\left(\dfrac{\pi \cdot (i+1) \cdot (j+1)}{N+1}\right)$ |
| DST-VII | $T_i(j) = \sqrt{\dfrac{4}{2N+1}} \cdot \sin\left(\dfrac{\pi \cdot (2i+1) \cdot (j+1)}{2N+1}\right)$ |
| DST-IV | $T_i(j) = \dfrac{2}{\sqrt{2N}} \cdot \sin\left(\dfrac{\pi \cdot (2i+1) \cdot (2j+1)}{4N}\right)$ |
| IDTR | IDENTITY TRANSFORMATION |

[Fig. 45]

| seq_parameter_set_rbsp( ) { | Descriptor |
|---|---|
| sps_seq_parameter_set_id | u(4) |
| sps_video_parameter_set_id | u(4) |
| sps_max_sublayers_minus1 | u(3) |

...

| sps_isp_enabled_flag | u(1) |
|---|---|
| sps_directional_planar_enabled_flag | u(1) |

[Fig. 46]

| seq_parameter_set_rbsp( ) { | Descriptor |
|---|---|
| sps_seq_parameter_set_id | u(4) |
| sps_video_parameter_set_id | u(4) |
| sps_max_sublayers_minus1 | u(3) |

...

| sps_isp_enabled_flag | u(1) |
|---|---|
| sps_intra_fusion_enabled_flag | u(1) |

[Fig. 47]

| general_constraints_info( ) { | Descriptor |
|---|---|
| gci_present_flag | u(1) |
| if( gci_present_flag ) { | |
| /* general */ | |
| gci_intra_only_constraint_flag | u(1) |
| gci_all_layers_independent_constraint_flag | u(1) |
| gci_one_au_only_constraint_flag | u(1) |
| /* picture format */ | |
| gci_sixteen_minus_max_bitdepth_constraint_idc | u(4) |
| ... | |
| gci_no_cclm_constraint_flag | u(1) |
| gci_no_directional_planar_constraint_flag | u(1) |
| gci_no_intra_fusion_constraint_flag | u(1) |
| ... | |

[Fig. 48]

|  | Intra prediction mode 1 | Intra prediction mode 2 |
|---|---|---|
| 1 | A | B |
| 2 | A | C |
| 3 | D | E |
| 4 | F | N/A |
| 5 | G | N/A |

(a)

|  | Intra prediction mode 1 | Intra prediction mode 2 |
|---|---|---|
| 1 | A | N/A |
| 2 | B | N/A |
| 3 | C | D |
| 4 | E | F |
| 5 | G | H |

(b)

[Fig. 49]

[Fig. 50]

| intra pred. mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|
| transform set index | 2 | 2 | 2 | 2 | 2 | 2 | 2 | 2 | 2 | 2 | 2 | 2 | 2 | 2 |
| intra pred. mode | 0 | 1 | 2 | 3 | 4 | 5 | 6 | 7 | 8 | 9 | 10 | 11 | 12 | 13 |
| transform set index | 0 | 1 | 2 | 3 | 4 | 5 | 6 | 7 | 8 | 9 | 10 | 11 | 12 | 13 |
| intra pred. mode | 14 | 15 | 16 | 17 | 18 | 19 | 20 | 21 | 22 | 23 | 24 | 25 | 26 | 27 |
| transform set index | 14 | 15 | 16 | 17 | 18 | 19 | 20 | 21 | 22 | 23 | 24 | 25 | 26 | 27 |
| intra pred. mode | 28 | 29 | 30 | 31 | 32 | 33 | 34 | 35 | 36 | 37 | 38 | 39 | 40 | 41 |
| transform set index | 28 | 29 | 30 | 31 | 32 | 33 | 34 | 33 | 32 | 31 | 30 | 29 | 28 | 27 |
| intra pred. mode | 42 | 43 | 44 | 45 | 46 | 47 | 48 | 49 | 50 | 51 | 52 | 53 | 54 | 55 |
| transform set index | 26 | 25 | 24 | 23 | 22 | 21 | 20 | 19 | 18 | 17 | 16 | 15 | 14 | 13 |
| intra pred. mode | 56 | 57 | 58 | 59 | 60 | 61 | 62 | 63 | 64 | 65 | 66 | 67 | 68 | 69 |
| transform set index | 12 | 11 | 10 | 9 | 8 | 7 | 6 | 5 | 4 | 3 | 2 | 2 | 2 | 2 |
| intra pred. mode | 70 | 71 | 72 | 73 | 74 | 75 | 76 | 77 | 78 | 79 | 80 | | | |
| transform set index | 2 | 2 | 2 | 2 | 2 | 2 | 2 | 2 | 2 | 2 | 2 | | | |

[Fig. 51]

| Determine prediction mode of current block | S5110 |

| Generate prediction block of current block on basis of prediction mode | S5120 |

| Generate residual block of current block on basis of transform matrix set determined on basis of prediction mode | S5130 |

| Reconstruct current block on basis of prediction block and residual block | S5140 |

## INTERNATIONAL SEARCH REPORT

| International application No. |
|---|
| **PCT/KR2023/012220** |

### A. CLASSIFICATION OF SUBJECT MATTER

**H04N 19/593**(2014.01)i; **H04N 19/11**(2014.01)i; **H04N 19/157**(2014.01)i; **H04N 19/176**(2014.01)i; **H04N 19/70**(2014.01)i; **H04N 19/105**(2014.01)i; **H04N 19/159**(2014.01)i; **H04N 19/132**(2014.01)i; **H04N 19/119**(2014.01)i; **H04N 19/96**(2014.01)i

According to International Patent Classification (IPC) or to both national classification and IPC

### B. FIELDS SEARCHED

Minimum documentation searched (classification system followed by classification symbols)

H04N 19/593(2014.01); H04N 19/11(2014.01); H04N 19/119(2014.01); H04N 19/12(2014.01); H04N 19/124(2014.01); H04N 19/176(2014.01); H04N 19/60(2014.01); H04N 19/61(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비트스트림(bitstream), 신택스 요소(syntax element), 예측 모드(prediction mode), 예측 블록(prediction block), 잔차 블록(residual block), 변환 매트릭스(transformation matrix)

### C. DOCUMENTS CONSIDERED TO BE RELEVANT

| Category* | Citation of document, with indication, where appropriate, of the relevant passages | Relevant to claim No. |
|---|---|---|
| X | KR 10-2408742 B1 (LG ELECTRONICS INC.) 15 June 2022 (2022-06-15)<br>See paragraphs [0009], [0050], [0069], [0083], [0104], [0116], [0217] and [0232]. | 1-20 |
| A | KR 10-2022-0006055 A (BEIJING BYTEDANCE NETWORK TECHNOLOGY CO., LTD. et al.) 14 January 2022 (2022-01-14)<br>See paragraphs [0111]-[0113]. | 1-20 |
| A | KR 10-2021-0031754 A (LG ELECTRONICS INC.) 22 March 2021 (2021-03-22)<br>See paragraphs [0295]-[0296]. | 1-20 |
| A | KR 10-2021-0079379 A (LG ELECTRONICS INC.) 29 June 2021 (2021-06-29)<br>See paragraphs [0434]-[0438]. | 1-20 |
| A | KR 10-2418700 B1 (LG ELECTRONICS INC.) 08 July 2022 (2022-07-08)<br>See paragraphs [0132]-[0136]. | 1-20 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2023** | **05 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/012220**

| Patent document cited in search report | | | Publication date (day/month/year) | Patent family member(s) | | | Publication date (day/month/year) |
|---|---|---|---|---|---|---|---|
| KR | 10-2408742 | B1 | 15 June 2022 | AU | 2021-247645 | A1 | 18 November 2021 |
| | | | | EP | 3937501 | A1 | 12 January 2022 |
| | | | | EP | 3937501 | A4 | 08 June 2022 |
| | | | | JP | 2022-527774 | A | 06 June 2022 |
| | | | | KR | 10-2021-0114062 | A | 17 September 2021 |
| | | | | KR | 10-2022-0084194 | A | 21 June 2022 |
| | | | | US | 11330261 | B2 | 10 May 2022 |
| | | | | US | 2022-0053189 | A1 | 17 February 2022 |
| | | | | US | 2022-0248018 | A1 | 04 August 2022 |
| | | | | WO | 2020-197274 | A1 | 01 October 2020 |
| KR | 10-2022-0006055 | A | 14 January 2022 | CN | 113812155 | A | 17 December 2021 |
| | | | | EP | 3949403 | A1 | 09 February 2022 |
| | | | | EP | 3949403 | A4 | 22 June 2022 |
| | | | | JP | 2022-531435 | A | 06 July 2022 |
| | | | | US | 11509904 | B2 | 22 November 2022 |
| | | | | US | 2022-0038706 | A1 | 03 February 2022 |
| | | | | US | 2023-0096273 | A1 | 30 March 2023 |
| | | | | WO | 2020-228663 | A1 | 19 November 2020 |
| KR | 10-2021-0031754 | A | 22 March 2021 | CN | 112753220 | A | 04 May 2021 |
| | | | | EP | 3836543 | A1 | 16 June 2021 |
| | | | | EP | 3836543 | A4 | 16 June 2021 |
| | | | | KR | 10-2023-0074290 | A | 26 May 2023 |
| | | | | KR | 10-2534160 | B1 | 26 May 2023 |
| | | | | US | 2021-0211727 | A1 | 08 July 2021 |
| | | | | WO | 2020-046091 | A1 | 05 March 2020 |
| KR | 10-2021-0079379 | A | 29 June 2021 | CN | 113302941 | A | 24 August 2021 |
| | | | | CN | 113302941 | B | 25 August 2023 |
| | | | | US | 11570475 | B2 | 31 January 2023 |
| | | | | US | 2022-0053217 | A1 | 17 February 2022 |
| | | | | US | 2023-0053262 | A1 | 16 February 2023 |
| | | | | WO | 2020-145720 | A1 | 16 July 2020 |
| KR | 10-2418700 | B1 | 08 July 2022 | KR | 10-2020-0072553 | A | 22 June 2020 |
| | | | | US | 2020-0374516 | A1 | 26 November 2020 |
| | | | | WO | 2019-112071 | A1 | 13 June 2019 |

Form PCT/ISA/210 (patent family annex) (July 2022)